(19) Europäisches Patentamt / European Patent Office / Office européen des brevets

(11) **EP 3 551 948 B1**

(12) **EUROPÄISCHE PATENTSCHRIFT**

(45) Veröffentlichungstag und Bekanntmachung des Hinweises auf die Patenterteilung:
**18.11.2020 Patentblatt 2020/47**

(21) Anmeldenummer: **17829608.3**

(22) Anmeldetag: **06.12.2017**

(51) Int Cl.:
*F25B 41/06* (2006.01)    *F16K 11/00* (2006.01)

(86) Internationale Anmeldenummer:
**PCT/EP2017/081703**

(87) Internationale Veröffentlichungsnummer:
**WO 2018/104391 (14.06.2018 Gazette 2018/24)**

(54) **EXPANSIONSVENTIL**

EXPANSION VALVE

VANNE D'EXPANSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2016 DE 102016224283**
**31.03.2017 DE 102017205562**

(43) Veröffentlichungstag der Anmeldung:
**16.10.2019 Patentblatt 2019/42**

(73) Patentinhaber:
• **Hahn-Schickard-Gesellschaft für angewandte Forschung e.V.**
**78052 Villingen-Schwenningen (DE)**
• **Institut Für Luft- Und Kältetechnik Gemeinnützige GmbH**
**01309 Dresden (DE)**
• **Liebherr-Hausgeräte Ochsenhausen GmbH**
**88416 Ochsenhausen (DE)**

(72) Erfinder:
• **SPIETH, Sven**
**78083 Dauchingen (DE)**
• **STORZ, Matthias**
**78647 Trossingen (DE)**
• **GROSSMANN, Björn**
**01189 Dresden (DE)**
• **TIPPMANN, Sandra**
**01219 Dresden (DE)**
• **GINDELE, Thomas**
**88299 Leutkirch (DE)**

(74) Vertreter: **Stöckeler, Ferdinand**
**Schoppe, Zimmermann, Stöckeler Zinkler, Schenk & Partner mbB Patentanwälte**
**Radlkoferstrasse 2**
**81373 München (DE)**

(56) Entgegenhaltungen:
**EP-A2- 1 975 480    DE-A1-102010 042 265**

EP 3 551 948 B1

**Beschreibung**

Die Erfindung bezieht sich auf Expansionsventile zum Vermindern eines Drucks eines durch das Expansionsventil entlang eines Fluidströmungspfads hindurchfließenden Fluids.

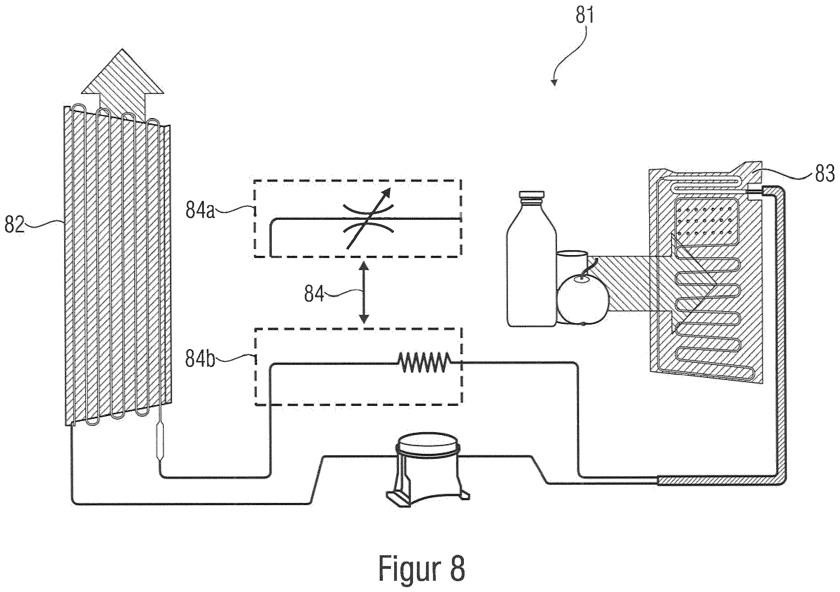

Expansionsventile können beispielsweise in Kältekreisläufen eingesetzt werden. Figur 8 zeigt einen solchen Kältekreislauf 81, wie er im Stand der Technik bekannt ist. Der Kältekreislauf 81 weist einen Verflüssiger 82 und einen Verdampfer 83 auf. Zwischen dem Verflüssiger 82 und dem Verdampfer 83 befindet sich eine lokale Verengung 84a, 84b des Strömungsquerschnitts, die zu einer Verminderung des Fluiddrucks führt und eine Volumenzunahme bzw. Expansion des durchströmenden Fluids bewirkt. Diese lokale Verengung 84a, 84b wird funktionell als Drossel- oder Expansionsventil bezeichnet.

Im einfachsten Fall wirkt ein Stück Rohr mit sehr kleinem Innendurchmesser als ungeregeltes, nicht verstellbares Expansionsorgan, das dann typischerweise als Drosselkapillare 84b bezeichnet wird. Kostengünstige Drosselkapillaren werden bevorzugt bei Anlagen mit kleiner Kälteleistung, wie Haushalts-Kühl-Gefrierkombinationen, eingesetzt.

Aufwendigere, regelbare Expansionsventile 84a sind stetig veränderbare Ventile, die eine Einstellung des durchströmenden Fluids erlauben. Diese werden bevorzugt bei Anlagen mit größerer Kälteleistung eingesetzt.

Eine grundsätzliche Problematik bei Expansionsventilen für kleine Kälteleistungen ist der kontinuierlich zu dosierende kleine Massenstrom an Kältemittel, der außerordentliche Anforderungen an die Präzision eines stetig verstellbaren Ventils stellt.

Oftmals behilft man sich deshalb dadurch, dass kein stetig verstellbares Ventil sondern ein Schaltventil eingesetzt wird, das dann zeitweise komplett auf bzw. zu ist, d.h. im Sinne einer Pulsweitenmodulation betrieben wird. Dieses Vorgehen wird aber energetisch als auch im Hinblick auf das Systemverhalten als nicht so günstig bewertet.

Ein Expansionsventil für kleine Kälteleistungen kann auch als Mikroexpansionsventil bezeichnet werden.

In der DE 10 2011 004 109 A1 wird beispielsweise ein Expansionsventil mit einer stufenlos regelbaren Lochblende beschrieben. Der Durchfluss durch die Blende wird mittels einer exzentrischen Abdeckscheibe geregelt, die den Öffnungsquerschnitt der Blende stufenlos variieren kann. Hierbei werden jedoch sehr hohe Anforderungen an die Präzision der Blende sowie an die Präzision des stufenlosen Antriebs gestellt, was zu erhöhten Produktionskosten führt.

Die DE 10 2010 042 265 A1 beschreibt ein Mehrwege-Ventil zum Schalten zwischen zwei Kanälen. Auch bei diesem Mehrwege-Ventil werden starre Lochblenden beziehungsweise verstellbare Spaltblenden als Drosseln verwendet, weshalb diese Form von Ventilen auch als Blendenventile bezeichnet werden. Ferner offenbart die DE 10 2010 042265 A1 ein Ventil zum Vermindern eines Drucks eines durch das Expansionsventil entlang eines Fluidströmungspfads hindurchfließenden Fluids, wobei das Ventil aufweist:wenigstens einen Fluideinlass und wenigstens einen Fluidauslass, ein erstes Ventilelement mit zumindest einer ersten Kanalstruktur, ein zweites Ventilelement mit zumindest einer zweiten Kanalstruktur und einer dritten Kanalstruktur, wobei das erste Ventilelement und das zweite Ventilelement relativ zueinander bewegbar sind,wobei in einer ersten Stellung der Ventilelemente die erste Kanalstruktur und die zweite Kanalstruktur zueinander ausgerichtet sind und einen ersten Fluidströmungspfad mit einem ersten Strömungswiderstand zwischen dem Fluideinlass und dem Fluidauslass bilden, undwobei in einer zweiten Stellung der Ventilelemente die erste Kanalstruktur und die dritte Kanalstruktur zueinander ausgerichtet sind und einen zweiten Fluidströmungspfad mit einem zweiten von dem ersten Strömungswiderstand verschiedenen Strömungswiderstand zwischen dem Fluideinlass und dem Fluidauslass bilden.

Als eine Alternative zu den vorgenannten Lochblenden sind Kanäle bekannt, durch die das Fluid strömt. Bei der Lochblende kommt die Verlangsamung und somit die Expansion des Fluids hauptsächlich durch an der Blendenkante verursachte Wirbelströme zustande. Bei Kanälen hingegen entstehen beim Durchströmen des Fluids zusätzlich Reibungsverluste entlang der Wand der Kanäle, da die Kanäle im Vergleich zur Blende eine wesentlich längere Erstreckung aufweisen, sodass sich das Fluid über die gesamte Länge des Kanals ausbreiten kann und dabei aufgrund der Reibungsverluste verlangsamt wird.

Ein Expansionsventil mit Kanälen wird beispielsweise in der DE 31 08 051 A1 vorgeschlagen. Hier wird ein in diskreten Schaltstufen schaltbares Expansionsventil beschrieben. Es werden mehrere Scheiben übereinander gelegt, wobei sich zwischen den Scheiben radial verlaufende Kanäle ausbilden, durch die das Fluid strömen kann. In der Mitte der Scheiben ist ein Kolben angeordnet, der in axialer Richtung beweglich ist, um einen Durchfluss des Fluids durch die einzelnen Kanäle zu ermöglichen. Durch die in axialer Richtung aufeinander geschichteten einzelnen Scheiben in Kombination mit dem in axialer Richtung bewegbaren Kolben weist dieses Expansionsventil einen komplizierten Aufbau sowie eine große axiale Bauhöhe auf. Für Geräte mit kleinen Kälteleistungen, bei denen in der Regel nur ein sehr geringer Bauraum zur Verfügung steht, ist dieses Expansionsventil daher weniger gut geeignet.

Nun kann es vorkommen, dass in dem durch das Expansionsventil hindurch strömende Fluid Partikel enthalten sind. Diese Partikel können das Expansionsventil beziehungsweise einzelne Kanäle des Expansionsventils verstopfen, was wiederum zu einem (Teil-)Ausfall des Expansionsventils führen kann.

Die EP 3 124 837 A1 schlägt deshalb vor, an einem Ventilkörper eine umlaufende Nut mit mehreren Abschirmteilen in Form von Vorsprüngen vorzusehen. Die Herstellung der vielen einzelnen Vorsprünge ist jedoch aufwändig.

Abgesehen davon wurde in der Druckschrift selbst bereits erkannt, dass bestimmte Verschmutzungen, wie zum Beispiel Haare, nicht ausreichend gut von diesen Abschirmteilen zurückgehalten werden können. Es ist eine Aufgabe der vorliegenden Erfindung, Expansionsventile hinsichtlich der oben genannten Problematiken zu verbessern.

Diese Aufgabe wird erfindungsgemäß durch ein Expansionsventil mit den Merkmalen von Anspruch 1 gelöst.

Das erfindungsgemäße Expansionsventil ist ausgebildet, um einen Druck eines durch das Expansionsventil entlang eines Fluidströmungspfads hindurchfließenden Fluids zu vermindern. Das Expansionsventil weist hierfür, unter anderem, wenigstens einen Fluideinlass, durch den das Fluid in das Expansionsventil einströmen kann, und wenigstens einen Fluidauslass, durch den das Fluid aus dem Expansionsventil herausströmen kann, auf. Das Expansionsventil weist außerdem ein erstes Ventilelement mit zumindest einer ersten Kanalstruktur auf. Ferner weist das Expansionsventil ein zweites Ventilelement mit zumindest einer zweiten Kanalstruktur und einer dritten Kanalstruktur auf. Erfindungsgemäß sind das erste Ventilelement und das zweite Ventilelement relativ zueinander bewegbar, wobei in einer ersten Stellung der Ventilelemente die erste Kanalstruktur und die zweite Kanalstruktur zueinander ausgerichtet sind und einen ersten Fluidströmungspfad mit einem ersten Strömungswiderstand zwischen dem Fluideinlass und dem Fluidauslass bilden. In einer zweiten Stellung der Ventilelemente sind die erste Kanalstruktur und die dritte Kanalstruktur zueinander ausgerichtet und bilden einen zweiten Fluidströmungspfad mit einem zweiten von dem ersten Strömungswiderstand verschiedenen Strömungswiderstand zwischen dem Fluideinlass und dem Fluidauslass.

Mit dem erfindungsgemäßen Expansionsventil können also mindestens zwei unterschiedliche Schaltstellungen eingenommen werden. Je nach Schaltstellung ergibt sich hierbei ein unterschiedlicher Fluidströmungspfad. Die Fluidströmungspfade weisen unterschiedliche Strömungswiderstände auf. Ein Strömungswiderstand kann sich beispielsweise aus einer Länge der durchströmten Kanalstruktur, dem nicht notwendigerweise entlang der Kanallänge einheitlichen Querschnitt der durchströmten Kanalstruktur, einer Änderung des durchströmten Querschnitts oder des Kanalverlaufs, einer geometrischen Querschnittsform, einer Rauigkeit der Oberfläche der Wandungen der durchströmten Kanalstruktur, oder aus einer Kombination dieser Parameter ergeben. Die unterschiedlichen Strömungswiderstände drosseln den Durchfluss des Fluids unterschiedlich stark. Die Drosselwirkung kann mittels einer Variation der vorgenannten Parameter eingestellt werden. Das erfindungsgemäße Expansionsventil kann in einer Schaltstellung eine vollständige Drosselung bewirken, sodass der Durchfluss des Fluids vom Fluideinlass zum Fluidauslass nahezu vollständig blockiert ist. Das erfindungsgemäße Expansionsventil kann in einer anderen Schaltstellung beispielsweise keine signifikante Drosselung aufweisen, sodass das Fluid nahezu ungehindert vom Fluideinlass zum Fluidauslass strömen kann. Das Expansionsventil kann jede beliebige Drosselstufe, d.h. zwischen vollständiger Blockierung und vollständiger Durchflussermöglichung, bereitstellen. Dies ist, wie zuvor erwähnt, mittels einer Variation der Kanalstruktur-Parameter möglich. Wenn das Fluid das erfindungsgemäße Expansionsventil durchströmt, kommt es neben der Drosselung der Durchflussmenge zum Druckabfall des Fluiddrucks, d.h. das Fluid entspannt sich. Das Fluid kann dabei zumindest teilweise verdampfen, wobei gleichzeitig die Temperatur des Fluids sinken kann. Der Betrag des Druckabfalls wird, ebenso wie der Betrag der Drosselung der Durchflussmenge, durch die Drosselstufen, d.h. durch den Strömungswiderstand, der einzelnen Kanalstrukturen bestimmt. Die Erfindung schafft somit die Integration unterschiedlicher Flusswiderstände mitsamt eines schaltbaren Verteilers innerhalb eines einzigen Expansionsventils. Dies kann den benötigten Bauraum gegenüber Verteilerschaltungen mit separaten Drosseln bzw. Kapillaren erheblich reduzieren. Außerdem werden im Vergleich zu bekannten stufenlos einstellbaren Lochblenden wesentlich geringere Anforderungen an die benötigte Präzision des Antriebs gestellt, was wiederum die Herstellungskosten erheblich reduziert.

Vorstellbare Ausführungsformen sind in den abhängigen Ansprüchen genannt.

Ausführungsbeispiele der Erfindung sind in der Zeichnung dargestellt und werden nachstehend erläutert. Es zeigen:

Fig. 1A      eine erste Ausführungsform eines erfindungsgemäßen Expansionsventils in einer Explosionsdarstellung und in einer ersten Schaltstellung,

Fig. 1B      das Expansionsventil der ersten Ausführungsform in einem zusammengesetzten Zustand und einer ersten Schaltstellung,

Fig. 1C      die erste Ausführungsform des erfindungsgemäßen Expansionsventils in einer Explosionsdarstellung und in einer zweiten Schaltstellung,

Fig. 1D      das Expansionsventil der ersten Ausführungsform in einem zusammengesetzten Zustand und einer zweiten Schaltstellung,

Fig. 2A      eine zweite Ausführungsform eines erfindungsgemäßen Expansionsventils in einer Explosionsdarstellung und in einer ersten Schaltstellung,

Fig. 2B    das Expansionsventil der zweiten Ausführungsform in einem zusammengesetzten Zustand und einer ersten Schaltstellung,

Fig. 3A    ein Ausführungsbeispiel eines erfindungsgemäßen Expansionsventils gemäß der ersten Ausführungsform in einer Explosionsdarstellung und in einer ersten Schaltstellung, wobei die Kanalstrukturen des zweiten Ventilelements in Reihe geschaltet sind,

Fig. 3B    das Expansionsventil aus Figur 3A in einem zusammengesetzten Zustand,

Fig. 4A    ein Ausführungsbeispiel eines erfindungsgemäßen Expansionsventils gemäß der zweiten Ausführungsform in einer Explosionsdarstellung und in einer ersten Schaltstellung, wobei die Kanalstrukturen des zweiten Ventilelements in Reihe geschaltet sind,

Fig. 4B    das Expansionsventil aus Figur 4A in einem zusammengesetzten Zustand,

Fig. 5A    ein Ausführungsbeispiel eines erfindungsgemäßen Expansionsventils gemäß der ersten Ausführungsform in einer Explosionsdarstellung und in einer ersten Schaltstellung, wobei die Kanalstrukturen des zweiten Ventilelements parallel zueinander schaltbar sind,

Fig. 5B    das Expansionsventil aus Figur 5A in einem zusammengesetzten Zustand,

Fig. 6A    ein Ausführungsbeispiel eines erfindungsgemäßen Expansionsventils gemäß der zweiten Ausführungsform in einer Explosionsdarstellung und in einer ersten Schaltstellung, wobei die Kanalstrukturen des zweiten Ventilelements parallel zueinander schaltbar sind,

Fig. 6B    das Expansionsventil aus Figur 6A in einem zusammengesetzten Zustand,

Fig. 7    ein schematisches Blockschaltbild für eine Art der Verschaltung einzelner Flusswiderstände,

Fig. 8    einen Kältekreislauf aus dem Stand der Technik mit einer Fluid-Expansionsstelle wie sie im Stand der Technik verwendet wird,

Fig. 9    ein Ausführungsbeispiel eines erfindungsgemäßen Expansionsventils,

Fig. 10    ein weiteres Ausführungsbeispiel eines erfindungsgemäßen Expansionsventils,

Fig. 11    eine Draufsicht auf ein Ventilelement mit mehreren Drosselkanalstrukturen und Filterkanalstrukturen,

Fig. 12    eine schematische Ansicht für eine Gestaltungsmöglichkeit von Filterkanalstrukturen,

Fig. 13    ein Ausführungsbeispiel für die Anordnung von Drosselkanalstrukturen und Filterkanalstrukturen,

Fig. 14    ein weiteres Ausführungsbeispiel für die Anordnung von Drosselkanalstrukturen und Filterkanalstrukturen,

Fig. 15    ein weiteres Ausführungsbeispiel für die Anordnung von Drosselkanalstrukturen und Filterkanalstrukturen,

Fig. 16    ein weiteres Ausführungsbeispiel für die Anordnung von Drosselkanalstrukturen und Filterkanalstrukturen,

Fig. 17    ein Ausführungsbeispiel für Bypasskanalstrukturen,

Fig. 18    ein Ausführungsbeispiel für Mittel zum Reduzieren der Strömungsgeschwindigkeit,

Fig. 19A    ein Ausführungsbeispiel für eine strukturelle Ausgestaltung einer Abhebefunktion zweier Ventilelemente,

Fig. 19B    eine Veranschaulichung der Abhebefunktion,

Fig. 19C    ein Ausführungsbeispiel für eine strukturelle Ausgestaltung einer Abhebefunktion des ersten und des zweiten Teils des zweiteiligen zweiten Ventilelements,

Fig. 20A    ein Ausführungsbeispiel für eine strukturelle Realisierung einer Strömungsrichtungsumkehr,

Fig. 20B    ein weiteres Ausführungsbeispiel für eine strukturelle Realisierung einer Strömungsrichtungsumkehr,

Fig. 21a    ein Diagramm zur Darstellung von Schaltstufen mit linear ansteigender Durchflussrate,

Fig. 21b    ein Diagramm zur Darstellung von Schaltstufen mit linear abfallender Durchflussrate,

Fig. 21c    ein Diagramm zur Darstellung von Schaltstufen mit beliebig angeordneter Durchflussrate, und

Fig. 21d    ein Diagramm zur Darstellung von Schaltstufen, die bezüglich ihrer Drosselrate nach ihrer jeweiligen Nutzungshäufigkeit angeordnet sind.

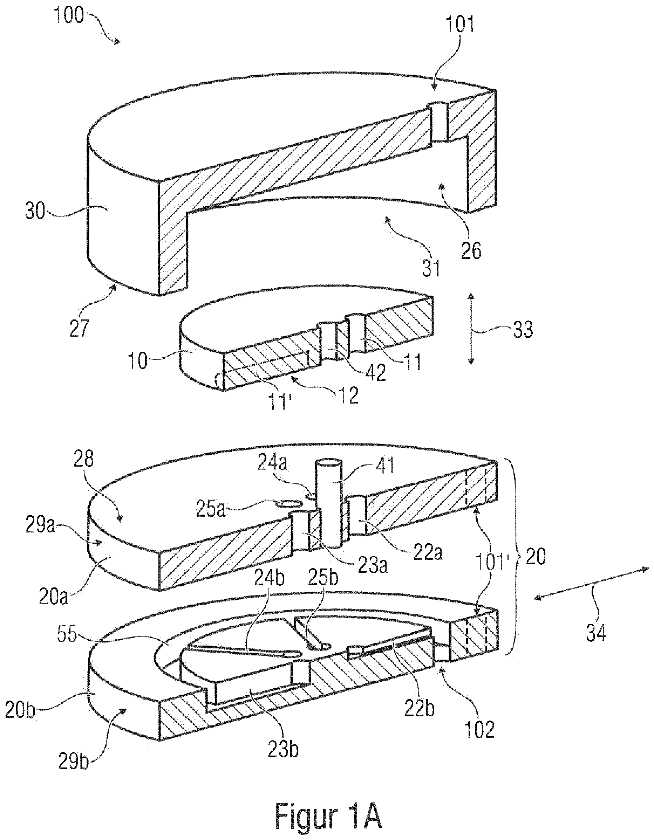

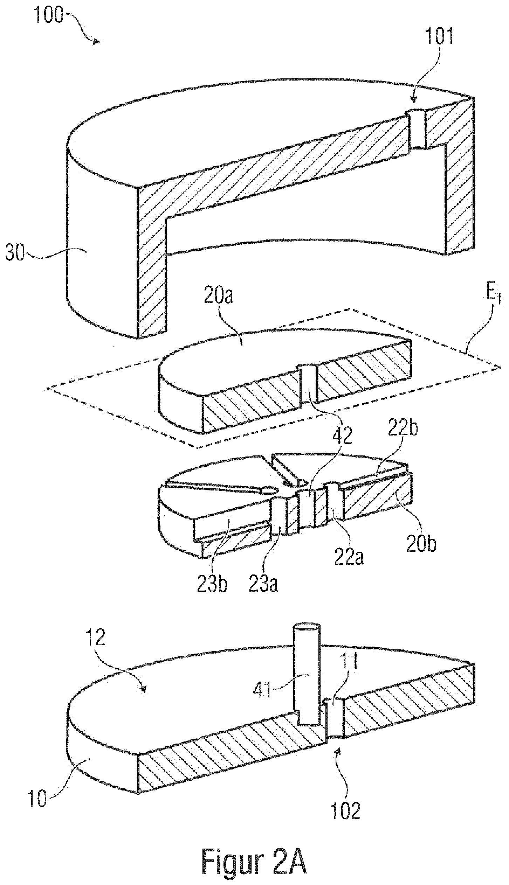

Im Folgenden werden einige Ausführungsbeispiele der Erfindung mit Bezug auf die Figuren näher beschrieben, wobei Elemente mit derselben oder ähnlichen Funktion mit denselben Bezugszeichen versehen sind. Außerdem gilt alles, was mit Bezug auf ein bestimmtes Ausführungsbeispiel erwähnt wurde, gleichsam auch für alle anderen Ausführungsbeispiele. Im Folgenden werden, um das Lesen der Beschreibung zu vereinfachen, viele Merkmale unter Bezugnahme auf die Figuren 1A bis 1D erklärt werden. Es versteht sich jedoch von selbst, dass all diese Merkmale gleichsam auch für die in den übrigen Figuren 2A bis 21d dargestellten Ausführungsbeispiele gelten.

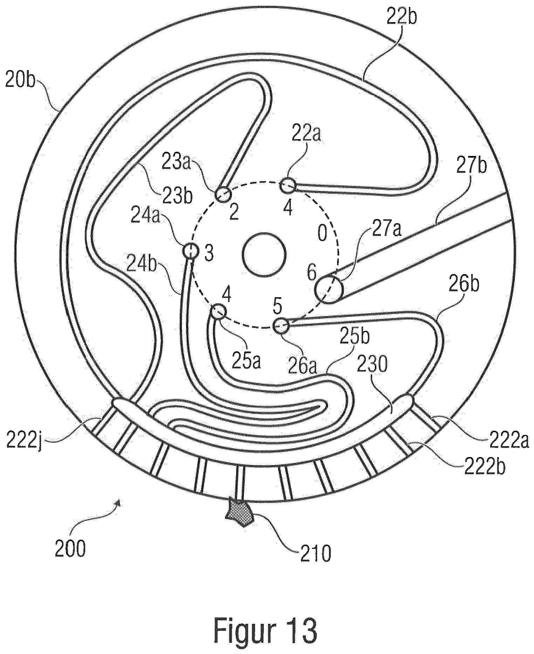

Im Folgenden werden Kanalstrukturen anhand von zwei beispielhaften Kanalstrukturen, nämlich einer ersten Kanalstruktur 22a, 22b und einer zweiten Kanalstruktur 23a, 23b beschrieben. Es können jedoch auch mehr als zwei Kanalstrukturen denkbar sein. Jede Kanalstruktur 22a, 22b, 23a, 23b kann einen sich radial (bezüglich der Drehachse) erstreckenden Abschnitt 22b, 23b aufweisen. Jede Kanalstruktur 22a, 22b, 23a, 23b kann einen sich axial (bezüglich der Drehachse) erstreckenden Abschnitt 22a, 23a aufweisen. Der jeweilige sich axial erstreckende Abschnitt 22a, 23a und/oder der jeweilige sich radial erstreckende Abschnitt 22b, 23b kann sich geradlinig oder ungeradlinig, z.B. gekrümmt oder in Form einer oder mehrerer Kurven (siehe z.B. Figur 13), von einem Zentrum eines Ventilelements 10, 20 zu einer Außenseite des jeweiligen Ventilelements 10, 20 erstrecken.

Jede der Kanalstrukturen 22a, 22b, 23a, 23b kann eine Drosselfunktion zum Drosseln des Fluids bereitstellen. Deshalb können die Kanalstrukturen 22a, 22b, 23a, 23b auch als Drosselkanalstrukturen bezeichnet werden. Da insbesondere die sich radial erstreckenden Abschnitte 22b, 23b unterschiedliche Drosselstufen bereitstellen können, werden in diesem Dokument insbesondere die sich radial erstreckenden Abschnitte 22b, 23b als Drosselkanalstrukturen bezeichnet.

Wenn nachfolgend von Fluid gesprochen wird, kann damit sowohl eine Flüssigkeit als auch ein Gas gemeint sein. Auch Mischformen aus teilweise gasförmigen und flüssigen Zuständen des Fluids können hierbei gemeint sein. Generell kann das Fluid, im Sinne der vorliegenden Offenbarung, in allen vorkommenden Aggregatszuständen vorliegen. Beispielsweise kann das Fluid in Strömungsrichtung vor dem Expansionsventil in einem im Wesentlichen flüssigen Aggregatszustand vorliegen, während es in Strömungsrichtung nach dem Expansionsventil (evtl. mit einem nachgeschalteten Verdampfer) in einem im Wesentlichen gasförmigem Zustand vorliegen kann. Das Fluid kann ein Kältemittel, wie z.B. R600a oder R134a, sein.

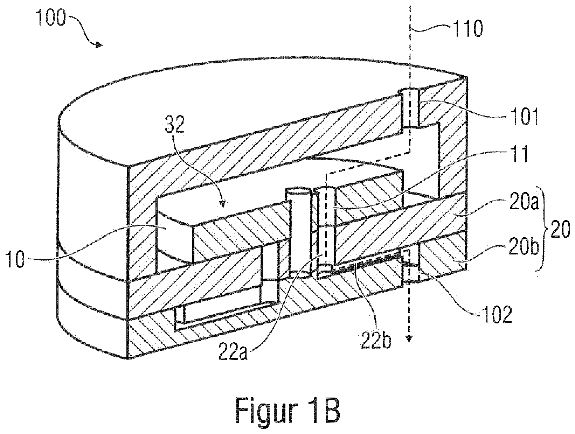

Die Figuren 1A und 1B zeigen ein erstes Ausführungsbeispiel eines erfindungsgemäßen Expansionsventils 100. Das Expansionsventil 100 weist wenigstens einen Fluideinlass 101 und wenigstens einen Fluidauslass 102 auf.

Das Expansionsventil 100 weist außerdem ein erstes Ventilelement 10 mit zumindest einer ersten Kanalstruktur 11 auf. Ferner weist das Expansionsventil 100 ein zweites Ventilelement 20 auf. Das zweite Ventilelement 20 kann, wie hier beispielhaft gezeigt, aus zwei Teilen 20a, 20b bestehen. Weitere Ausführungsformen sehen vor, dass das zweite Ventilelement 20 einteilig ausgebildet ist. Das zweite Ventilelement 20 weist zumindest eine zweite Kanalstruktur 22a, 22b und eine dritte Kanalstruktur 23a, 23b auf.

Kanalstrukturen im Allgemeinen, und die abgebildeten Kanalstrukturen 11, 22a, 22b, 23a, 23b im Speziellen, sind in dem jeweiligen Ventilelement 10, 20 vorgesehene Strukturen, z.B. in Form von Ausnehmungen, die einen Strömungspfad für ein durchströmendes Fluid bereitstellen.

Das erste Ventilelement 10 und das zweite Ventilelement 20 sind relativ zueinander bewegbar. Wie insbesondere in Figur 1B zu erkennen ist, sind in einer ersten Stellung der Ventilelemente 10, 20 die erste Kanalstruktur 11 und die zweite Kanalstruktur 22a, 22b zueinander ausgerichtet und bilden einen ersten Fluidströmungspfad 110 mit einem ersten Strömungswiderstand zwischen dem Fluideinlass 101 und dem Fluidauslass 102.

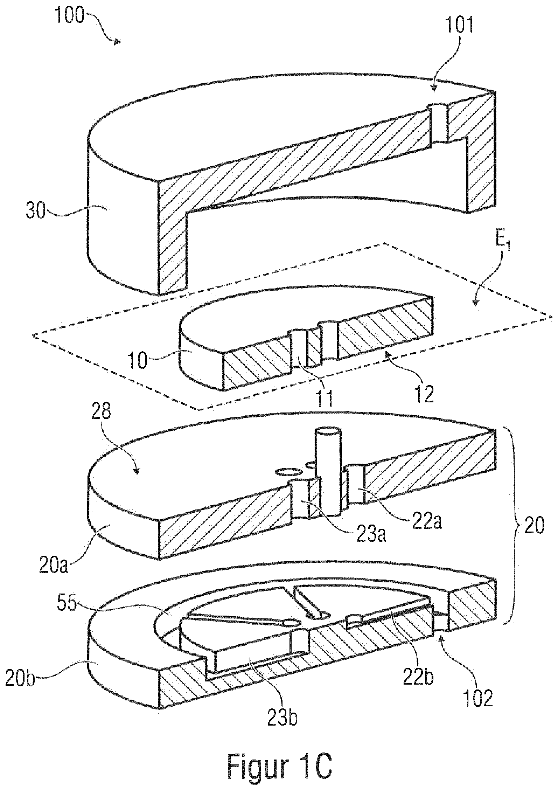

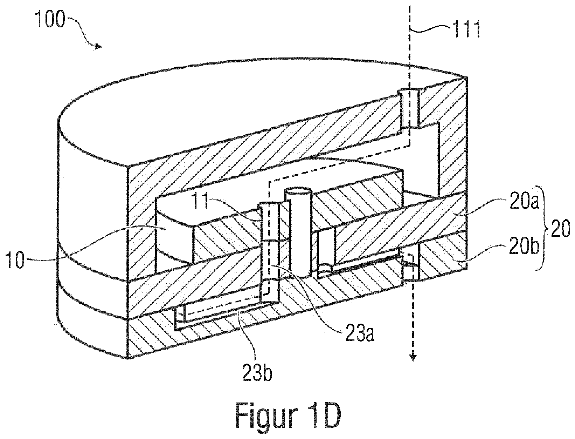

Die Figuren 1C und 1D zeigen eine zweite Stellung der Ventilelemente 10, 20. In dieser zweiten Stellung der Ventilelemente 10, 20 sind die erste Kanalstruktur 11 und die dritte Kanalstruktur 23a, 23b zueinander ausgerichtet und bilden einen zweiten Fluidströmungspfad 111 mit einem zweiten von dem ersten Strömungswiderstand verschiedenen Strömungswiderstand zwischen dem Fluideinlass 101 und dem Fluidauslass 102.

In Figur 1C ist beispielsweise zu sehen, dass zumindest ein Abschnitt 23b der dritten Kanalstruktur 23a, 23b in einer beispielsweise kreisförmig umlaufenden Kanalstruktur 55 mündet, die sich bis zu dem Fluidauslass 102 erstreckt. Dementsprechend strömt das Fluid durch diesen Abschnitt 23b der dritten Kanalstruktur 23a, 23b und die umlaufende Kanalstruktur 55, die in Figur 1D zeichnungsbedingt teilweise verdeckt ist, bis zu dem Fluidauslass 102.

Auch zumindest ein Abschnitt 22b der zweiten Kanalstruktur 22a, 22b mündet in die umlaufende Kanalstruktur 55. Die umlaufende Kanalstruktur 55 verbindet sozusagen die in dem zweiten Ventilelement 20 ausgebildeten Kanalstrukturen 22a, 22b, 23a, 23b untereinander und bildet eine gemeinsame Zuführung zu dem Fluidauslass 102. Der Betrag des Gesamtströmungswiderstands für das durchströmende Fluid kann sich hierbei zusammensetzen aus a) dem Strömungswiderstand der ersten Kanalstruktur 11 des ersten Ventilelements 10, b) dem Strömungswiderstand der jeweiligen Kanalstruktur 22a, 22b, 23a, 23b des zweiten Ventilelements 20 und c) dem Strömungswiderstand der umlaufenden Kanalstruktur 55.

In den Figuren 1B und 1D sind also verschiedene Schaltstellungen des Expansionsventils 100 gezeigt. Mittels der zuvor genannten Relativbewegung zwischen dem ersten Ventilelement 10 und dem zweiten Ventilelement 20 können diese Schaltstellungen erreicht werden. Das Expansionsventil 100 kann also zwischen verschiedenen Schaltstellungen bzw. Schaltstufen hin- und herschalten.

Wie insbesondere in den Figuren 1A und 1C zu sehen ist, kann das zweite Ventilelement 20 außerdem, neben den zweiten und dritten Kanalstrukturen 22a, 22b; 23a, 23b, auch noch weitere Kanalstrukturen 24a, 24b; 25a, 25b aufweisen. Diese werden nachfolgend näher beschrieben.

Die einzelnen Kanalstrukturen können unterschiedliche, nicht notwendigerweise entlang der Kanallänge gleichbleibende, Strömungsquerschnitte aufweisen, d.h. eine Kanalstruktur kann einen variablen Strömungsquerschnitt aufweisen. Gemäß denkbarer Ausführungsformen der Erfindung können die Strömungsquerschnitte der einzelnen Kanalstrukturen entweder konstant oder eben variabel sein.

Ein variabler Strömungsquerschnitt kann beispielsweise dadurch erreicht werden, dass sich der geometrische Querschnitt der jeweiligen Kanalstruktur über dessen Kanallänge hinweg zumindest einmal ändert. So kann eine Kanalstruktur mit variablem Strömungsquerschnitt beispielsweise an einer ersten Stelle einen ersten Strömungsquerschnitt und an einer zweiten Stelle einen von dem ersten Strömungsquerschnitt unterschiedlichen zweiten Strömungsquerschnitt aufweisen.

Beispielsweise kann eine Kanalstruktur dabei derart ausgebildet sein, dass der Strömungsquerschnitt entlang der Fluidströmungsrichtung zu- oder abnimmt. Gemäß einem weiteren denkbaren Beispiel könnte die Kanalstruktur am Anfang und am Ende einen ersten Strömungsquerschnitt aufweisen und dazwischen einen zweiten (kleineren oder größeren) Strömungsquerschnitt, z.B. in Form einer Einschnürung und dergleichen, aufweisen.

Der Strömungsquerschnitt einer Kanalstruktur kann die Durchflussrate eines durch diese Kanalstruktur hindurchströmenden Fluids beeinflussen. Das heißt beispielsweise, dass bei gleicher Kanallänge ein kleineres Volumen einer Kanalstruktur einen kleineren Strömungsquerschnitt dieser Kanalstruktur bedingt, der dem durchströmenden Fluid einen größeren Strömungswiderstand entgegensetzt, wodurch die Durchflussrate des Fluids gedrosselt werden kann.

Neben dem Strömungsquerschnitt kann auch die Formgebung einer Kanalstruktur dessen Strömungswiderstand maßgeblich beeinflussen. So sind gemäß der Erfindung Kanalstrukturen denkbar, die eine runde Form aufweisen. Diese können beispielsweise mittels Bohren hergestellt werden. Es ist aber auch denkbar, dass die Kanalstrukturen eine rechteckige Form aufweisen. Diese können beispielsweise mittels Fräsen hergestellt werden. Prinzipiell sind auch weitere geometrische Formen der Kanalstrukturen denkbar, wie z.B. dreieckig, rund, halbrund, oder vieleckig. Beispielsweise kann eine dreieckig geformte Kanalstruktur einen höheren Strömungswiderstand aufweisen als eine viereckig geformte Kanalstruktur.

Ganz unabhängig davon, ob die unterschiedlichen Strömungsquerschnitte nun mittels einer Variation des geometrischen Querschnitts und/oder mittels einer Variation der geometrischen Form der Kanalstrukturen erzielt werden, stellen unterschiedliche Strömungsquerschnitte dem Fluid unterschiedliche Strömungswiderstände entgegen und drosseln somit die Durchflussrate des Fluids unterschiedlich stark. Dementsprechend können Kanalstrukturen mit unterschiedlichen Strömungsquerschnitten auch als unterschiedliche Drosselstufen zum Drosseln der Durchflussrate bezeichnet werden.

Gleichzeitig bewirkt die Drosselung auch ein Absinken des Drucks des durchströmenden Fluids, d.h. der Druck des Fluids am Fluidauslass 102 wird abgesenkt gegenüber dem Druck des Fluids am Fluideinlass 101. Beim Durchströmen des Fluids durch das Expansionsventil 100 entspannt sich das Fluid. Es kann dabei außerdem, zumindest teilweise, verdampfen.

Die Durchflussrate Q wird im Wesentlichen charakterisiert durch den durch einen bestimmten Strömungsquerschnitt hindurchfließenden Volumenstrom eines Fluids, gemäß der bekannten Formel

$$Q = \dot{V} = \frac{dV}{dt}$$

Der Massenstrom $\dot{m}$ hängt dabei über die Beziehung

$$\dot{m} = \frac{dm}{dt} = \rho \cdot \dot{V}$$

mit der Durchflussrate Q zusammen, wobei $\rho$ die Dichte des Fluids ist.

Wie zuvor erwähnt, können also die einzelnen Kanalstrukturen als Drosselstufen bezeichnet werden, mittels derer das erfindungsgemäße Expansionsventil 100 die Durchflussrate bzw. den Massenstrom des durchfließenden Fluids drosseln kann.

Gemäß Ausführungsbeispielen der Erfindung kann beispielsweise die zweite Kanalstruktur 22a, 22b einen ersten Strömungsquerschnitt aufweisen, und die dritte Kanalstruktur 23a, 23b kann einen von dem ersten Strömungsquerschnitt unterschiedlichen zweiten Strömungsquerschnitt aufweisen. Somit weist das Expansionsventil 100 also zumindest zwei unterschiedliche Drosselstufen auf.

Die Drosselstufen können erfindungsgemäß Drosselraten zwischen nahezu 100% und nahezu 0% aufweisen. Der Relativwert der Drosselraten bezieht sich hierbei auf die Drosselung der Durchflussrate des Fluids zwischen Fluideingang 101 und Fluidausgang 102 bezogen auf eine Zeitspanne $\Delta t$.

Eine Drosselrate von 100% bedeutet beispielsweise, dass die Durchflussrate des Fluids von Fluideinlass 101 zu Fluidauslass 102 innerhalb dieser Zeitspanne $\Delta t$ nahezu Null oder gleich Null ist. Das Expansionsventil 100 sperrt also den Durchfluss des Fluids. Das Expansionsventil 100 kann somit also eine "Stopp-Funktion" bereitstellen, bei der ein Durchfluss des Fluids gestoppt ist. Aufgrund von, dem Fachmann bekannten, oftmals auftretenden Leckagen von Ventilen kann die Durchflussrate hierbei auch nur nahezu bei 0%, d.h. etwas oberhalb von 0%, liegen. Beispielsweise kann eine Durchflussrate hier zwischen 0% und 5% bei eventuell auftretenden Leckagen liegen.

Eine Drosselrate von nahezu 0% hingegen bedeutet, dass der Durchfluss des Fluids nahezu nicht gedrosselt wird, d.h. die Durchflussrate des Fluids von Fluideinlass 101 zu Fluidauslass 102 in der Zeitspanne $\Delta t$ liegt bei nahezu 100%. Aufgrund von, dem Fachmann bekannten, Strömungs- und Reibungsverlusten innerhalb der durchströmten Kanalstrukturen wird die Durchflussrate hierbei im Regelfall nur nahezu bei 100%, d.h. immer etwas unterhalb von 100%, liegen können. Beispielsweise kann eine Durchflussrate hier zwischen 95% und 100% liegen.

Das Expansionsventil 100 kann somit also eine "Offen-Funktion" oder auch "Freifluss-Funktion" bereitstellen, bei der ein Durchfluss des Fluids nahezu ungehindert möglich ist. In diesem Fall findet also keine signifikante Drosselung innerhalb des Expansionsventils 100 statt.

Wie eingangs erwähnt, weist das erfindungsgemäße Expansionsventil 100 mindestens zwei Drosselstufen auf, d.h. der Strömungswiderstand des ersten Strömungspfads in der ersten Schaltstellung unterscheidet sich von dem Strömungswiderstand des zweiten Strömungspfads in der zweiten Schaltstellung. Mindestens einer der beiden Strömungswiderstände kann hierbei derart ausgelegt sein, dass das Expansionsventil 100 in der jeweiligen Schaltstellung keine signifikante Drosselung aufweist. Das heißt, mindestens einer der beiden Strömungspfade (erste Schaltstellung oder zweite Schaltstellung) bildet eine zuvor erwähnte "Offen-Funktion" bzw. Freifluss-Funktion".

Eine solche "Offen-Funktion" kann beispielsweise dadurch realisiert werden, dass die den ersten Fluidströmungspfad bildenden erste und zweite Kanalstrukturen 11; 22a, 22b oder die den zweiten Fluidströmungspfad bildenden erste und dritte Kanalstrukturen 11; 23a, 23b als eine durch das erste und das zweite Ventilelement 10; 20 durchgehende Öffnung, z.B. eine Bohrung mit demselben Durchmesser, ausgebildet sind, wobei diese Öffnung keine signifikante Drosselung aufweist. Das bedeutet, dass das Expansionsventil 100 eine Drosselrate von nahezu 0% aufweist, oder eine Drosselrate zwischen 0% und maximal 5% aufweisen kann.

Eine zuvor erwähnte "Stopp-Funktion" kann beispielsweise dadurch realisiert werden, dass die erste Kanalstruktur 11 im ersten Ventilelement 10 mit keiner der Kanalstrukturen 22a, 22b, 23a, 23b des zweiten Ventilelements 20 ausgerichtet ist. Dies kann beispielsweise dadurch realisiert werden, dass das erste Ventilelement 10 in eine (nicht explizit dargestellte) dritte Schaltstellung verfahren wird, die beispielsweise zwischen der ersten Schaltstellung (Figur 1B) und der zweiten Schaltstellung (Figur 1D) liegen kann. Die erste Kanalstruktur 11 des ersten Ventilelements 10 mündet somit nicht mehr in eine weitere Kanalstruktur im zweiten Ventilelement 20 sondern direkt auf der Oberfläche 28 (Figuren 1A, 1D) des zweiten Ventilelements 20. Das Fluid wird somit nicht mehr zu dem Fluidauslass 102 geleitet, d.h. der Durchfluss des Fluids wird dadurch gesperrt bzw. unterbrochen.

Wenn im Sinne der vorliegenden Offenbarung davon die Rede ist, dass ein Fluidstrom zwischen dem Fluideinlass 101 und dem Fluidauslass 102 unterbrochen ist, so bedeutet dies, dass der Fluidstrom mittels der Stellung der Ventilelemente 10, 20 zueinander bewusst unterbrochen werden soll, unabhängig davon ob ein ungewollter bzw. parasitärer Durchfluss des Fluids aufgrund von möglichen Leckagen an Ventilen und dergleichen vorhanden ist. Der Durchfluss des Fluids, der unterbrochen werden soll, ist der direkte Durchfluss durch die Kanalstrukturen.

Das erste Ventilelement 10 kann relativ zu dem zweiten Ventilelement 20 beispielsweise mittels eines Schrittmotors bewegt werden. Dabei wird eines der beiden Ventilelemente 10, 20 mittels des Schrittmotors angetrieben und gegenüber dem anderen der beiden Ventilelemente 10, 20 bewegt.

Außerdem kann ein Getriebe vorgesehen sein, dass den Antrieb des Schrittmotors entsprechend untersetzt bzw. übersetzt.

Wenn die Stoppfunktion in der dritten Schaltstellung, wie oben erwähnt, zwischen der ersten und der zweiten Schaltstellung liegt, hat dies besondere Vorteile hinsichtlich einer möglichen Energieeinsparung. Man stelle sich vor, eine Ausgangsstellung des mit dem Schrittmotor verbundenen Ventilelements 10, 20 sei die dritte Schaltstellung. Dann müsste der Schrittmotor das Ventilelement 10, 20 nicht über den gesamten Weg von der ersten Schaltstellung zu der zweiten Schaltstellung (bzw. zurück) verfahren, sondern es reicht in diesem Fall aus, das Ventilelement 10, 20 lediglich von der dritten Schaltstellung zu der ersten bzw. zweiten Schaltstellung zu verfahren. Da die dritte Schaltstellung zwischen der ersten und der zweiten Schaltstellung liegt, muss der Schrittmotor also lediglich den halben Weg zurücklegen.

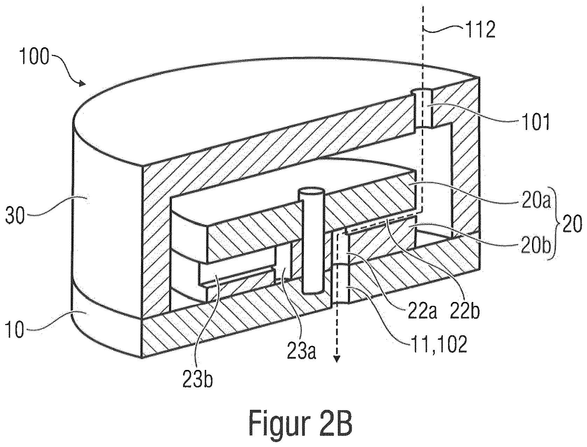

In dem in den Figuren 1A bis 1D gezeigten Ausführungsbeispiel könnte das erste Ventilelement 10 von dem Schrittmotor angetrieben werden. Eine alternative Ausführungsform, bei der das zweite Ventilelement 20 angetrieben werden kann, wird nachfolgend unter Bezugnahme auf die Figuren 2A und 2B beschrieben.

Zunächst soll allerdings die erste Ausführungsform weiter beschrieben werden. Wie insbesondere in den Figuren 1A und 1C anschaulich dargestellt ist, ist das zweite Ventilelement 20 in diesem Ausführungsbeispiel zweiteilig ausgebildet, d.h. das zweite Ventilelement weist einen ersten Teil 20b und einen zweiten Teil 20a auf.

Der erste Teil 20b des zweiten Ventilelements 20 weist hierbei zumindest einen Abschnitt 22b, 23b der zweiten und dritten Kanalstrukturen 22a, 22b; 23a, 23b auf. Das heißt, diese Abschnitte 22b, 23b der Kanalstrukturen sind in dem ersten Teil 20b des zweiten Ventilelements 20 ausgebildet. Wie später näher beschrieben wird, können die Kanalstrukturen 22a, 22b; 23a, 23b und insbesondere deren Abschnitte 22b, 23b auch als Drosselkanalstrukturen bezeichnet werden. Beispielsweise kann der Abschnitt 22b der zweiten Kanalstruktur 22a, 22b auch als ein erster Drosselkanalabschnitt 22b bezeichnet werden, und der Abschnitt 23b der dritten Kanalstruktur 23a, 23b kann auch als ein zweiter Drosselkanalabschnitt 23b bezeichnet werden.

Der erste Teil 20b des zweiten Ventilelements 20 kann außerdem mindestens einen Fluidauslass 102 aufweisen. Die Drosselkanalstrukturen bzw. Abschnitte 22b, 23b der zweiten und dritten Kanalstrukturen sind innerhalb des ersten Teils 20b des zweiten Ventilelements 20 jeweils mit dem Fluidauslass 102 verbunden, beispielsweise mittels der umlaufenden Kanalstruktur 55. Es ist aber auch denkbar, dass mehrere Fluidauslässe in dem zweiten Ventilelement 20 bzw. in dem ersten Teil 20b des zweiten Ventilelements 20 angeordnet sind.

Vorteilhafter Weise ist zwischen dem ersten Teil 20b des zweiten Ventilelements 20 und dem zweiten Teil 20a des zweiten Ventilelements 20 eine Dichtung angeordnet, die die in dem ersten Teil 20b des zweiten Ventilelements 20 ausgebildeten zweiten und dritten Kanalstrukturen 22b, 23b fluidisch gegeneinander abdichtet. Hierbei kann es sich insbesondere um eine Teflondichtung handeln, da diese besonders temperaturbeständig, druckbeständig und altersbeständig ist.

Eine Abdichtung der beiden Teile 20a, 20b des Ventilelements 20 kann aber auch beispielsweise dadurch erreicht werden, dass die beiden Teile 20a, 20b miteinander verklebt, verschraubt oder z.B. mittels Reib- oder Laserschweißen miteinander verschweißt werden.

Die Ventilelemente 10, 20 können prinzipiell diverse geometrische Formen aufweisen, d.h. die Ventilelemente 10, 20 können beispielsweise in Form eines Zylinders, eines Würfels, einer Kugel, einer Halbkugel, einer Pyramide, eines Prismas und dergleichen ausgebildet sein.

Die in den jeweiligen Ventilelementen 10, 20 ausgebildeten Kanalstrukturen 11, 22a, 22b, 23a, 23b können sich hierbei zumindest abschnittsweise in einer radialen Richtung und/oder zumindest abschnittsweise in einer axialen Richtung erstrecken. Wenn die beiden Ventilelemente 10, 20 beispielsweise entlang einer Drehachse relativ zueinander drehbar sind, so können sich eine axiale Richtung und eine radiale Richtung auf diese Drehachse beziehen.

Einige Ausführungsbeispiele der Erfindung sehen vor, dass das erste Ventilelement 10 und das zweite Ventilelement 20 jeweils zylinderförmige Ventilelemente sind, wobei sich die erste Kanalstruktur 11 in dem ersten Ventilelement 10 zumindest abschnittsweise in axialer und/oder radialer Richtung erstreckt und/oder wobei sich die zweite und dritte Kanalstruktur 22a, 22b; 23a, 23b in dem zweiten Ventilelement 20 zumindest abschnittsweise 22b, 23b in radialer und/oder axialer Richtung erstrecken.

Weitere Ausführungsbeispiele der Erfindung sehen vor, dass das erste Ventilelement 10 und das zweite Ventilelement 20 jeweils kreiszylinderförmige Ventilelemente sind und das erste Ventilelement 10 in axialer Richtung konzentrisch mit dem zweiten Ventilelement 20 ausgerichtet ist.

Dies soll nachfolgend unter Bezugnahme auf die Figuren 1A bis 1D lediglich beispielhaft erläutert werden. Wie in diesen Figuren beispielhaft zu sehen ist, können das erste Ventilelement 10 und das zweite Ventilelement 20 hier jeweils beispielhaft als zylinderförmige Ventilelemente abgebildet sein.

Hierbei soll erwähnt werden, dass sich ein Zylinder, per Definition, dadurch auszeichnet, dass eine ebene Kurve in einer Ebene entlang einer Geraden, die nicht in dieser Ebene enthalten ist, um eine feste Strecke verschoben wird. Je zwei sich entsprechenden Punkte der Kurven und der verschobenen Kurve werden durch eine Strecke verbunden. Die Gesamtheit dieser parallelen Strecken bildet die zugehörige Zylinder-Fläche. Die Kurve bzw. die dabei entstehende Mantelfläche kann beliebige Formen aufweisen.

In dem abgebildeten Ausführungsbeispiel handelt es sich um eine spezielle Form eines Zylinders, nämlich um einen Kreiszylinder, d.h. das erste Ventilelement 10 und das zweite Ventilelement 20 sind jeweils kreiszylinderförmig ausgebildet, wobei das erste Ventilelement 10 in axialer Richtung 33 (Figur 1A) konzentrisch mit dem zweiten Ventilelement 20 ausgerichtet sein kann.

In dem abgebildeten Ausführungsbeispiel erstreckt sich die erste Kanalstruktur 11 in dem ersten Ventilelement 10 zumindest abschnittsweise in axialer Richtung 33 (Figur 1A). Die erste Kanalstruktur 11 erstreckt sich hierbei vollständig durch das erste Ventilelement 10 hindurch. Dies kann fertigungstechnisch beispielsweise dadurch realisiert werden, dass eine Bohrung in axialer Richtung 33 durch das erste Ventilelement 10 in selbiges eingebracht wird.

In einer anderen denkbaren Ausführungsform könnte sich die erste Kanalstruktur 11 in radialer Richtung 34 in dem ersten Ventilelement 10 erstrecken. Dies ist in Figur 1A beispielhaft mit der in Strichlinien dargestellten ersten Kanalstruktur 11' angedeutet. Dies kann fertigungstechnisch beispielsweise dadurch realisiert werden, dass eine Bohrung in radialer Richtung 34 durch das erste Ventilelement 10 in selbiges eingebracht wird. Denkbar wäre auch, dass die in Strichlinien dargestellte radial verlaufende erste Kanalstruktur 11' von der Unterseite 12 des ersten Ventilelements 10 in selbiges mittels trennenden Verfahren hineingefräst, -gesägt, -gelasert oder -geschnitten wird und/oder mittels umformenden Verfahren eingeprägt, abgeformt wird und/oder direkt mit urformenden Verfahren wie Spritzguss erzeugt wird.

Es wäre auch denkbar, dass sich die erste Kanalstruktur 11 sowohl abschnittsweise in radialer Richtung 34 als auch abschnittsweise in axialer Richtung 33 erstreckt.

Alternativ oder zusätzlich erstrecken sich die zweite und dritte Kanalstruktur 22a, 22b, 23a, 23b in dem zweiten Ventilelement 20 zumindest abschnittsweise in radialer Richtung 34 (Figur 1A). Genauer gesagt erstrecken sich die in dem ersten Teil 20b des zweiten Ventilelements 20 angeordneten Drosselkanalstrukturen bzw. Abschnitte 22b, 23b der Kanalstrukturen 22a, 22b, 23a, 23b zumindest abschnittsweise in radialer Richtung 34. Dies kann fertigungstechnisch beispielsweise dadurch realisiert werden, dass die Drosselkanalstrukturen bzw. die Abschnitte 22b, 23b von oben in das zweite Ventilelement 20 mittels trennenden Verfahren hineingefräst, -gesägt, -gelasert oder - geschnitten werden und/oder mit umformenden Verfahren eingeprägt, abgeformt werden und/oder direkt mit urformenden Verfahren wie Spritzguss erzeugt werden. Dies sind relativ einfache Verfahrensschritte, die die Herstellung erleichtern und somit die Stückkosten erheblich reduzieren können.

Ebenso wäre es denkbar, dass die zweite Kanalstruktur 22a, 22b und/oder die dritte Kanalstruktur 23a, 23b sich zumindest abschnittsweise in axialer Richtung 33 durch das zweite Ventilelement 20 bzw. den ersten Teil 20b des zweiten Ventilelements 20 hindurch erstreckt. Dabei könnte die zweite Kanalstruktur 22a, 22b einen von der dritten Kanalstruktur 23a, 23b unterschiedlichen Strömungsquerschnitt aufweisen.

Das erste Ventilelement 10 weist eine dem zweiten Ventilelement 20 zugewandte Fläche 12 auf (Figuren 1A und 1C). Das erste Ventilelement 10 und das zweite Ventilelement 20 sind relativ zueinander bewegbar, und zwar in der abgebildeten und parallel zu dieser Fläche 12 verlaufenden Ebene $E_1$. Die beiden Ventilelemente 10, 20 können beispielsweise in dieser Ebene $E_1$ translatorisch zueinander bewegbar sein und somit gegeneinander verschoben werden.

Das erste Ventilelement 10 und das zweite Ventilelement 20 sind in den abgebildeten Ausführungsbeispielen rotatorisch relativ zueinander bewegbar, sodass eine Bewegung von der ersten Stellung der Ventilelemente 10, 20 (Figur 1B) zu der zweiten Stellung der Ventilelemente 10, 20 (Figur 1D) mittels einer Rotation des ersten Ventilelements 10 relativ zu dem zweiten Ventilelement 20 ausführbar ist. Hierbei kann, z.B. mittels eines Schrittmotors, entweder das erste Ventilelement 10 gegenüber dem zweiten Ventilelement 20 gedreht werden, oder das zweite Ventilelement 20 gegenüber dem ersten Ventilelement 10 gedreht werden.

Wie in den Figuren 1A bis 1D zu erkennen ist, kann das Expansionsventil 100 eine Abdeckung 30 aufweisen. Die Abdeckung 30 weist eine Ausnehmung 31 auf. Die Abdeckung 30 ist unbeweglich mit dem zweiten Ventilelement 20 verbunden. Das erste Ventilelement 10 ist innerhalb dieser Abdeckung 30, bzw. innerhalb der Ausnehmung 31, relativ zu dem zweiten Ventilelement 20, und somit auch relativ zu der Abdeckung 30, bewegbar angeordnet. In diesem Fall kann also das erste Ventilelement 10 in dem Expansionsventil 100 beweglich, insbesondere rotatorisch beweglich, angeordnet sein.

Hierfür weist das Expansionsventil 100 eine Achse 41 auf, die beispielsweise drehfest an dem zweiten Ventilelement 20 und/oder an der Abdeckung 30 angeordnet sein kann. Das erste Ventilelement 10 ist mittels einer entsprechenden Aufnahme 42 beweglich, insbesondere drehbar, an dieser Achse 41 gelagert.

Wie in Figur 1A zu sehen ist, ist die Achse 41 mittig, d.h. im Zentrum des zweiten Ventilelements 20, angeordnet. Auch die Aufnahme 42 des ersten Ventilelements 10 ist mittig in dem ersten Ventilelement 10 angeordnet. Das heißt, das erste Ventilelement 10 und das zweite Ventilelement 20 sind konzentrisch um diese Achse 41 angeordnet. Somit sind das erste Ventilelement 10 und das zweite Ventilelement 20 konzentrisch zueinander angeordnet.

Es ist aber auch denkbar, dass die Achse 41 außermittig, d.h. nicht im Zentrum des zweiten Ventilelements 20, angeordnet ist. Dann wäre zwar das erste Ventilelement 10 weiterhin konzentrisch zu der Achse 41 angeordnet.

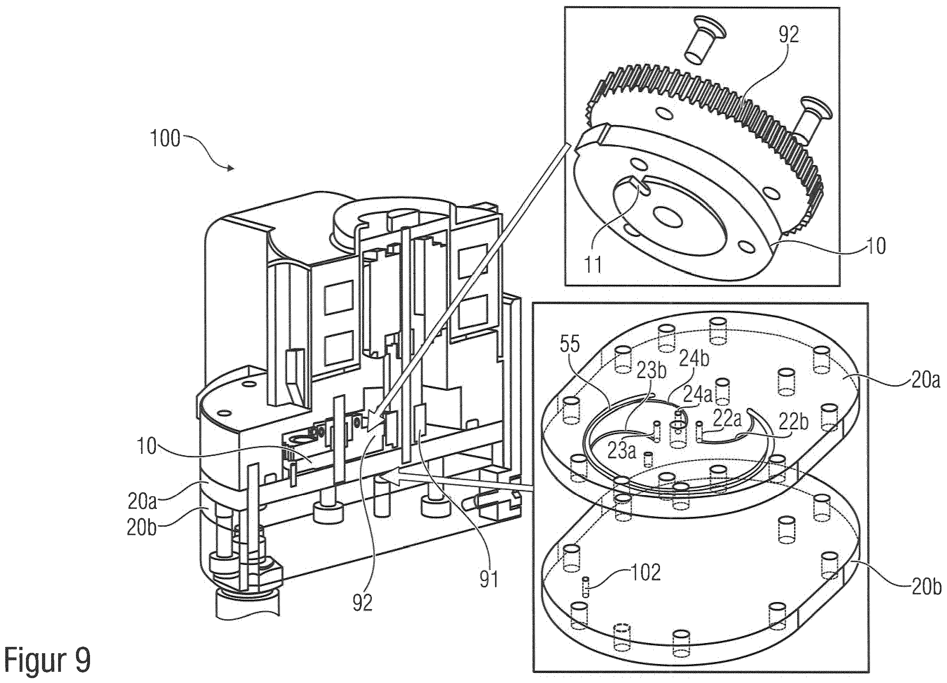

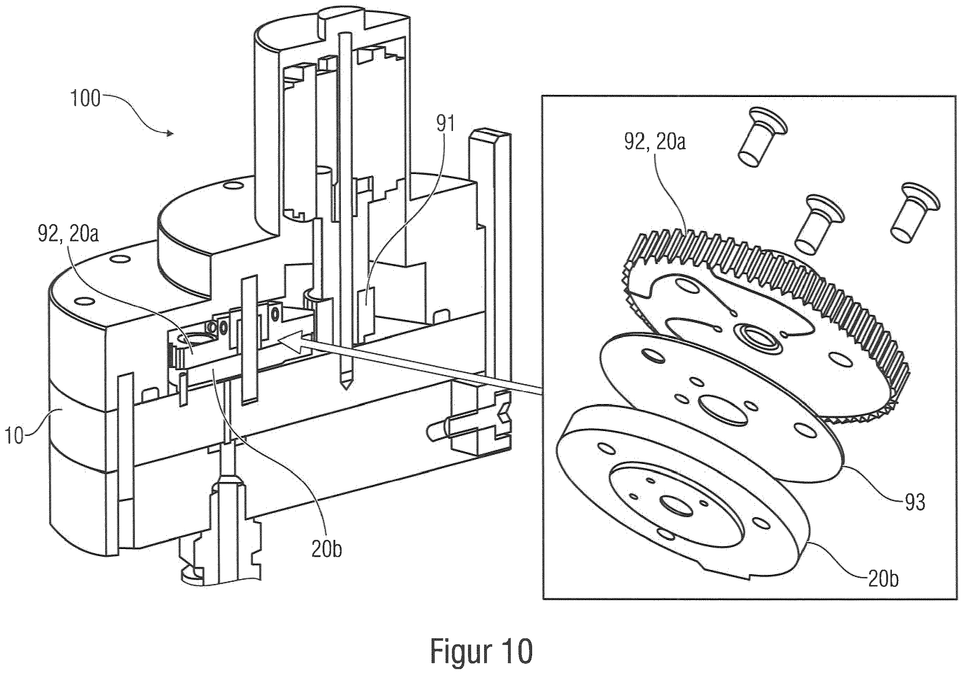

Das erste Ventilelement 10 und das zweite Ventilelement 20 wären dann jedoch nicht mehr konzentrisch, sondern exzentrisch, zueinander angeordnet. Eine solche Anordnung ist beispielsweise in den Figuren 9 und 10 gezeigt, die später noch eingehender beschrieben werden.

Es wäre auch denkbar, dass die Aufnahme 42 in dem ersten Ventilelement 10 außermittig, d.h. nicht im Zentrum des ersten Ventilelements 10, angeordnet ist. Dann wäre das erste Ventilelement 10 nicht konzentrisch sondern exzentrisch zu der Achse 41 angeordnet.

In dem in Figur 1A abgebildeten Ausführungsbeispiel ist eine dem zweiten Ventilelement 20 zugewandte Unterseitenfläche 27 der Abdeckung 30 mit einer Oberfläche 28 des zweiten Ventilelements 20 gekoppelt, z.B. verklebt. In diesem Fall ist also die Abdeckung 30 auf dem zweiten Ventilelement 20 angeordnet. Das zweite Ventilelement 20 kann sozusagen zusammen mit der Abdeckung 30 ein Gehäuse, insbesondere ein fluiddichtes Gehäuse, bilden.

Es wäre aber ebenso denkbar, dass eine Innenwand 26 der Abdeckung 30 mit einer lateral umlaufenden Außenwand 29a, 29b des zweiten Ventilelements 20 gekoppelt ist. In diesem Fall würde das zweite Ventilelement 20 innerhalb der Ausnehmung 31 der Abdeckung 30 Platz finden. Das zweite Ventilelement 20 kann auch in diesem Fall zusammen mit der Abdeckung 30 ein Gehäuse, insbesondere ein fluiddichtes Gehäuse, bilden. Vorzugsweise wäre dann noch ein zusätzlicher (hier nicht abgebildeter) Deckel mit der Unterseitenfläche 27 der Abdeckung 30 gekoppelt.

In der Abdeckung 30 kann beispielsweise der Fluideinlass 101 angeordnet sein. Alternativ oder zusätzlich zu dem Fluideinlass 101 in der Abdeckung 30 kann in dem zweiten Ventilelement 20, und/oder in dem nicht dargestellten Deckel, ein Fluideinlass 101' vorgesehen sein. In Figur 1A ist dieser optionale Fluideinlass 101' mit Strichlinien angedeutet. Der Fluideinlass 101 kann auch seitlich in der Abdeckung 30 angeordnet sein. Es sollte jedoch mindestens ein Fluideinlass vorhanden sein, der es ermöglicht, das Fluid in die Ausnehmung 31 der Abdeckung 30 einzuleiten, um das Fluid zu den Kanalstrukturen der beiden Ventilelemente 10, 20 zu leiten.

Wenn die Abdeckung 30 mit dem zweiten Ventilelement 20 verbunden ist, bildet die Ausnehmung 31 der Abdeckung 30 eine Fluidkammer 32 (Figur 1B) aus. Das Fluid kann somit also durch den Fluideinlass 101 in die durch die Ausnehmung der Abdeckung 30 gebildete Fluidkammer 32 einströmen. Mittels dieser Abdeckung 30 kann somit gewährleistet werden, dass das Fluid in die Kanalstrukturen 11, 22a, 22b, 23a, 23b geleitet wird.

In diesem Ausführungsbeispiel ist außerdem zu erkennen, dass das erste Ventilelement 10 vor dem zweiten Ventilelement 20 angeordnet ist, bezogen auf die Strömungsrichtung des Fluids von dem Fluideinlass 101 zu dem Fluidauslass 102. Somit strömt das Fluid zunächst in die in dem ersten Ventilelement 10 ausgebildete erste Kanalstruktur 11 und von dort aus dann, je nach Schaltstellung des Expansionsventils 100, in zumindest eine der in dem zweiten Ventilelement 20 angeordneten Kanalstrukturen 22a, 22b, 23a, 23b.

In den Figuren 2A und 2B ist ein weiteres Ausführungsbeispiel eines erfindungsgemäßen Expansionsventils 100 abgebildet.

Hier weist das Expansionsventil 100 ebenfalls eine Abdeckung 30 auf, jedoch mit dem Unterschied, dass die Abdeckung 30 hier unbeweglich mit dem ersten Ventilelement 10 verbunden ist und das zweite Ventilelement 20 innerhalb der Abdeckung 30 relativ zu dem ersten Ventilelement 10 bewegbar angeordnet ist.

Hierfür ist eine Achse 41 drehfest an dem ersten Ventilelement 10 und/oder dem Gehäuse 30 angeordnet. Das zweite Ventilelement 20 ist ebenfalls zweiteilig ausgebildet, wobei der erste Teil 20b und der zweite Teil 20a jeweils mittels einer entsprechenden Aufnahme 42 beweglich, insbesondere drehbar, an dieser Achse 41 gelagert sind.

Wie in Figur 2A zu sehen ist, ist die Achse 41 mittig, d.h. im Zentrum des ersten Ventilelements 10, angeordnet. Auch die Aufnahme 42 des zweiten Ventilelements 20 ist mittig in dem zweiten Ventilelement 20 angeordnet. Das heißt, das erste Ventilelement 10 und das zweite Ventilelement 20 sind konzentrisch um diese Achse 41 angeordnet. Somit sind das erste Ventilelement 10 und das zweite Ventilelement 20 konzentrisch zueinander angeordnet.

Es ist aber auch denkbar, dass die Achse 41 außermittig, d.h. nicht im Zentrum des ersten Ventilelements 10, angeordnet ist. Dann wäre zwar das zweite Ventilelement 20 weiterhin konzentrisch zu der Achse 41 angeordnet. Das erste Ventilelement 10 und das zweite Ventilelement 20 wären dann jedoch nicht mehr konzentrisch, sondern exzentrisch, zueinander angeordnet.

Es wäre auch denkbar, dass die Aufnahme 42 in dem zweiten Ventilelement 20 außermittig, d.h. nicht im Zentrum des zweiten Ventilelements 20, angeordnet ist. Dann wäre das zweite Ventilelement 20 nicht konzentrisch sondern exzentrisch zu der Achse 41 angeordnet.

Im Gegensatz zur ersten Ausführungsform (Figuren 1A bis 1D) ist das zweite Ventilelement 20 hier vor dem ersten Ventilelement 10 angeordnet, bezogen auf die Strömungsrichtung des Fluids von dem Fluideinlass 101 zu dem Fluidauslass 102.

Wie zuvor erwähnt, ist das zweite Ventilelement 20 zweiteilig ausgebildet, wobei ein erster Teil 20b des zweiten Ventilelements 20 die zweite und dritte Kanalstruktur 22a, 22b; 23a, 23b aufweist, und ein zweiter Teil 20a des zweiten Ventilelements 20 eine geschlossene Abdeckung der zweiten und dritten Kanalstrukturen 22a, 22b; 23a, 23b bildet. Die Kanalstrukturen 22a, 22b; 23a, 23b und insbesondere die radial verlaufenden Abschnitte 22b, 23b können dabei auch als Drosselkanalstrukturen bezeichnet werden.

Ferner bildet in dieser Ausführungsform die erste Kanalstruktur 11 gleichzeitig den Fluidauslass 102 des Expansionsventils 100.

Figur 2B zeigt ein zusammengesetztes Expansionsventil 100 und den sich durch das Expansionsventil 100 hindurch ergebenden Fluidströmungspfad 112. Das Fluid tritt durch den Fluideinlass 101 in das Expansionsventil 100 ein, strömt dann durch die in dem zweiten Ventilelement 20 ausgebildeten Kanalstrukturen 22a, 22b, 23a, 23b und tritt dann durch den Fluidauslass 101, der von der in dem ersten Ventilelement 10 ausgebildeten ersten Kanalstruktur 11 gebildet wird, wieder aus dem Expansionsventil 100 aus.

In dem in Figur 2B abgebildeten Ausführungsbeispiel befindet sich das Expansionsventil 100 in einer ersten Schaltstellung. Genauer gesagt befinden sich die beiden Ventilelemente 10, 20 in einer ersten Stellung relativ zueinander, wobei in dieser ersten Stellung die erste Kanalstruktur 11 und die zweite Kanalstruktur 22a, 22b zueinander ausgerichtet sind und einen ersten Fluidströmungspfad 112 mit einem ersten Strömungswiderstand zwischen dem Fluideinlass 101 und dem Fluidauslass 102 bilden.

In einer zweiten Schaltstellung, die hier nicht explizit dargestellt ist, wäre das zweite Ventilelement 20 im Gegensatz zu der in Figur 2B abgebildeten ersten Schaltstellung beispielsweise um 180° gedreht. In diesem Fall würden die erste Kanalstruktur 11 und die dritte Kanalstruktur 23a, 23b zueinander ausgerichtet sein und einen zweiten Fluidströmungspfad mit einem zweiten von dem ersten Strömungswiderstand verschiedenen Strömungswiderstand zwischen dem Fluideinlass 101 und dem Fluidauslass 102 bilden.

Mit Ausnahme der soeben beschrieben strukturellen Unterschiede des in den Figuren 2A und 2B abgebildeten Ausführungsbeispiels gilt für diese Ausführungsform ansonsten dasselbe wie für die zuvor mit Bezug auf die Figuren 1A bis 1D beschriebenen Ausführungsbeispiele.

Daher soll nachfolgend für alle in den Figuren 1A bis 2B dargestellten Ausführungsformen die gemeinsame Funktionsweise näher erläutert werden. Sowohl bei dem Expansionsventil 100 gemäß der ersten Ausführungsform (Figuren 1A bis 1D) als auch bei dem Expansionsventil 100 gemäß der zweiten Ausführungsform (Figuren 2A, 2B) handelt es sich um eine Verschaltung der Kanalstrukturen, die im Folgenden auch als Individualschaltung bezeichnet werden kann.

Diese Individualschaltung zeichnet sich unter anderem dadurch aus, dass in der ersten und zweiten Stellung der Ventilelemente 10, 20 jeweils genau eine der zweiten und dritten Kanalstrukturen 22a, 22b; 23a, 23b des zweiten Ventilelements 20 mit dem Fluidauslass 102 fluidisch gekoppelt ist, um einen einzigen Fluidströmungspfad 111, 112 zwischen dem Fluideinlass 101 und dem Fluidauslass 102 zu bilden.

Das heißt, es ist immer genau eine der zweiten und dritten Kanalstrukturen 22a, 22b; 23a, 23b des zweiten Ventilelements 20 zu der in dem ersten Ventilelement 10 ausgebildeten ersten Kanalstruktur 11 ausgerichtet.

Zur näheren Erläuterung soll hierfür nochmals auf Figur 1A verwiesen werden. Wie eingangs erwähnt, kann das zweite Ventilelement 20 neben der zweiten und dritten Kanalstruktur 22a, 22b, 23a, 23b auch noch weitere Kanalstrukturen 24a, 24b, 25a, 25b aufweisen. Das erste Ventilelement 10 hingegen weist lediglich eine Kanalstruktur, nämlich die erste Kanalstruktur 11, auf.

Die beiden Ventilelemente 10, 20 werden, z.B. mittels eines zuvor erwähnten Schrittmotors, relativ zueinander bewegt, und zwar derart, dass die erste Kanalstruktur 11 des ersten Ventilelements 10 immer nur zu einer einzigen Kanalstruktur 22a, 22b, 23a, 23b, 24a, 24b, 25a, 25b des zweiten Ventilelements 20 ausgerichtet ist.

Die einzelnen Kanalstrukturen 22a, 22b, 23a, 23b, 24a, 24b, 25a, 25b des zweiten Ventilelements 20 weisen unterschiedliche Strömungsquerschnitte auf. Darüber hinaus münden alle Kanalstrukturen 22a, 22b, 23a, 23b, 24a, 24b, 25a, 25b, bzw. zumindest deren sich radial erstreckenden Abschnitte 22b, 23b, 24b, 25b in eine gemeinsame Kanalstruktur 55.

Somit ergibt sich die Drosselung der Durchflussrate zum einen durch die individuelle Länge und den individuellen, nicht notwendigerweise über die Kanallänge gleichbleibenden bzw. geometrisch variablen, Strömungsquerschnitt jeder einzelnen Kanalstruktur 22a, 22b, 23a, 23b, 24a, 24b, 25a, 25b, und zum anderen durch die Länge und den Strömungsquerschnitt der gemeinsamen Kanalstruktur 55. Es bilden sich somit kanalindividuelle Fluidströmungspfade mit individuellen Drosselraten aus.

Je länger der vom Fluid zurückgelegte Fluidströmungspfad ist, desto mehr spielt ein weiteres Kriterium eine entscheidende Rolle bei der Bestimmung der individuellen Drosselrate. Das durch eine Kanalstruktur hindurch strömende Fluid erfährt an der Oberfläche der Wände der jeweiligen Kanalstruktur eine Reibung, die das Fluid zusätzlich abbremst. Die einzelnen Kanalstrukturen können daher erfindungsgemäß mit einer bestimmten Oberflächenrauigkeit versehen werden. In Versuchen hat sich gezeigt, dass mit dem Einstellen der Oberflächenrauigkeit Unterschiede in der Drosselrate von bis zu 10% erkennbar waren, im Vergleich zu fluidisch glatten Oberflächenbeschaffenheiten der Kanalstrukturen.

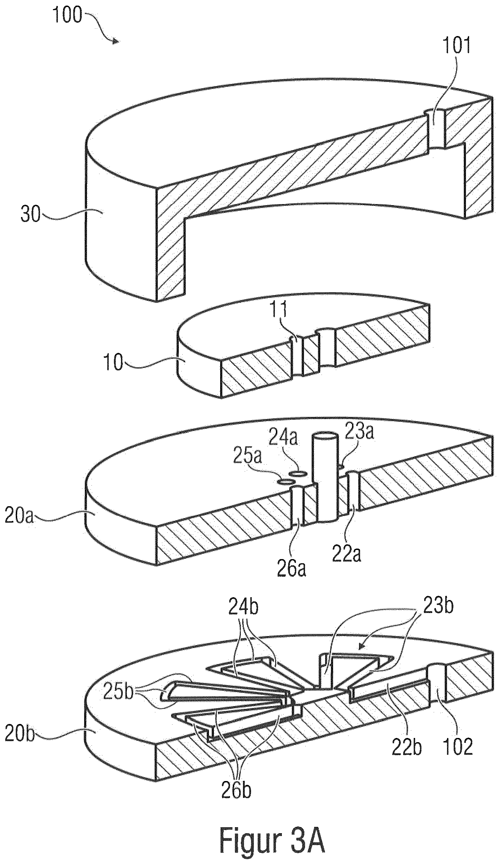

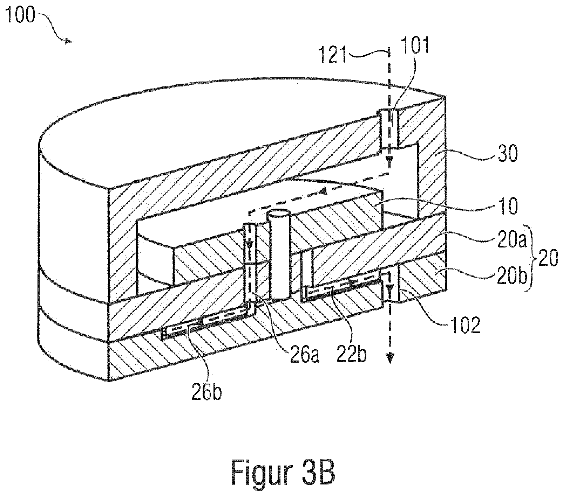

Neben dieser soeben beschriebenen Individualschaltung sehen weitere Ausführungsbeispiele eine Reihenschaltung und/oder eine Parallelschaltung der Kanalstrukturen vor. Eine Reihenschaltung der Kanalstrukturen der ersten Ausführungsform (Figuren 1A bis 1D) soll nachfolgend mit Bezug auf die Figur 3A und 3B beschrieben werden.

Die Reihenschaltung kennzeichnet sich unter anderem dadurch, dass die zweite Kanalstruktur 22a, 22b und die dritte Kanalstruktur 23a, 23b innerhalb des zweiten Ventilelements 20 zumindest abschnittsweise 22b, 23b miteinander verbunden sind, das heißt zumindest die Drosselkanalstrukturen 22b, 23b der jeweiligen Kanalstrukturen 22a, 22b; 23a, 23b sind miteinander verbunden, wobei sich in der zweiten Stellung der Ventilelemente 10, 20 der zweite Fluidströmungspfad aus der zweiten und der damit verbundenen dritten Kanalstruktur 22b, 23b, und insbesondere aus den jeweiligen Drosselkanalstrukturen 22b, 23b zusammensetzt, und der zweite Fluidströmungspfad einen Gesamtströmungswiderstand aufweist, der sich aus dem Strömungswiderstand der zweiten Kanalstruktur bzw. Drosselkanalstruktur 22b und dem Strömungswiderstand der damit verbundenen dritten Kanalstruktur bzw. Drosselkanalstruktur 23b zusammensetzt.

Auch hier ist das zweite Ventilelement 20 wieder zweiteilig ausgebildet. In dem ersten Teil 20b sind mehrere, hier beispielhaft insgesamt fünf, verschiedene Kanalstrukturen bzw. Drosselkanalstrukturen 22b, 23b, 24b, 25b, 26b ausgebildet. Die einzelnen Kanalstrukturen bzw. Drosselkanalstrukturen 22b, 23b, 24b, 25b, 26b sind alle untereinander fluidisch verbunden, sodass diese eine lange Kette bzw. eine Reihenschaltung von mehreren Kanalstrukturen bzw. Drosselkanalstrukturen bilden.

Das Expansionsventil 100 weist jedoch nur einen gemeinsamen Fluidauslass 102 auf, der mit der ersten bzw. letzten Kanalstruktur bzw. Drosselkanalstruktur 22b aus der Reihenschaltung verbunden ist. Je nachdem in welcher Kanalstruktur bzw. Drosselkanalstruktur 22b, 23b, 24b, 25b, 26b das Fluid letztlich eintritt, muss das Fluid unterschiedlich lange Wege bis zum Fluidauslass 102 durchlaufen.

Der Gesamtströmungswiderstand setzt sich hierbei aus den einzelnen Strömungswiderständen der jeweils durchlaufenen Kanalstrukturen zusammen. Dabei können die einzelnen Kanalstrukturen, und insbesondere die Drosselkanalstrukturen 22b, 23b, 24b, 25b, 26b außerdem unterschiedliche, nicht notwendigerweise über die Kanallänge gleichbleibende bzw. geometrisch variable, Strömungsquerschnitte aufweisen.

In dem zweiten Teil 20a des zweiten Ventilelements 20 sind entsprechend viele, hier also ebenfalls fünf, Kanalstrukturen 22a, 23a, 24a, 25a, 26a ausgebildet, die zu den in dem ersten Teil 20b des zweiten Ventilelements 20 ausgebildeten Kanalstrukturen bzw. Drosselkanalstrukturen 22b, 23b, 24b, 25b, 26b ausgerichtet sind.

Das erste Ventilelement 10 ist drehbar gegenüber dem zweiten Ventilelement 20 und weist die erste Kanalstruktur 11 auf. Die erste Kanalstruktur 11 kann nun in verschiedenen Schaltstufen wahlweise zu einer der in dem zweiten Ventilelement 20 ausgebildeten Kanalstrukturen 22a, 22b, 23a, 23b, 24a, 24b, 25a, 25b, 26a, 26b ausgerichtet werden. Je nach ausgewählter Schaltstufe bildet sich ein unterschiedlich langer Fluidströmungspfad aus, den das durchströmende Fluid zurücklegen muss, um zu dem Fluidauslass 102 zu gelangen.

Eine dieser mehreren möglichen Schaltstellungen ist beispielhaft in Figur 3B zu sehen. Hier ist das erste Ventilelement 10 gegenüber dem zweiten Ventilelement 20 derart ausgerichtet, dass die erste Kanalstruktur 11 zu der sechsten Kanalstruktur 26a, 26b ausgerichtet ist.

Der sich dabei ergebende Fluidströmungspfad ist mit dem strichlinierten Pfeil 121 eingezeichnet. Das Fluid tritt also durch den Fluideinlass 101 in das Expansionsventil 100 ein, strömt dann durch die erste Kanalstruktur 11, die zu der sechsten Kanalstruktur 26a, 26b ausgerichtet ist, durch alle weiteren Kanalstrukturen bzw. Drosselkanalstrukturen 25b, 24b, 23b hindurch, um dann nach Durchströmen der ersten Kanalstruktur bzw. Drosselkanalstruktur 22b in den Fluidauslass 102 zu münden.

Das Fluid mäandert sich sozusagen durch die gesamte Reihenschaltung von Kanalstrukturen hindurch und wird dabei entsprechend gedrosselt.

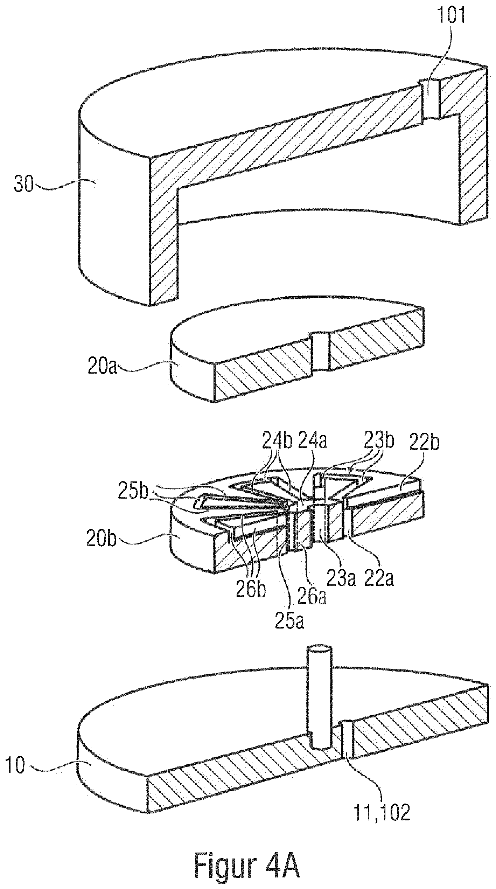

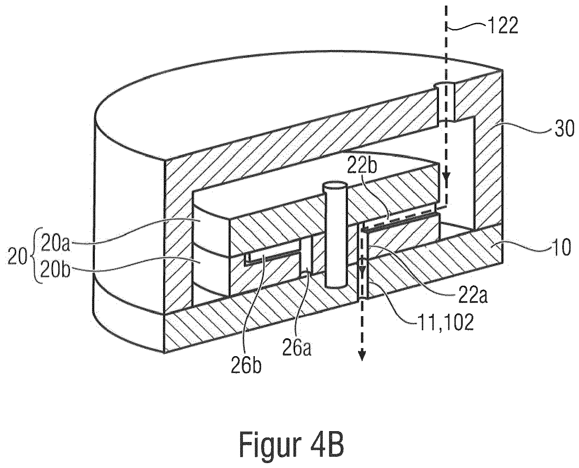

Eine Reihenschaltung der zweiten Ausführungsform (Figuren 2A und 2B) soll nachfolgend mit Bezug auf die Figuren 4A und 4B beschrieben werden.

Auch diese Reihenschaltung kennzeichnet sich unter anderem dadurch, dass die zweite Kanalstruktur 22a, 22b und die dritte Kanalstruktur 23a, 23b innerhalb des zweiten Ventilelements 20 zumindest abschnittsweise 22b, 23b miteinander verbunden sind, das heißt zumindest die Drosselkanalstrukturen 22b, 23b sind miteinander verbunden, wobei sich in der zweiten Stellung der Ventilelemente 10, 20 der zweite Fluidströmungspfad aus der zweiten und der damit verbundenen dritten Kanalstruktur, und insbesondere Drosselkanalstruktur 22b, 23b zusammensetzt, und der zweite Fluidströmungspfad einen Gesamtströmungswiderstand aufweist, der sich aus dem Strömungswiderstand der zweiten Kanalstruktur, und insbesondere der Drosselkanalstruktur 22b und dem Strömungswiderstand der damit verbundenen dritten Kanalstruktur, und insbesondere der Drosselkanalstruktur 23b zusammensetzt.

Auch hier ist das zweite Ventilelement 20 wieder zweiteilig ausgebildet. In dem ersten Teil 20b sind mehrere, hier beispielhaft insgesamt fünf, verschiedene Kanalstrukturen 22a, 22b, 23a, 23b, 24a, 24b, 25a, 25b, 26a, 26b ausgebildet. Die einzelnen Kanalstrukturen 22a, 22b, 23a, 23b, 24a, 24b, 25a, 25b, 26a, 26b, beziehungsweise die als Drosselkanalstrukturen bezeichneten Abschnitte 22b, 23b, 24b, 25b, 26b, sind alle untereinander fluidisch verbunden, sodass diese eine lange Kette bzw. eine Reihenschaltung von mehreren Kanalstrukturen bilden.

Im Gegensatz zu der zuvor beschriebenen Reihenschaltung ist hier jedoch zu beachten, dass jede Kanalstruktur einen auch als Drosselkanalstruktur bezeichneten radialen Abschnitt 22b, 23b, 24b, 25b, 26b sowie einen axialen Abschnitt 22a, 23a, 24a, 25a, 26a aufweist. In der in Figur 4A abgebildeten Schnittansicht sind lediglich die axialen Abschnitte 22a und 26a der zweiten bzw. sechsten Kanalstruktur zu erkennen. Die axialen Abschnitte 23a, 24a, 25a der übrigen Kanalstrukturen sind in dieser Schnittansicht verdeckt und daher lediglich mit Strichlinien angedeutet.

Das Expansionsventil 100 weist wiederum nur einen gemeinsamen Fluidauslass 102 auf, der gleichzeitig auch die erste Kanalstruktur 11 des ersten Ventilelements 10 bildet.

Das zweite Ventilelement 20 ist drehbar gegenüber dem ersten Ventilelement 10 und kann nun wahlweise in verschiedene Schaltstufen gedreht werden, wobei in jeder Schaltstufe eine andere der Kanalstrukturen 22a, 22b, 23a, 23b, 24a, 24b, 25a, 25b, 26a, 26b des zweiten Ventilelements 20 zu der ersten Kanalstruktur 11 des ersten Ventilelements 10 ausgerichtet wird. Genauer gesagt wird, je nach Schaltstufe, ein axialer Abschnitt 22a, 23a, 24a, 25a, 26a der jeweiligen Kanalstruktur des zweiten Ventilelements 20 zu der ersten Kanalstruktur 11 des ersten Ventilelements 10 ausgerichtet.

Das Fluid tritt hierbei immer durch den radialen Abschnitt bzw. Drosselkanalstruktur 22b der zweiten Kanalstruktur 22 in das zweite Ventilelement 20 ein. Je nachdem welche Schaltstellung ausgewählt ist, muss das Fluid die entsprechenden weiteren Kanalstrukturen 23a, 23b, 24a, 24b, 25a, 25b, 26a, 26b zusätzlich zur zweiten Kanalstruktur 22a, 22b durchlaufen. Das Fluid muss also unterschiedlich lange Wege bis zum Fluidauslass 102 durchlaufen. Je nach ausgewählter Schaltstufe bildet sich also ein unterschiedlich langer Fluidströmungspfad aus, den das durchströmende Fluid zurücklegen muss, um zu dem Fluidauslass 102 zu gelangen.

Der Gesamtströmungswiderstand setzt sich hierbei aus den einzelnen Strömungswiderständen der jeweils durchlaufenen Kanalstrukturen zusammen. Dabei können die einzelnen Kanalstrukturen 22a, 22b, 23a, 23b, 24a, 24b, 25a, 25b, 26a, 26b außerdem unterschiedliche, nicht notwendigerweise über die Kanallänge gleichbleibende bzw. geometrisch variable, Strömungsquerschnitte aufweisen.

Eine dieser mehreren möglichen Schaltstellungen ist beispielhaft in Figur 4B zu sehen. Hier ist das zweite Ventilelement 11 gegenüber dem ersten Ventilelement 10 derart angeordnet, dass die zweite Kanalstruktur 22a, 22b zu der ersten Kanalstruktur 11 ausgerichtet ist.

Der sich dabei ergebende Fluidströmungspfad ist mit dem strichlinierten Pfeil 122 eingezeichnet. Dabei strömt das Fluid durch den radialen Abschnitt bzw. die Drosselkanalstruktur 22b der zweiten Kanalstruktur in das zweite Ventilelement 20 hinein und strömt durch den axialen Abschnitt 22a der zweiten Kanalstruktur 20 zu der ersten Kanalstruktur 11, die gleichzeitig der Fluidauslass 102 ist.

In einer, nicht explizit dargestellten, weiteren Schaltstellung wäre das zweite Ventilelement 20 beispielsweise um 180° gegenüber der in Figur 4B abgebildeten Schaltstellung gedreht. In diesem Fall würde der axiale Abschnitt 26a der sechsten Kanalstruktur zu der ersten Kanalstruktur 11 (= Fluidauslass 102) ausgerichtet sein. Das Fluid würde dann durch den radialen Abschnitt bzw. die Drosselkanalstruktur 22b der zweiten Kanalstruktur in das zweite Ventilelement 20 eintreten und dann entlang aller weiteren in Reihe geschalteter Kanalstrukturen 23a, 23b, 24a, 24b, 25a, 25b, 26a, 26b strömen, um schließlich durch den axialen Abschnitt 26a der sechsten Kanalstruktur in die erste Kanalstruktur 11 (= Fluidauslass 102) zu münden.

Das Fluid mäandert sich sozusagen durch die gesamte Reihenschaltung von Kanalstrukturen hindurch und wird dabei entsprechend gedrosselt.

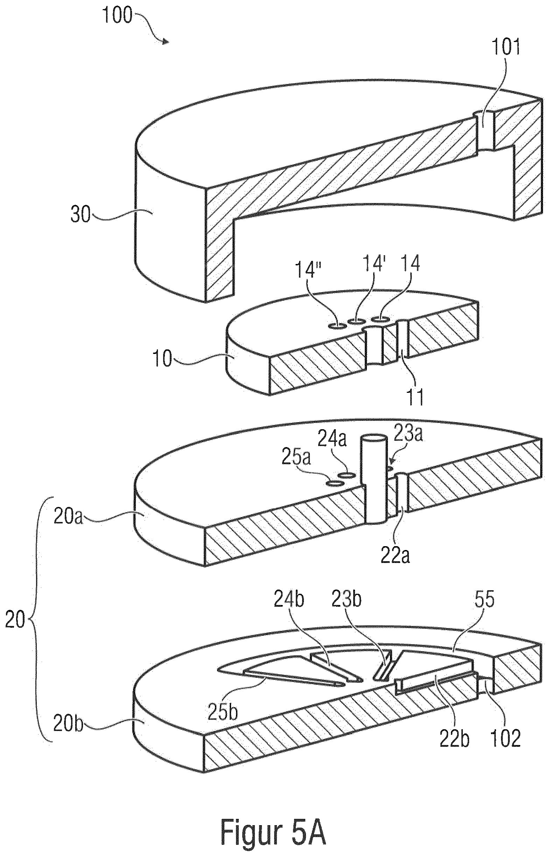

Alternativ oder zusätzlich kann mit dem erfindungsgemäßen Expansionsventil 100 auch eine Parallelschaltung der Kanalstrukturen realisiert werden, wie dies in den Figuren 5A bis 6B exemplarisch gezeigt ist.

Die Parallelschaltung zeichnet sich unter anderem dadurch aus, dass das erste Ventilelement 10 mindestens eine vierte Kanalstruktur 14 aufweist, und wobei in der ersten Stellung der Ventilelemente 10, 20 zusätzlich die dritte Kanalstruktur 23a, 23b des zweiten Ventilelements 20 und die vierte Kanalstruktur 14 des ersten Ventilelements 10 zueinander ausgerichtet sind und einen dritten Fluidströmungspfad mit einem dritten Strömungswiderstand zwischen dem Fluideinlass 101 und dem Fluidauslass 102 bilden. Der Betrag des dritten Strömungswiderstands kann von dem Betrag des ersten und/oder zweiten Strömungswiderstands abweichen. Das heißt, der dritte Fluidströmungspfad kann eine dritte Drosselstufe bereitstellen.

Das heißt, in der ersten Schaltstellung sind also die erste Kanalstruktur 11 des ersten Ventilelements 10 und die zweite Kanalstruktur 22a, 22b des zweiten Ventilelements 20 zueinander ausgerichtet, und gleichzeitig sind die zweite Kanalstruktur 14 des ersten Ventilelements 10 und die dritte Kanalstruktur 23a, 23b des zweiten Ventilelements 20 zueinander ausgerichtet.

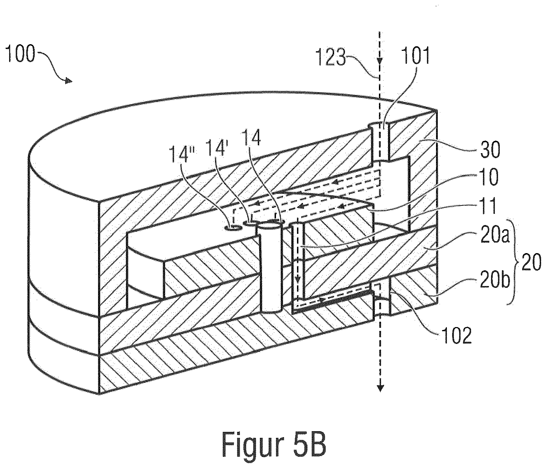

Eine Parallelschaltung der ersten Ausführungsform (Figuren 1A bis 1D) soll nachfolgend mit Bezug auf die Figuren 5A und 5B beschrieben werden.

In dem hier abgebildeten Ausführungsbeispiel weist das erste Ventilelement 10 mindestens eine weitere Kanalstruktur 14 auf. Das erste Ventilelement 10 weist hier sogar drei weitere Kanalstrukturen, nämlich eine siebte Kanalstruktur 14, eine achte Kanalstruktur 14' und eine neunte Kanalstruktur 14" auf.

Das zweite Ventilelement 20 entspricht im Wesentlichen der mit Bezug auf die Figuren 1A bis 1D beschriebenen Ausführungsform. Die in dem zweiten Ventilelement 20 ausgebildeten Kanalstrukturen, nämlich eine zweite Kanalstruktur 22a, 22b, eine dritte Kanalstruktur 23a, 23b, eine vierte Kanalstruktur 24a, 24b und eine fünfte Kanalstruktur 25a, 25b, münden in eine gemeinsame Kanalstruktur 55, die zu dem gemeinsamen Fluidauslass 102 führt.

Die einzelnen Kanalstrukturen 11, 14, 14', 14" des ersten Ventilelements 10 können zu den Kanalstrukturen, und insbesondere zu den axialen Abschnitten 22a, 23a, 24a, 25a, der Kanalstrukturen in dem zweiten Ventilelement 20 ausgerichtet werden. So werden unterschiedliche Schaltstellungen ermöglicht, wobei je nach Schaltstellung eine unterschiedliche Anzahl der vier Kanalstrukturen 11, 14, 14', 14" des ersten Ventilelements 10 zu den vier Kanalstrukturen 22a, 23a, 24a, 25a des zweiten Ventilelements 20 ausgerichtet sind.

Figur 5B zeigt beispielhaft eine Schaltstellung, in der alle vier Kanalstrukturen 11, 14, 14', 14" des ersten Ventilelements 10 zu den vier Kanalstrukturen 22a, 23a, 24a, 25a des zweiten Ventilelements 20 ausgerichtet sind. Der sich dabei ergebende Fluidfluss ist mit dem Pfeil 123 eingezeichnet.

Das Fluid strömt also durch alle vier Kanalstrukturen 11, 14, 14', 14" des ersten Ventilelements 10, sowie durch alle dazu ausgerichteten vier Kanalstrukturen 22a, 23a, 24a, 25a des zweiten Ventilelements 20. Hierbei handelt es sich sozusagen um die größte Schaltstufe, bei der alle Kanalstrukturen gleichzeitig aktiv sind. Dementsprechend kann die Durchflussrate des Fluids bei dieser Schaltstellung am größten sein, da das Fluid durch alle Kanalstrukturen gleichzeitig strömen kann.

Der Gesamtströmungswiderstand setzt sich hierbei jedoch auch wieder aus den einzelnen Flusswiderständen der jeweils durchlaufenen Kanalstrukturen zusammen. Dabei können die einzelnen Kanalstrukturen 22a, 22b, 23a, 23b, 24a, 24b, 25a, 25b, 26a, 26b außerdem unterschiedliche, nicht notwendigerweise über die Kanallänge gleichbleibende bzw. geometrisch variable, Strömungsquerschnitte aufweisen.

Eine Stoppfunktion könnte hier beispielsweise durch Drehung des ersten Ventilelements 10 um 180° im Vergleich zu der in Figur 5B gezeigten Schaltstellung erreicht werden. Dabei würde keine der Kanalstrukturen 11, 14, 14', 14" des ersten Ventilelements 10 zu irgend einer der Kanalstrukturen 22a, 22b, 23a, 23b, 24a, 24b, 25a, 25b, 26a, 26b des zweiten Ventilelements 20 ausgerichtet sein.

All den bisher beschriebenen Ausführungsformen ist gemein, dass das Expansionsventil 100 genau einen Fluidauslass 102 aufweist und die zweite und dritte Kanalstruktur 22a, 22b; 23a, 23b des zweiten Ventilelements 20 mit diesem einen Fluidauslass 102 fluidisch koppelbar sind. Auch wenn nicht explizit in den Figuren dargestellt, wäre es jedoch auch möglich, dass die erfindungsgemäßen Expansionsventile 100 nicht genau einen, sondern mindestens einen Fluidauslass 102 aufweisen, d.h. die Expansionsventile 100 können auch einen zweiten, dritten, oder beliebig viele Fluidauslässe 102 aufweisen.

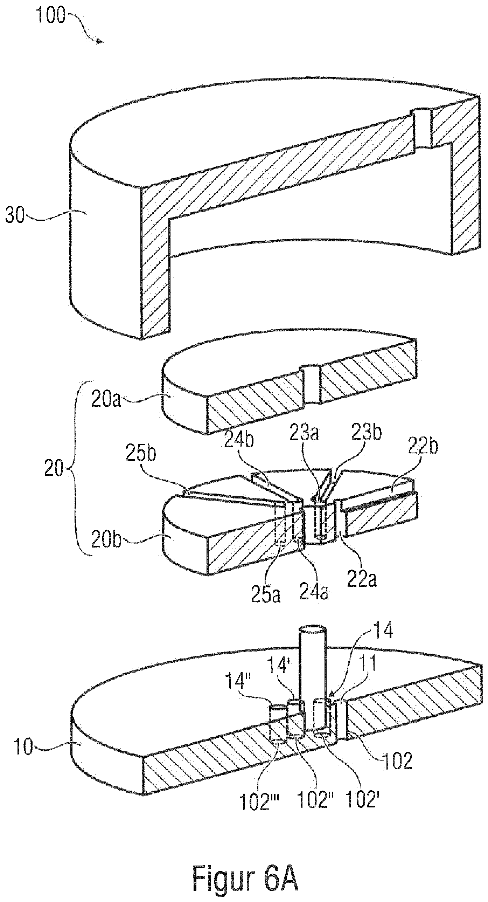

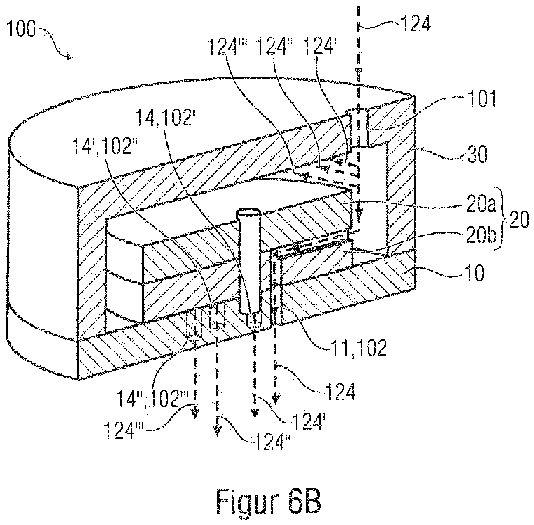

Ein solcher Fall ist exemplarisch in der in den Figuren 6A und 6B abgebildeten Parallelschaltung der zweiten Ausführungsform (Figuren 2A und 2B) dargestellt, wobei das erste Ventilelement 10 mindestens eine vierte Kanalstruktur 14 aufweist und die erste und die vierte Kanalstruktur 11, 14 jeweils einen Fluidauslass 102, 102' des Expansionsventils 100 bilden.

In dem hier abgebildeten Ausführungsbeispiel weist das erste Ventilelement 10 mindestens eine weitere Kanalstruktur 14 auf. Das erste Ventilelement 10 weist hier sogar drei weitere Kanalstrukturen, nämlich eine siebte Kanalstruktur 14, eine achte Kanalstruktur 14' und eine neunte Kanalstruktur 14" auf.

Das zweite Ventilelement 20 entspricht im Wesentlichen der mit Bezug auf die Figuren 2A und 2B beschriebenen Ausführungsform. Die in dem zweiten Ventilelement 20 ausgebildeten Kanalstrukturen, nämlich eine zweite Kanalstruktur 22a, 22b, eine dritte Kanalstruktur 23a, 23b, eine vierte Kanalstruktur 24a, 24b und eine fünfte Kanalstruktur 25a, 25b, weisen einen sich radial erstreckenden und auch als Drosselkanalstruktur bezeichneten Abschnitt 22b, 23b, 24b, 25b auf, durch den das Fluid in das zweite Ventilelement 20 einströmen kann, sowie einen axialen Abschnitt 22a, 23a, 24a, 25a, der zu mindestens einer der in dem ersten Ventilelement 10 angeordneten Kanalstrukturen 11, 14, 14', 14" ausgerichtet werden kann.

So werden unterschiedliche Schaltstellungen ermöglicht, wobei je nach Schaltstellung eine unterschiedliche Anzahl der vier Kanalstrukturen 22a, 23a, 24a, 25a des zweiten Ventilelements 20 zu den vier Kanalstrukturen 11, 14, 14', 14" des ersten Ventilelements 10 ausgerichtet sind.

Figur 6B zeigt das Expansionsventil 100 beispielhaft in der in Figur 6A besser sichtbaren Schaltstellung, in der alle vier Kanalstrukturen 22a, 23a, 24a, 25a des zweiten Ventilelements 20 zu den vier Kanalstrukturen 11, 14, 14', 14" des ersten Ventilelements 10 ausgerichtet sind. Der sich dabei ergebende Fluidfluss ist mit den Pfeilen 124, 124', 124", 124''' eingezeichnet. Das Fluid verlässt das Expansionsventil 100 durch alle freigeschalteten Fluidauslässe 11, 14, 14', 14", was wiederum mit den den Fluidfluss kennzeichnenden Pfeilen 124', 124", 124''' dargestellt ist.

Genauer gesagt strömt das Fluid zunächst durch den Fluideinlass 101 in das Expansionsventil 100 hinein. Es verteilt sich dann auf alle vier Kanalstrukturen 22a, 22b, 23a, 23b, 24a, 24b, 25a, 25b in dem zweiten Ventilelement 20, was mit den Pfeilen 124, 124', 124", 124''' dargestellt ist. Das heißt, ein erster Teil 124 des Fluidstroms tritt bei der ersten Kanalstruktur 22a, 22b ein, ein zweiter Teil 124' des Fluidstroms tritt bei der zweiten Kanalstruktur 23a, 23b ein, ein dritter Teil 124" des Fluidstroms tritt bei der dritten Kanalstruktur 24a, 24b ein, und ein vierter Teil 124''' des Fluidstroms tritt bei der vierten Kanalstruktur 25a, 25b ein.

Das Fluid strömt also durch alle vier Drosselkanalstrukturen bzw. radiale Abschnitte 22b, 23b, 24b, 25b der vier Kanalstrukturen des zweiten Ventilelements 20 in das zweite Ventilelement 20 hinein. Dann strömt das Fluid in die axialen Abschnitte 22a, 23a, 24a, 25a der Kanalstrukturen des zweiten Ventilelements 20, die in der abgebildeten Schaltstellung alle zu jeweils einer Kanalstruktur 11, 14, 14', 14" des ersten Ventilelements 10 ausgerichtet sind. Das Fluid verlässt das Expansionsventil 100 durch die jeweiligen Kanalstrukturen 11, 14, 14', 14" des ersten Ventilelements 10, da diese gleichzeitig die mehreren Fluidauslässe 102, 102', 102", 102''' des Expansionsventils bilden.

Bei der in Figur 6B abgebildeten Schaltstufe handelt es sich sozusagen um die größte Schaltstufe, bei der alle Kanalstrukturen gleichzeitig aktiv sind. Dementsprechend kann die Durchflussrate des Fluids bei dieser Schaltstellung am größten sein, da das Fluid durch alle Kanalstrukturen gleichzeitig strömen kann.

Der Gesamtströmungswiderstand setzt sich hierbei auch wieder aus den einzelnen Strömungswiderständen der jeweils durchströmten Kanalstrukturen zusammen. Dabei können die einzelnen Kanalstrukturen 22a, 22b, 23a, 23b, 24a, 24b, 25a, 25b, 26a, 26b außerdem unterschiedliche, nicht notwendigerweise über die Kanallänge gleichbleibende bzw. geometrisch variable, Strömungsquerschnitte aufweisen.

Eine Stoppfunktion könnte hier beispielsweise durch Drehung des zweiten Ventilelements 20 um 180° im Vergleich zu der in Figur 6A gezeigten Schaltstellung erreicht werden. Dabei würde keine der Kanalstrukturen 22a, 22b, 23a, 23b, 24a, 24b, 25a, 25b, 26a, 26b des zweiten Ventilelements 20 zu irgend einer der Kanalstrukturen 11, 14, 14', 14"des ersten Ventilelements 10 ausgerichtet sein.

Erfindungsgemäß sind bei dem hier vorgeschlagenen Expansionsventil 100 die einzelnen Stellungen der Ventilelemente 10, 20 zueinander in diskreten Stufen schaltbar.

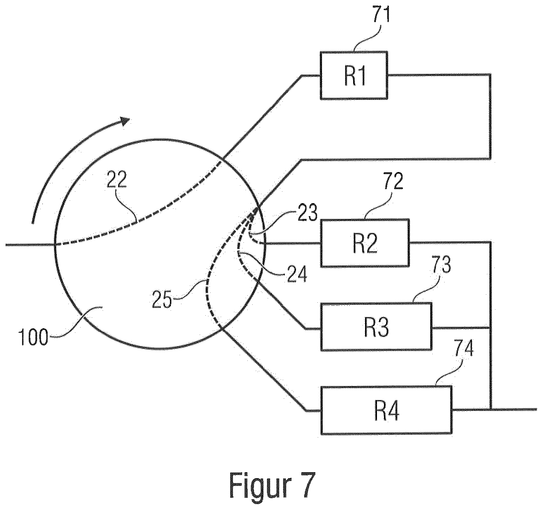

Das Expansionsventil 100 könnte prinzipiell auch eine Kombination einer Parallelschaltung mit einer Reihenschaltung aufweisen. Ein solcher Fall ist beispielhaft in Form eines schematischen Blockdiagramms in Figur 7 gezeigt.

Der durch das Expansionsventil 100 verlaufende Fluidstrom führt zunächst durch eine Kanalstruktur 22 mit einem ersten Strömungswiderstand 71 und anschließend in eine Parallelschaltung von Kanalstrukturen 23, 24, 25 mit einem zweiten Strömungswiderstand 72, einem dritten Strömungswiderstand 73 und einem vierten Strömungswiderstand 74. Die Strömungswiderstände 71, 72, 73, 74 können gleich groß oder unterschiedlich sein. Die Kanalstruktur 22 ist mit der Parallelschaltung der Kanalstrukturen 23, 24, 25 in Reihe geschalten. Der Gesamtströmungswiderstand setzt sich hierbei auch wieder aus den einzelnen Strömungswiderständen der jeweils durchströmten Kanalstrukturen 22, 23, 24, 25 zusammen.

Das Expansionsventil 100 kann aus unterschiedlichen Materialien hergestellt sein, d.h. das Expansionsventil 100 kann beispielsweise Metall, Kunststoff, Glas oder Keramik aufweisen. Die einzelnen Teile, d.h. das erste Ventilelement 10, das zweite Ventilelement 20 und die Abdeckung 30 können miteinander verschraubt, verklemmt, verklebt oder verschweißt sein.

Die Kanalstrukturen, und hierbei insbesondere die als Drosselkanalstrukturen bezeichneten radial verlaufenden Kanalstrukturen 22b, 23b, 24b, 25b, 26b können Mikrokanalstrukturen sein. Diese Mikrokanalstrukturen können Strömungsquerschnitte im Bereich von Quadratmillimetern oder Quadratmikrometern aufweisen. Die Mikrokanalstrukturen können beispielsweise mittels Präzisionsfräsen in das jeweilige Ventilelement 10, 20 eingebracht werden oder mittels Spritzguss oder Prägen erzeugt werden. Es ist auch denkbar, dass die Mikrokanalstrukturen unter Anwendung von Ätzprozessen in das jeweilige Ventilelement 10, 20 eingebracht werden, zum Beispiel wenn das jeweilige Ventilelement 10, 20 Silizium oder andere auf Ätzmittel reaktive Materialien enthält.

Das erfindungsgemäße Expansionsventil 100 kann beispielsweise in einem Kältekreislauf zwischen zwei Wärmeübertragern anordenbar sein. Derartige Wärmeübertrager können beispielsweise sogenannte Verdampfer oder Verflüssiger sein. Das Expansionsventil kann beispielsweise zwischen einem solchen Verdampfer und einem Verflüssiger angeordnet sein. Das Expansionsventil 100 kann aber auch zwischen mindestens zwei Verdampfern angeordnet sein, denen mindestens ein Verflüssiger nachgeschaltet ist.

Außerdem ist ein Haushaltskältegerät, insbesondere ein Kühl- und/oder Gefriergerät, mit einem erfindungsgemäßen Expansionsventil 100 denkbar. Hierbei sind vorzugsweise Kühl- und/oder Gefriergeräte mit einer Kälteleistung von weniger als 1000 Watt gemeint. Beispielsweise kann es sich hierbei um Kühlschränke, Gefrierschränke, oder um Kühl-Gefrierkombinationen handeln.

Prinzipiell kann das erfindungsgemäße Expansionsventil 100 in jeder Art von Kältemaschine, insbesondere in Kompressionskältemaschinen, einsetzbar sein. Vorzugsweise ist das Expansionsventil 100 aber in Kältemaschinen mit Massenströmen kleiner 3 kg/h einsetzbar.

Das erfindungsgemäße Expansionsventil 100 kann außerdem Mittel zum Binden von Feuchtigkeit aufweisen. Als ein solches Mittel zum Binden von Feuchtigkeit kann beispielsweise Zeolith eingesetzt werden. Vorzugsweise wird das Zeolith in Form von Schüttgut oder als Sintermaterial eingesetzt.

Die Mittel zum Binden von Feuchtigkeit können beispielsweise in Fluidströmungsrichtung vor dem Fluideinlass 101 angeordnet werden. Vorzugsweise werden die Mittel zum Binden von Feuchtigkeit zwischen dem Fluideinlass 101 und dem ersten bzw. zweiten Ventilelement 10, 20 angeordnet. Die Mittel zum Binden von Feuchtigkeit können beispielsweise in der Ausnehmung 31 der Abdeckung 30 angeordnet sein.

Die Mittel zum Binden von Feuchtigkeit können aber auch in einem oder mehreren der Kanalstrukturen 11, 14, 22, 23, 24, 25, 26 des ersten und/oder zweiten Ventilelements 10, 20 angeordnet werden, insbesondere dann, wenn die Mittel zum Binden von Feuchtigkeit in Form von losem Schüttgut vorliegen.

Die Mittel zum Binden von Feuchtigkeit sind vorteilhaft, um eventuell vorhandene Feuchtigkeit im Kältemittel zu binden und so eine ungewollte Eisbildung an anderer Stelle im Kältekreislauf zu verhindern.

Des Weiteren kann das erfindungsgemäße Expansionsventil 100 mindestens einen Partikelfilter aufweisen.

Der Partikelfilter ist vorteilhaft in Strömungsrichtung nach dem Mittel zum Binden von Feuchtigkeit angeordnet. Vorzugsweise filtert der Partikelfilter Partikel, die von dem Mittel zum Binden von Feuchtigkeit stammen, also beispielsweise Zeolithpartikel.

Zum Zurückhalten eines Partikels, das sich in dem durch das Expansionsventil 100 hindurchströmenden Fluid befinden kann, kann das erfindungsgemäße Expansionsventil 100 gemäß eines weiteren Aspekts der Erfindung beispielsweise ein Rückhalteelement aufweisen.

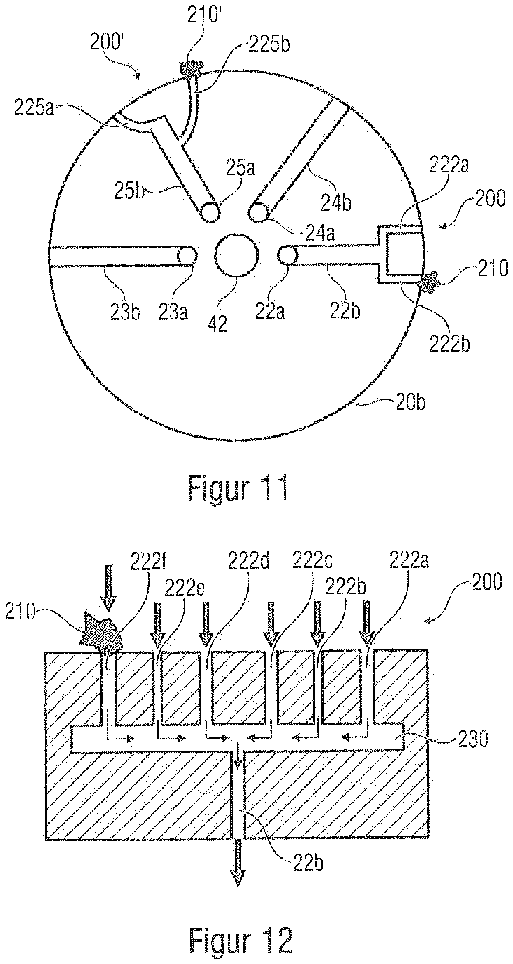

Ein soeben erwähnter Partikelfilter ist eines von mehreren Beispielen eines solchen Rückhalteelements. Wie derartige Rückhalteelemente zur Verwendung an einem erfindungsgemäßen Expansionsventil 100 aussehen können, soll anhand der nachfolgenden Ausführungsbeispiele unter Bezugnahme auf die Figuren 11 bis 21d näher beschrieben werden.

Ein Rückhalteelement kann dabei generell stets entlang eines durch das Expansionsventil 100 hindurchströmenden Fluidströmungspfads an beliebiger Stelle in oder an dem Expansionsventil 100 angeordnet sein. Auch mehrere Rückhalteelemente sind denkbar. Es können mehrere Rückhalteelemente vorgesehen sein, wobei mindestens ein Rückhalteelement pro Drosselkanalstruktur vorgesehen sein kann. Alternativ oder zusätzlich kann ein zentrales Rückhalteelement vorgesehen sein, mit dem zumindest zwei Drosselkanalstrukturen fluidisch gekoppelt sind. Einige Ausführungsbeispiele hierfür sollen nun nachfolgend unter Bezugnahme auf die Figuren näher beschrieben werden.

Nachfolgend werden zunächst Ausführungsbeispiele eines Rückhalteelements beschrieben, das mindestens zwei Filterkanalstrukturen aufweist. Die Filterkanalstrukturen können beispielsweise in dem ersten Ventilelement 10 ausgebildet sein. Alternativ oder zusätzlich können die Filterkanalstrukturen in dem zweiten Ventilelement 20, beziehungsweise zumindest in einem Teil 20a, 20b des zweiteiligen zweiten Ventilelements 20, ausgebildet sein.

Lediglich zur Vereinfachung der Beschreibung der Kanalstrukturen, wie zum Beispiel die nachfolgend beschriebenen Filterkanalstrukturen, Drosselkanalstrukturen und Sammelkanalstrukturen, wird für die hierin beschriebenen Ausführungsbeispiele angenommen, dass die Kanalstrukturen, und insbesondere die Filterkanalstrukturen 222 und/oder die Drosselkanalstrukturen 21b bis 27b in dem in Figur 2A abgebildeten ersten Teil 20b des zweiteiligen zweiten Ventilelements 20 ausgebildet sind. Die folgenden Figuren 11 und 13 bis 17 zeigen also eine Draufsicht auf den in Figur 2A abgebildeten ersten Teil 20b des zweiteiligen zweiten Ventilelements 20. Alternativ oder zusätzlich ist es jedoch natürlich auch generell vorstellbar, dass die Filterkanalstrukturen 222 und/oder die Drosselkanalstrukturen 21b bis 27b in dem zweiten Teil 20a des zweiten Ventilelements 20 und/oder in dem ersten Ventilelement 10 ausgebildet sind. Außerdem können alle nachfolgend beschriebenen Kanalstrukturen, insbesondere die Filterkanalstrukturen 222 und die Drosselkanalstrukturen 21b bis 27b, auch in Form einer Drosselbohrung ausgestaltet sein. Dies gilt insbesondere für eine mögliche Ausführungsform der nachfolgend beschriebenen Drosselkanalstruktur 26b, 27b mit dem größten Querschnitt aller Drosselkanalstrukturen, die eine Freifluss- bzw. "Offen"-Funktion bereitstellen kann. Eine solche Drosselbohrung kann beispielsweise als eine sich durch den ersten Teil 20b und/oder den zweiten Teil 20a des zweiten Ventilelements 20 und/oder durch das erste Ventilelement 10 hindurch erstreckende axiale Bohrung ausgeführt sein. Die axiale Richtung 33 bezieht sich hierbei bei den nachfolgend beispielhaft beschriebenen drehbaren Ventilelementen 10, 20 auf die Drehachse.

So zeigt beispielsweise Figur 11 eine Draufsicht auf den in Figur 2A abgebildeten ersten Teil 20b des zweiteiligen zweiten Ventilelements 20. Es sind die einzelnen Kanalstrukturen 22a, 22b; 23a, 23b; 24a, 24b; 25a, 25b zu erkennen, die entlang der dem Betrachter zugewandten Oberseite des ersten Teils 20b des zweiteiligen zweiten Ventilelements 20 ausgebildet sind.

Da das (hier nicht abgebildete) erste Ventilelement 10 eine erste Kanalstruktur 11 aufweist, werden die in dem ersten Teil 20b des zweiten Ventilelements 20 ausgebildeten Kanalstrukturen als eine zweite Kanalstruktur 22a, 22b, eine dritte Kanalstruktur 23a, 23b, eine vierte Kanalstruktur 24a, 24b und eine fünfte Kanalstruktur 25a, 25b bezeichnet. Wie bereits weiter oben beschrieben wurde, können die Kanalstrukturen in diesem Ausführungsbeispiel jeweils einen axial verlaufenden Abschnitt 22a, 23a, 24a, 25a sowie einen radial verlaufenden Abschnitt 22b, 23b, 24b, 25b aufweisen. Die radialen Abschnitte 22b, 23, 24b, 25b tragen den Hauptanteil zur Drosselung eines durch die Kanalstrukturen hindurchströmenden Fluids bei. Deshalb werden die radialen Abschnitte auch als Drosselkanalstrukturen 22b, 23b, 24b, 25b bezeichnet.

Die Drosselkanalstrukturen 22b, 23b, 24b, 25b können, zum Beispiel aufgrund unterschiedlicher Querschnitte, unterschiedliche Strömungswiderstände aufweisen.

Gemäß einer Ausführungsform der Erfindung kann somit also die zweite Kanalstruktur 22a, 22b eine erste Drosselkanalstruktur 22b mit einem bestimmten Querschnitt mit beliebig geometrischer Form, z.B. dreieckig, viereckig, polygonförmig, trapezförmig, rund, halbrund, etc. aufweisen, und die dritte Kanalstruktur 23a, 23b kann eine zweite Drosselkanalstruktur 23b aufweisen, die ebenfalls einen bestimmten Querschnitt mit beliebiger Form aufweist.

Der Querschnitt der ersten Drosselkanalstruktur 22b kann gleich sein wie der Querschnitt der zweiten Drosselkanalstruktur 23b. Alternativ können die jeweiligen Querschnitte der ersten Drosselkanalstruktur 22b und der zweiten Drosselkanalstruktur 23b aber auch voneinander abweichen.

Die Drosselkanalstrukturen 22b, 23b können unterschiedliche Strömungswiderstände aufweisen. Der Strömungswiderstand kann sich beispielsweise aus einer Länge der durchströmten Drosselkanalstruktur 22b, 23b, dem nicht notwendigerweise entlang der Kanallänge einheitlichen Querschnitt der durchströmten Drosselkanalstruktur 22b, 23b, einer Änderung des durchströmten Querschnitts oder des Kanalverlaufs, einer geometrischen Querschnittsform, einer Rauigkeit der Oberfläche der Wandungen der durchströmten Drosselkanalstruktur 22b, 23b, oder aus einer Kombination dieser Parameter ergeben. Die unterschiedlichen Strömungswiderstände drosseln den Durchfluss des Fluids unterschiedlich stark. Die Drosselwirkung kann mittels einer Variation der vorgenannten Parameter eingestellt werden.

Außerdem weist das erfindungsgemäße Expansionsventil, beziehungsweise in diesem Ausführungsbeispiel das in Figur 11 abgebildete zweite Ventilelement 20, mindestens ein Rückhalteelement 200 auf, das ausgebildet ist, um ein in dem durch das Expansionsventil 100 hindurchströmenden Fluid befindliches Partikel 210 zurückzuhalten.

In dem in Figur 11 abgebildeten Ausführungsbeispiel sind, der Anschaulichkeit halber und somit lediglich exemplarisch, sogar zwei Rückhalteelemente 200, 200' vorgesehen. Ein erstes Rückhalteelement 200 ist im Bereich der ersten Drosselkanalstruktur 22b angeordnet. Ein zweites Rückhalteelement 200' ist im Bereich der vierten Drosselkanalstruktur 25b angeordnet. Erfindungsgemäß ist jedoch ein Rückhalteelement 200 bereits ausreichend.

Jedes der beiden hier abgebildeten Rückhalteelemente 200, 200' weist mindestens zwei Filterkanalstrukturen 222a, 222b; 225a, 225b auf, die jeweils mit zumindest einer Drosselkanalstruktur 22b, 25b fluidisch gekoppelt sind. Hierbei ist das erste Rückhalteelement 200 mit der ersten Drosselkanalstruktur 22b, und das zweite Rückhalteelement 200' mit der vierten Drosselkanalstruktur 25b verbunden und fluidisch gekoppelt.

Die Filterkanalstrukturen 222a, 222b; 225a, 225b können beispielsweise auf dieselbe Art und Weise in das zweite Ventilelement 20 eingebracht werden wie die Drosselkanalstrukturen 22b, 23b, 24b, 25b, also beispielsweise mittels Fräsen, Laserschneiden und dergleichen.

Die Filterkanalstrukturen 222a, 222b des ersten Rückhalteelements 200 sind mit der ersten Drosselkanalstruktur 22b fluidisch gekoppelt. Das heißt, dass ein Fluidaustausch zwischen den jeweiligen Kanalstrukturen 222a, 222b; 22b möglich ist.

Die Filterkanalstrukturen 225a, 225b des zweiten Rückhalteelements 200' sind mit der vierten Drosselkanalstruktur 25b fluidisch gekoppelt. Das heißt, dass ein Fluidaustausch zwischen den jeweiligen Kanalstrukturen 225a, 225b; 25b möglich ist.

Die Filterkanalstrukturen 222a, 222b; 225a, 225b sind außerdem bis an den Rand des ersten Teils 20b des zweiten Ventilelements 20 geführt und stellen dort einen Fluideinlass bereit. Das heißt, Fluid kann dort in die jeweiligen Filterkanalstrukturen 222a, 222b; 225a, 225b einströmen. Das eingeströmte Fluid fließt dann entlang der jeweiligen Filterkanalstruktur 222a, 222b; 225a, 225b bis in die jeweils fluidisch damit gekoppelte jeweilige Drosselkanalstruktur 22b, 25b.

Die Filterkanalstrukturen 222a, 222b; 225a, 225b sind ausgebildet, um ein Partikel 210 zurückzuhalten. In dem in Figur 11 gezeigten Ausführungsbeispiel verstopft ein Partikel 210 eine der beiden mit der ersten Drosselkanalstruktur 22b fluidisch gekoppelten Filterkanalstrukturen 222a, 222b des ersten Rückhalteelements 200. Außerdem verstopft ein Partikel 210' eine der beiden mit der vierten Drosselkanalstruktur 25b fluidisch gekoppelten Filterkanalstrukturen 225a, 225b des zweiten Rückhalteelements 200'.

Eine solche Situation ist in Figur 12 vergrößert dargestellt. Figur 12 zeigt schematisch ein Rückhalteelement 200 mit sechs Filterkanalstrukturen 222a bis 222f, die alle fluidisch mit der Drosselkanalstruktur 22b gekoppelt sind. In diesem Ausführungsbeispiel sind außerdem die Filterkanalstrukturen 222a bis 222f in Fluidströmungsrichtung vor der Drosselkanalstruktur 22b angeordnet. Somit können die Filterkanalstrukturen 222a bis 222f ein Partikel 210 zurückhalten, bevor dieses Partikel 210 in die jeweilige Drosselkanalstruktur 22b eindringen und diese blockieren kann.

Die einzelnen Filterkanalstrukturen 222a bis 222f können alle denselben Querschnitt, oder wie abgebildet, voneinander unterschiedliche Querschnitte aufweisen.

Gemäß eines Ausführungsbeispiels der vorliegenden Erfindung ist der Querschnitt der Filterkanalstrukturen 222a bis 222f kleiner als oder gleich groß wie der Querschnitt der jeweils fluidisch damit gekoppelten Drosselkanalstruktur 22b. Somit können die Filterkanalstrukturen 222a bis 222f ein Partikel 210 zurückhalten, das groß genug wäre, um in die jeweilige Drosselkanalstruktur 22b einzudringen und diese zu blockieren.

Mit dem Querschnitt ist zumindest der Querschnitt der Fluideintrittsfläche in die jeweilige Kanalstruktur 22b; 222a, 222b gemeint. Das heißt der Querschnitt bzw. die Öffnung zu Beginn der Kanalstruktur 22b; 222a, 222b, durch die das Fluid in die jeweilige Kanalstruktur 22b; 222a, 222b eintritt.

Gemäß eines Ausführungsbeispiels kann zumindest eine Filterkanalstruktur 222a, 222b und zumindest eine Drosselkanalstruktur 22b jeweils einen eckigen Querschnitt aufweisen, und mindestens eine Seite der eckigen Filterkanalstruktur 222a, 222b kann dabei kleiner oder gleich groß sein als eine kürzeste Seite der eckigen Drosselkanalstruktur 22b.

Wenn also beispielsweise die Drosselkanalstruktur 22b einen eckigen Querschnitt mit einer Abmessung von 50 x 40 aufweist, dann könnte die Filterkanalstruktur 222a, 222b z.B. einen Querschnitt mit einer Abmessung von 40 x 40 aufweisen, um die oben beschriebene Rückhalte- bzw. Filterfunktion gewährleisten zu können. Die Filterkanalstruktur 222a, 222b könnte aber auch einen Querschnitt mit einer Abmessung von 100 x 30 aufweisen, um die oben beschriebene Rückhalte- bzw. Filterfunktion gewährleisten zu können. Wie beschrieben, mindestens eine Seite der eckigen Filterkanalstruktur 222a, 222b ist also kleiner oder gleich groß als eine kürzeste Seite der eckigen Drosselkanalstruktur 22b.

Gemäß einer weiteren denkbaren Ausführungsform könnten zumindest eine Filterkanalstruktur 222a, 222b und zumindest eine Drosselkanalstruktur 22b jeweils einen runden Querschnitt aufweisen, wobei der Querschnitt der runden Filterkanalstruktur 222a, 222b kleiner ist als der Querschnitt der runden Drosselkanalstruktur 22b, um die oben beschriebene Rückhalte- bzw. Filterfunktion gewährleisten zu können.

Wie außerdem in dem in Figur 12 abgebildeten Ausführungsbeispiel zu sehen ist, kann zwischen den Filterkanalstrukturen 222a bis 222f und der jeweils fluidisch damit gekoppelten Drosselkanalstruktur 22b eine Sammelkanalstruktur 230 angeordnet sein.

Diese Sammelkanalstruktur 230 kann jeweils mit den Filterkanalstrukturen 222a bis 222f und mit zumindest einer Drosselkanalstruktur 22b fluidisch gekoppelt sein, sodass ein durch zumindest eine Filterkanalstruktur 222a bis 222f einströmendes Fluid in der Sammelkanalstruktur 230 gesammelt und in die zumindest eine Drosselkanalstruktur 22b weitergeleitet wird.

Das Fluid strömt also in der dargestellten Pfeilrichtung in die Filterkanalstrukturen 222a bis 222f ein. Da alle Filterkanalstrukturen 222a bis 222f fluidisch mit der Sammelkanalstruktur 230 gekoppelt sind, fließt das Fluid anschließend weiter in diese Sammelkanalstruktur 230 hinein und wird dort gesammelt. Das in der Sammelkanalstruktur 230 angesammelte Fluid strömt dann ebenfalls in Pfeilrichtung weiter in die jeweilige, mit der Sammelkanalstruktur 230 fluidisch gekoppelte, Drosselkanalstruktur 22b.

Da die sechste Filterkanalstruktur 222f in Figur 12 durch ein Partikel 210 verstopft ist, strömt hier nur wenig bis gar kein Fluid hindurch, weshalb der die Fluidströmungsrichtung anzeigende Pfeil nur in Strichlinien dargestellt ist.

Das in den Figuren 11 und 12 abgebildete Rückhalteelement 200, 200' ist kanalindividuell anordenbar. Das heißt, jeweils eine Drosselkanalstruktur 22b, 23b kann hierbei mit je einem Rückhalteelement 200, 200' verbunden beziehungsweise fluidisch gekoppelt sein.

Es sind aber auch Ausführungsformen denkbar, bei denen ein zentrales Rückhalteelement 200 vorgesehen ist, das mit mehreren Drosselkanalstrukturen verbunden beziehungsweise fluidisch gekoppelt ist. Gemäß einer solchen Ausführungsform können beispielsweise mindestens zwei Drosselkanalstrukturen 22b, 23b unmittelbar an der Sammelkanalstruktur 230 angeordnet und mit der Sammelkanalstruktur 230 fluidisch gekoppelt sein.

Ein solches Ausführungsbeispiel ist in Figur 13 abgebildet. Hier ist ein Rückhalteelement 200 abgebildet, das mehrere Filterkanalstrukturen 222a bis 222j aufweist. Zwei oder mehr, und vorzugsweise alle, Filterkanalstrukturen 222a bis 222j sind fluidisch mit der Sammelkanalstruktur 230 gekoppelt.

Die Sammelkanalstruktur 230 wiederum ist mit mindestens zwei, und vorzugsweise allen, Drosselkanalstrukturen 22b, 23b, 24b, 25b, 26b fluidisch gekoppelt. Das Rückhalteelement 200 ist in Fluidströmungsrichtung vor den jeweiligen Drosselkanalstrukturen 22b, 23b, 24b, 25b, 26b angeordnet, um ein Partikel 210 daran zu hindern in das Ventilelement 20 einzudringen und die Drosselkanalstrukturen 22b, 23b, 24b, 25b, 26b zu verstopfen.

In Figur 13 ist außerdem zu erkennen, dass eine Drosselkanalstruktur 27b einen größeren Querschnitt aufweisen kann als die übrigen Drosselkanalstrukturen 22b, 23b, 24b, 25b, 26b. Die eine Drosselkanalstruktur 27b mit dem größten Querschnitt aller Drosselkanalstrukturen 22b, 23b, 24b, 25b, 26b ist hier nicht mit der Sammelkanalstruktur 230 fluidisch gekoppelt. Alternativ oder zusätzlich kann die Drosselkanalstruktur 27b auch durch eine Kanalstruktur in Ventilelement 20a realisiert werden, beispielsweise durch eine Bohrung, die durch Fortführung der Bohrung 27a durch Ventilelement 20a hindurch realisiert wird.

Der Grund hierfür beziehungsweise die damit realisierbaren Funktionen (z.B. Spülfunktion, Abtaufunktion) werden später näher erläutert.

Auf jeden Fall kann diese eine Drosselkanalstruktur 27b mit dem größten Querschnitt aller Drosselkanalstrukturen 22b, 23b, 24b, 25b, 26b eine eingangs erwähnte "Offen"-Funktion bereitstellen. Diese eine Drosselkanalstruktur 27b mit dem größten Querschnitt aller Drosselkanalstrukturen 22b, 23b, 24b, 25b, 26b weist hierbei nahezu keine Drosselung auf, d.h. das durchströmende Fluid kann nahezu ungehindert bzw. ungedrosselt durch diese eine Drosselkanalstruktur 27 hindurchströmen.

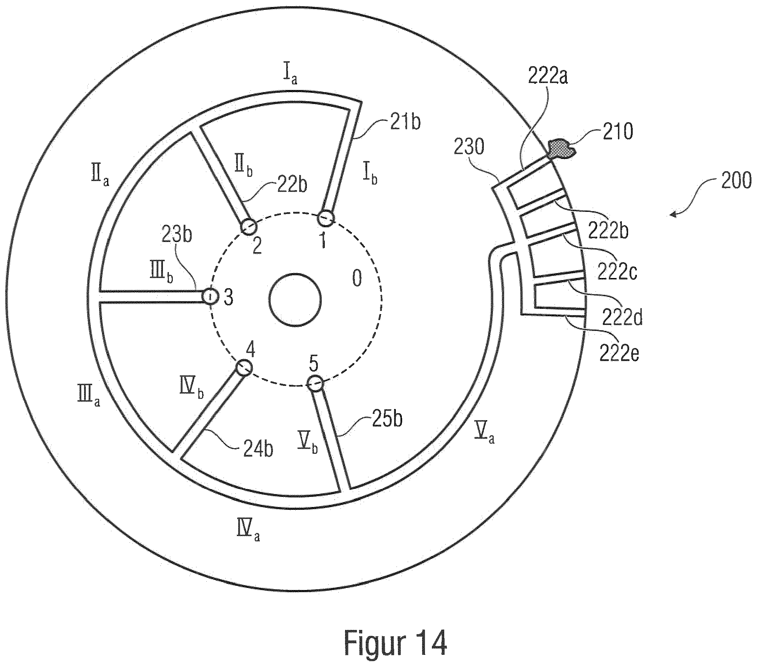

Ein weiteres Ausführungsbeispiel ist in Figur 14 gezeigt. Wie hier zu erkennen ist, kann zwischen zumindest einer Drosselkanalstruktur 25b ($V_b$) und der Sammelkanalstruktur 230 ein Verbindungskanalstruktursegment $V_a$ angeordnet sein, das diese zumindest eine Drosselkanalstruktur 25b ($V_b$) und die Sammelkanalstruktur 230 miteinander verbindet und fluidisch miteinander koppelt.

In diesem Ausführungsbeispiel ist also ebenfalls ein zentrales Rückhalteelement 200 vorgesehen, wobei das zentrale Rückhalteelement 200 mehrere Filterkanalstrukturen 222a bis 222e aufweist, die in eine Sammelkanalstruktur 230 münden.

Gemäß des in Figur 14 abgebildeten Ausführungsbeispiels ist außerdem mindestens eine zweite Drosselkanalstruktur 24b ($IV_b$) mit dem Verbindungskanalstruktursegment $V_a$ verbunden und fluidisch gekoppelt, und zwar mittels eines weiteren Kanalstruktursegments $IV_a$.

Das Verbindungskanalstruktursegment $V_a$, das die Sammelkanalstruktur 230 mit den einzelnen Drosselkanalstrukturen 21b bis 25b (I$_b$ bis V$_b$) verbindet kann gegebenenfalls eine Drosselung des hindurchströmenden Fluids bewirken. Auch die weiteren Kanalstruktursegmente I$_a$ bis IV$_a$ können gegebenenfalls eine Drosselung des hindurchströmenden Fluids bewirken

Auch bei diesem Ausführungsbeispiel kann es denkbar sein, dass diejenige Drosselkanalstruktur mit dem größten Querschnitt aller Drosselkanalstrukturen I$_b$ bis V$_b$ nicht mit der Sammelkanalstruktur 230 fluidisch gekoppelt ist.

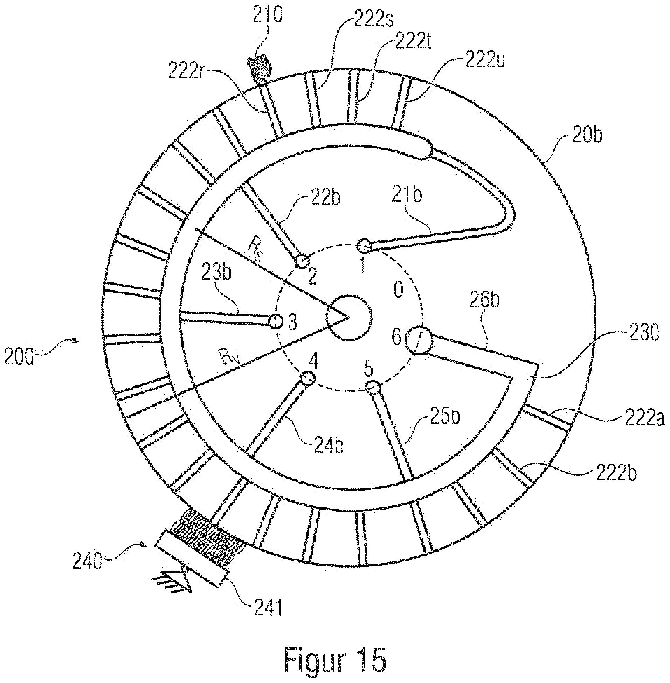

Ein hierzu alternatives Ausführungsbeispiel ist hingegen in Figur 15 gezeigt. Hier kann diejenige Drosselkanalstruktur 26b mit dem größten Querschnitt aller Drosselkanalstrukturen 22b, 23b, 24b, 25b, 26b nicht nur mit der Sammelkanalstruktur 230 fluidisch gekoppelt sein, sondern gleichzeitig auch die Sammelkanalstruktur 230 selbst bilden, wobei die Filterkanalstrukturen 222a bis 222u in diese Sammelkanalstruktur 230 münden.

Bei dieser Ausführungsform ist also die Sammelkanalstruktur 230 mit derjenigen Drosselkanalstruktur 26b mit dem größten Querschnitt aller Drosselkanalstrukturen 22b, 23b, 24b, 25b, 26b unmittelbar verbunden und fluidisch gekoppelt. Die Sammelkanalstruktur 230 und die Drosselkanalstruktur 26b können hierbei denselben Querschnitt aufweisen.

Erfindungsgemäß sind mindestens zwei Filterkanalstrukturen 222a, 222b und mindestens zwei Drosselkanalstrukturen 22b, 23b unmittelbar an der Drosselkanalstruktur 26b, die gleichzeitig auch die Sammelkanalstruktur 230 bildet, angeschlossen und fluidisch gekoppelt. Im vorliegenden Ausführungsbeispiel sind sogar alle Filterkanalstrukturen 222a bis 222u und alle Drosselkanalstrukturen 22b, 23b, 24b, 25b unmittelbar an der Drosselkanalstruktur 26b, die gleichzeitig auch die Sammelkanalstruktur 230 bildet, angeschlossen und fluidisch gekoppelt.

Wenn, wie gezeigt, ein Partikel 210 eine Filterkanalstruktur 222r verstopft, dann kann das Fluid durch alle anderen nicht verstopften Filterkanalstrukturen 222a bis 222u in die Drosselkanalstruktur 26b bzw. die Sammelkanalstruktur 230 einströmen und von dort aus zu der jeweiligen Drosselkanalstruktur 22b, 23b, 24b, 25b, 26b weiterströmen.

In den bisher beschriebenen Ausführungsbeispielen war die Sammelkanalstruktur 230 bogenförmig in dem zweiten Ventilelement 20 ausgebildet. Dabei weist die Sammelkanalstruktur 230, wie beispielsweise in Figur 15 gezeigt ist, einen Radius R$_S$ auf, der kleiner ist als der Radius R$_V$ des zweiten Ventilelements 20.

Außerdem können die fluidisch mit der Sammelkanalstruktur 230 gekoppelten Filterkanalstrukturen 222a bis 222u von der Sammelkanalstruktur 230 ausgehend radial nach außen verlaufend angeordnet sein, wie beispielsweise in den Figuren 13 und 15 abgebildet ist. Alternativ oder zusätzlich können die Filterkanalstrukturen 222a bis 222u von der Sammelkanalstruktur 230 ausgehend auch axial nach außen verlaufend angeordnet sein, zum Beispiel in Form von axialen Bohrungen, die in die Sammelkanalstruktur 230 münden.

Gleichzeitig können die Filterkanalstrukturen 222a bis 222u in dem zweiten Ventilelement 20 eine Öffnung zur Umgebung definieren, durch die das Fluid in die jeweilige Filterkanalstruktur 222a bis 222u einströmen kann. Von dort aus strömt das Fluid in die Sammelkanalstruktur 230 und von dort aus dann wiederum weiter in die jeweiligen Drosselkanalstrukturen 22b, 23b, 24b, 25b, 26b.

In den bisher beschriebenen Ausführungsbeispielen waren die Drosselkanalstrukturen 22b, bis 27b allesamt in Fluidströmungsrichtung nach den Filterkanalstrukturen 222a bis 222u angeordnet, d.h. das Fluid strömt zuerst in die Filterkanalstrukturen 222a bis 222u und anschließend in die Drosselkanalstrukturen 22b bis 27b.

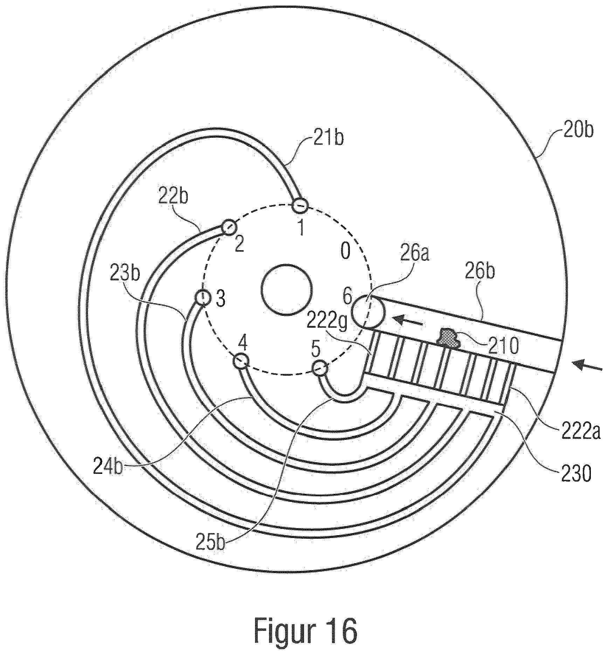

Figur 16 zeigt ein weiteres Ausführungsbeispiel, gemäß dem diejenige Drosselkanalstruktur 26b mit dem größten Querschnitt aller Drosselkanalstrukturen 22b, 23b, 24b, 25b, 26b mit den Filterkanalstrukturen 222a bis 222g verbunden und fluidisch gekoppelt ist, wobei diese eine Drosselkanalstruktur 26b in Fluidströmungsrichtung vor den Filterkanalstrukturen222a bis 222g angeordnet ist. Alternativ oder zusätzlich können die Filterkanalstrukturen 222a bis 222g auch mit einer Kanalstruktur in Ventilelement 20a fluidisch gekoppelt sein, beispielsweise einer Bohrung, die durch Fortführung der Bohrung 26a durch Ventilelement 20a hindurch realisiert wird.

Das heißt, das Fluid strömt zuerst in die Drosselkanalstruktur 26b mit dem größten Querschnitt ein, bevor das Fluid dann zu den Filterkanalstrukturen 222a bis 222g strömt und von dort aus zu den einzelnen übrigen Drosselkanalstrukturen 21b, 22b, 23b, 24b, 25b weiterströmt.

Dies hat den Vorteil, dass ein Partikel 210, das eine oder mehrere der Filterkanalstrukturen 222a bis 222g verstopft, direkt von dem Fluidstrom innerhalb der Drosselkanalstruktur 26b mit dem größten Durchmesser mitgerissen und somit von der blockierten Filterkanalstruktur 222a bis 222g weggespült werden kann.

Dabei wird ein weggespültes Partikel 210 durch die fluidausgangsseitig angeordnete, z.B. axial verlaufende, Kanalstruktur 26a zu dem Fluidauslass 102 und somit aus dem Expansionsventil 100 herausbefördert.

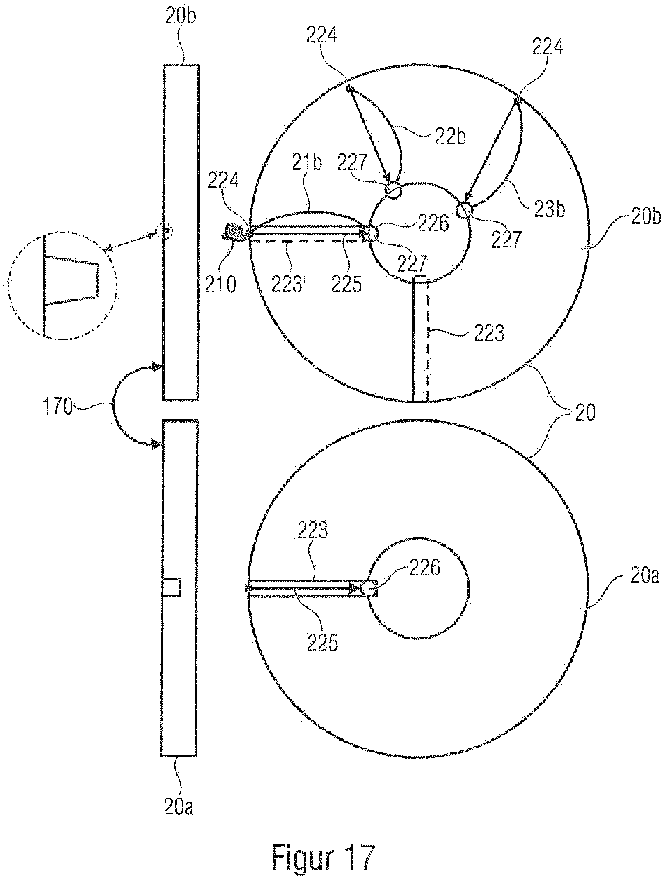

Figur 17 zeigt ein weiteres Ausführungsbeispiel eines erfindungsgemäßen Expansionsventils 100. In der Abbildung oben rechts ist in Draufsicht schematisch der erste Teil 20b des zweiteiligen zweiten Ventilelements 20 abgebildet. In der Abbildung oben links ist eine Seitenansicht des ersten Teils 20b des zweiteiligen zweiten Ventilelements 20 zu sehen. In der Abbildung unten rechts ist in Draufsicht schematisch der zweite Teil 20a des zweiteiligen zweiten Ventilelements 20 abgebildet. In der Abbildung unten links ist eine Seitenansicht des zweiten Teils 20a des zweiteiligen zweiten Ventilelements 20 zu sehen.

Gemäß dieser in Figur 17 gezeigten Ausführungsform weist das Expansionsventil 100 eine Bypasskanalstruktur 223 auf. Die Bypasskanalstruktur 223 kann zum Beispiel in dem zweiten Teil 20a des zweiteiligen zweiten Ventilelements 20 ausgebildet sein, vorzugsweise auf der dem ersten Teil 20b zugewandten Seite. Die Bypasskanalstruktur 223 kann aber beispielsweise auch in dem ersten Ventilelement 10 ausgebildet sein.

Die Bypasskanalstruktur 223 bildet einen Bypass im Fluidströmungspfad für eine oder mehrere Drosselkanalstrukturen 21b, 22b, 23b. Das heißt, die Bypasskanalstruktur 223 ermöglicht es, dass Fluid durch den Bypass fließen kann, wenn beispielsweise eine Drosselkanalstruktur 21b, 22b, 23b durch ein Partikel 210 oder ähnliches verstopft ist.

Um diese Funktion zu gewährleisten, kann in der hier abgebildeten Ausführungsform die Bypasskanalstruktur 223 mit zumindest einem Fluideingangsabschnitt 224 von zumindest einer Drosselkanalstruktur 21b fluidisch koppelbar sein, sodass bei einer fluidischen Kopplung der Bypasskanalstruktur 223 mit dieser zumindest einen Drosselkanalstruktur 21b ein an diesem Fluideingangsabschnitt 224 anhaftendes Partikel 210 durch die Bypasskanalstruktur 223 hindurch abführbar ist. Der Fluideingangsabschnitt 224 ist derjenige Abschnitt der Drosselkanalstruktur 21b durch den das Fluid in die Drosselkanalstruktur 21b einströmt.

Generell ist also der Fluideingangsabschnitt 224 einer Drosselkanalstruktur 21b, 22b, 23b derjenige Abschnitt, der zur Umgebung hin geöffnet ist und den Eintritt des Fluids in die Drosselkanalstruktur 21b, 22b, 23b ermöglicht. Es ist sozusagen die Öffnung, durch die das Fluid in die jeweilige Drosselkanalstruktur 21b, 22b, 23b eintritt.

Wie in Figur 17 schematisch angedeutet ist, weist die Bypasskanalstruktur 223 einen größeren Querschnitt auf als die Drosselkanalstrukturen 21b, 22b, 23b.

Das hier abgebildete Partikel 210 hat den Fluideingangsabschnitt 224 der Drosselkanalstruktur 21b verstopft. Um das Partikel 210 zu entfernen, wird die Bypasskanalstruktur 223 gegenüber der verstopften Drosselkanalstruktur 21b derart angeordnet, dass die Bypasskanalstruktur 223 zumindest dem verstopften Fluideingangsabschnitt 224 der Drosselkanalstruktur 21b gegenüberliegt.

Die Bypasskanalstruktur 223 bildet somit einen Fluidströmungspfad 225 von dem Fluideingangsabschnitt 224 der verstopften Drosselkanalstruktur 21b, entlang der Bypasskanalstruktur 223, bis zu einem Ende 226 der Bypasskanalstruktur 223. Dieses besagte Ende 226 der Bypasskanalstruktur 223 kann beispielsweise eine Öffnung zur Umgebung sein, durch die das mitgerissene Partikel 210 herausgespült bzw. entfernt werden kann.

Das Ende 226 der Bypasskanalstruktur 223 kann aber auch in den Fluidauslass 102 des Expansionsventils 100 münden, um das mitgerissene Partikel 210 aus dem Expansionsventil 100 heraus zu befördern.

In dem in Figur 17 abgebildeten Ausführungsbeispiel ist die Bypasskanalstruktur 223 hierfür mit einem Fluidausgangsabschnitt 227 der zumindest einen Drosselkanalstruktur 21b fluidisch gekoppelt. Der Fluidausgangsabschnitt 227 der jeweiligen Drosselkanalstruktur 21b, 22b, 23b kann beispielsweise der, z.B. axial verlaufende, Kanalstrukturabschnitt 21a, 22a, 23a, der jeweiligen Kanalstruktur 21a, 21b; 22a, 22b; 23a, 23b sein. Da dieser Fluidausgangsabschnitt 227 fluidisch mit dem Fluidauslass 102 des Expansionsventils 100 gekoppelt ist, kann die Bypasskanalstruktur 223 das Fluid in dieser Ausführungsform direkt zu dem Fluidauslass 102 des Expansionsventils 100 leiten. Ein mitgerissenes Partikel 210 wird hierbei also durch den Fluidauslass 102 herausgespült.

Die hier beispielhaft erwähnte verstopfte Drosselkanalstruktur 21b ist somit also eingangsseitig, d.h. an ihrem Fluideingangsabschnitt 224, und optional auch ausgangsseitig, d.h. an ihrem Fluidausgangsabschnitt 227, fluidisch mit der Bypasskanalstruktur 223 koppelbar.

In anderen Worten könnte also die Bypasskanalstruktur 223 zumindest am Fluideingangsabschnitt 224 einer Drosselkanalstruktur 21b mit ebendiesem Fluideingangsabschnitt 224 zur Überdeckung kommen. Alternativ oder zusätzlich kann die Bypasskanalstruktur 223 auch zumindest am Fluidausgangsabschnitt 227 einer Drosselkanalstruktur 21b mit ebendiesem Fluidausgangsabschnitt 227 zur Überdeckung kommen.

Im Fall, dass die Bypasskanalstruktur 223 mit der Drosselkanalstruktur 21b über die gesamte Länge zur Überdeckung kommt, entspricht dies einer temporären Vergrößerung des effektiven Querschnitts der jeweiligen Drosselkanalstruktur 21b.

Um das Entfernen eines Partikels 210 zu verbessern, kann die mindestens eine Drosselkanalstruktur 21b optional zumindest abschnittsweise eine sich zu der Bypasskanalstruktur 223 hin aufweitende Form aufweisen. So zeigt beispielsweise die Abbildung links oben in Figur 17 eine vergrößerte Darstellung der Drosselkanalstruktur 21b.

Es ist zu erkennen, dass die Drosselkanalstruktur 21b eine Trapezform aufweist, die sich zu der Bypasskanalstruktur 223 hin aufweitet. Die beiden Teile 20a, 20b des zweiteiligen zweiten Ventilelements 20 werden, wie mit dem Pfeil 170 angedeutet, übereinander gelegt. Somit sind die Bypasskanalstruktur 223 und die Drosselkanalstruktur 21b gegenüberliegend angeordnet und die Drosselkanalstruktur 21b weitet sich zu der Bypasskanalstruktur 223 hin auf.

Alternativ oder zusätzlich wäre es denkbar, dass das Expansionsventil 100 ein Mittel 240 (Figur 15) zum Lösen und/oder Entfernen eines an dem Rückhalteelement 200 anhaftenden Partikels aufweist, wobei das Mittel 240 zum Lösen und/oder Entfernen eines Partikels eine mechanische Abstreifeinrichtung 241 aufweist, die mit dem Rückhalteelement 200 in Kontakt bringbar und relativ zu dem Rückhalteelement 200 bewegbar ist, und wobei die Abstreifeinrichtung 241 ausgebildet ist, um beim Bewegen des Rückhalteelements 200 relativ zu der Abstreifeinrichtung 241 ein an dem Rückhalteelement 200 anhaftendes Partikel 210 mechanisch zu entfernen.

Ein solches Ausführungsbeispiel ist in Figur 15 abgebildet. Das Mittel 240 zum Lösen und/oder Entfernen eines Partikels weist hier eine mechanische Abstreifeinrichtung 241 auf, die von der Funktion her in etwa mit einem Besen vergleichbar ist. Die Abstreifeinrichtung 241 ist hier mit dem Umfang des ersten Teils 20b des zweiteiligen Ventilelements 20 in Kontakt und ortsfest angebracht. Wenn sich das Ventilelement 20 an der Abstreifeinrichtung 241 vorbeibewegt, dann wird ein an dem Ventilelement 20 anhaftendes Partikel 210 mittels der Abstreifeinrichtung 241 von dem Ventilelement 20 abgestreift.

Bisher wurde das Rückhalteelement 200 beispielhaft in Form der Filterkanalstrukturen 222 beschrieben. Prinzipiell ist es jedoch natürlich denkbar, dass das Rückhalteelement 200 eine Lochplatte und/oder Sintermaterial und/oder eine Gewebestruktur und/oder eine Netzstruktur und/oder eine offenporige Schwammstruktur und/oder loses Schüttgut und/oder wasserbindendes Material aufweist.

Unabhängig davon, in welcher Form das Rückhalteelement 200 ausgebildet ist, kann es einen fixen Strömungswiderstand für den durch das Rückhalteelement 200 hindurch fließenden Fluidstrom bewirken. Das heißt, das Rückhalteelement 200 selbst kann bereits eine Drosselfunktion bereitstellen. Dabei kann der Betrag dieses Strömungswiderstands beispielsweise höchstens so groß sein wie für eine geringste Drosselstufe notwendig ist.

Gemäß eines Ausführungsbeispiels kann das Rückhalteelement 200 ausgebildet sein, um den durch das Rückhalteelement 200 hindurch strömenden Fluidstrom um 10% oder weniger, bevorzugt um 20% oder weniger, und mehr bevorzugt um 30% oder weniger zu drosseln. Das heißt, das Rückhalteelement 200 bietet eine fixe Drosselung, von zum Beispiel 30% oder weniger, bezogen auf den Fluidstrom vor und nach dem Rückhalteelement 200.

Ein Rückhalteelement 200 kann aber auch beispielsweise vor jeder Drosselkanalstruktur 21b, 22b, 23b den Fluidstrom zu nahezu 100% drosseln, wobei die jeweilige Drosselkanalstruktur 21b, 22b, 23b keine weitere Drosselung bereitstellen müsste.

Alternativ oder zusätzlich kann das Rückhalteelement 200 ein Mittel zum Reduzieren der Strömungsgeschwindigkeit eines entlang eines der Fluidströmungspfade strömenden Fluidstroms aufweisen, sodass sich in dem jeweiligen Fluidströmungspfad ein Absetzbereich bildet, in dem sich eingedrungene Partikel absetzen können.

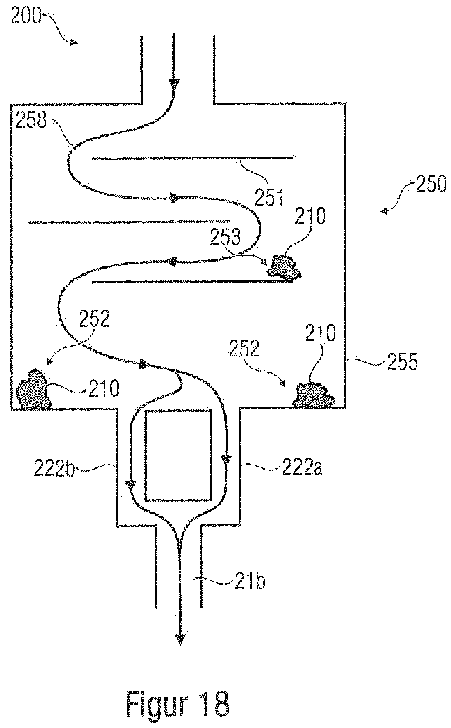

Ein solches Mittel zum Reduzieren der Strömungsgeschwindigkeit kann mindestens eine Prallwand und/oder eine Bauraumerweiterung und/oder einen Abschnitt mit einem gegenüber der Drosselkanalstruktur 21b, 22b, 23b vergrößerten Querschnitt aufweisen. So zeigt Figur 18 ein Beispiel für ein Rückhalteelement 200, das ein solches Mittel 250 zum Reduzieren der Strömungsgeschwindigkeit aufweist. In diesem Ausführungsbeispiel weist das Mittel 250 zum Reduzieren der Strömungsgeschwindigkeit eine Bauraumerweiterung 255 bzw. einen Abschnitt mit einem gegenüber der Drosselkanalstruktur 21b vergrößerten Querschnitt auf. Beim Einströmen des Fluids in diese Bauraumerweiterung 255 reduziert sich die Strömungsgeschwindigkeit des Fluids. Dabei kann die Strömungsgeschwindigkeit am Ende der Bauraumerweiterung 255 derart abgesunken sein, dass sich dort ein Absetzbereich 252 für die Partikel 210 bildet.

In der Bauraumerweiterung 255 können außerdem Prallplatten 251 angeordnet sein. Auch hierbei können sich Absetzbereiche 253 bilden, in dem sich Partikel 210 absetzen können. Die Prallplatten 251 können aber auch in einer Drosselkanalstruktur 21b bis 27b oder in einer Filterkanalstruktur 222a bis 222u angeordnet sein, d.h. die Kombination der Bauraumerweiterung 255 mit den Prallplatten 251 ist optional.

In dem in Figur 18 abgebildeten Ausführungsbeispiel weist das Rückhalteelement 200 neben den Mitteln 250 zum Reduzieren der Strömungsgeschwindigkeit zusätzlich eine zuvor beschriebene Filterkanalstruktur 222a, 222b auf. Es ist aber auch denkbar, dass das Rückhalteelement 200 nur das Mittel 250 zum Reduzieren der Strömungsgeschwindigkeit aufweist, d.h. ohne Kombination mit einer zusätzlichen Filterkanalstruktur 222a, 222b.

In dem in Figur 18 abgebildeten Ausführungsbeispiel sind die Filterkanalstrukturen 222a, 222b in Fluidströmungsrichtung zwischen dem Mittel 250 zum Reduzieren der Strömungsgeschwindigkeit und der jeweiligen Drosselkanalstruktur 21b angeordnet.

Die sich bei diesem Ausführungsbeispiel eines Rückhalteelements 200 ergebende Fluidströmungsrichtung ist mit dem Pfeil 258 angedeutet. Das Fluid fließt also zunächst in die Bauraumerweiterung 250 hinein. Sofern zuvor erwähnte Prallplatten 251 vorhanden sind, strömt das Fluid an diesen Prallplatten 251 vorbei, wobei sich gegebenenfalls im Bereich dieser Prallplatten 251 Absetzbereiche 253 für Partikel 210 bilden können.

Das Fluid strömt dann weiter in die direkt daran angeschlossenen und fluidisch damit gekoppelten Filterkanalstrukturen 222a, 222b. Mittels dieser Filterkanalstrukturen 222a, 222b können ebenfalls Partikel 210 in der zuvor beschriebenen Art und Weise zurückgehalten werden. Das Fluid strömt dann in die jeweils daran angeschlossene und fluidisch gekoppelte jeweilige Drosselkanalstruktur 21b.

Es wäre ebenfalls denkbar, dass eine hier nicht explizit abgebildete Sammelkanalstruktur 230 zwischen den Filterkanalstrukturen 222a, 222b und der Drosselkanalstruktur 21b angeordnet ist.

Das Mittel 250 zum Reduzieren der Strömungsgeschwindigkeit ist vorzugsweise mit mindestens einer Drosselkanalstruktur 21b fluidisch gekoppelt, um Partikel 210 von dieser Drosselkanalstruktur 21b fernzuhalten.

Wie zuvor erwähnt, kann sich in dem Mittel 250 zum Reduzieren der Strömungsgeschwindigkeit ein Absetzbereich 252 bilden. Hierbei wäre es denkbar, dass der Absetzbereich 252 derart angeordnet ist, dass sich ein bei bestehender Fluidströmung an dem Rückhalteelement 200 anhaftendes Partikel bei nachlassender Fluidströmung schwerkraftbedingt in den Absetzbereich 252 absetzt. Ein solcher Fall wäre zum Beispiel vorstellbar, wenn die Figur 18 um 180° gedreht wäre und das Fluid entgegen der Schwerkraft, zum Beispiel im Wesentlichen von unten nach oben, strömen würde.

Diese Funktion könnte also beispielsweise generell dadurch realisiert werden, dass das Rückhalteelement 200 von unten (d.h. entgegen der Schwerkraft) angeströmt wird, wobei sich ein Partikel 210 aufgrund der von der Strömung ausgeübten Kraft an der angeströmten Unterseite des Rückhalteelements 200 festsetzen könnte. Dies gilt natürlich auch für ein Rückhalteelement 200 das beispielsweise nur die Filterkanalstrukturen 222a, 222b, nicht aber die Mittel 250 zum Reduzieren der Strömungsgeschwindigkeit, aufweist.

Sobald hierbei die Strömung nachlässt bzw. nicht mehr vorhanden ist, z.B. in Folge eines Abschaltens des Expansionsventils 100, würde das Partikel 210 nicht mehr angeströmt werden und somit schwerkraftbedingt in einen darunter angeordneten Absetzbereich 252 fallen.

Die bisher beschriebenen Ausführungsformen für erfindungsgemäße Rückhalteelemente 200 dienen allesamt dem Zweck, ein in dem Fluid befindliches Partikel 210 vom Eindringen in eine Drosselkanalstruktur 21b abzuhalten.

Die vorliegende Erfindung hält aber ebenso Möglichkeiten bereit, um Partikel 210, die bereits in das Expansionsventil 100 eingedrungen sind, wieder zu entfernen, indem beispielsweise das Expansionsventil 100 gespült wird. Derartige Spülfunktionen können mittels der nachfolgend beschriebenen Mittel bereitgestellt werden.

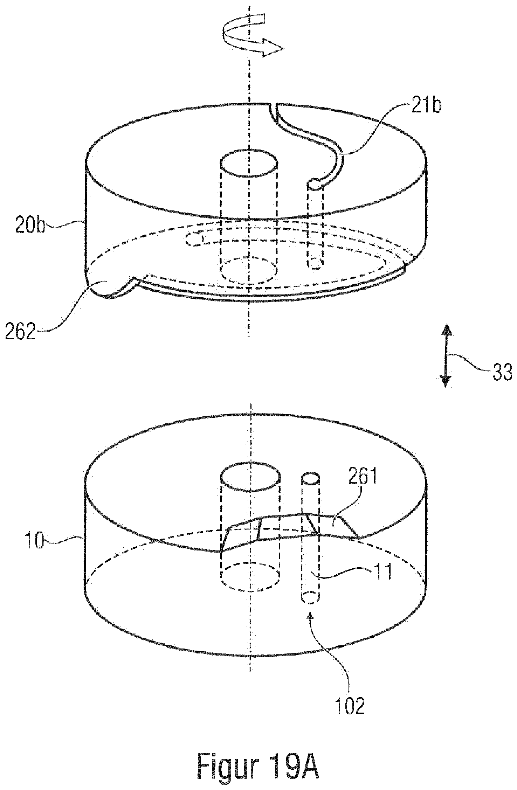

So können beispielsweise die beiden Ventilelemente 10, 20 voneinander abgehoben werden. Wie in Figur 19A gezeigt ist, kann beispielsweise mindestens eines der beiden Ventilelemente 10, 20 eine Struktur 261, 262 aufweisen, die bei einer Bewegung, z.B. bei einer Rotation, der beiden Ventilelemente 10, 20 relativ zueinander bewirkt, dass sich die beiden Ventilelemente 10, 20 voneinander abheben und dabei einen Fluidströmungspfad bilden durch den Fluid an den Drosselkanalstrukturen 21b vorbei zu dem Fluidauslass 102 strömen kann.

In dem hier abgebildeten Beispiel sind das erste Ventilelement 10 sowie der erste Teil 20b des zweiteiligen zweiten Ventilelements 20 einschließlich einer in dem ersten Teil 20b ausgebildeten Drosselkanalstruktur 21b abgebildet. Das erste Ventilelement 10 weist eine Erhebung 261 auf. Das zweite Ventilelement 20 weist einen hervorstehenden Abschnitt 262 auf.

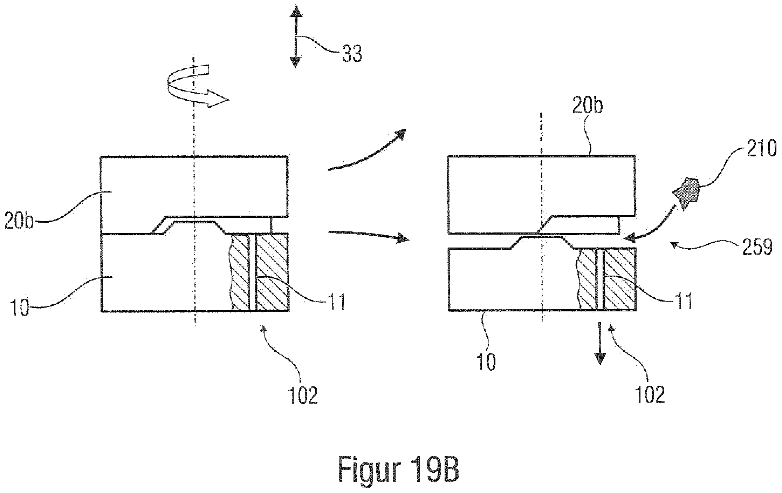

Wie in Figur 19B zu sehen ist, läuft bei einer Drehung der beiden Ventilelemente 10, 20 relativ zueinander der hervorstehende Abschnitt 262 auf die Erhebung 261 auf. In Folge dessen heben sich die beiden Ventilelemente 10, 20 in axialer Richtung 33 voneinander ab (Figur 19B).

Wie in Figur 19B zu sehen ist, bildet sich dadurch ein Spalt 259 zwischen den beiden Ventilelementen 10, 20. Dieser Spalt 259 stellt einen Fluidströmungspfad bereit, der unter Umgehung der Drosselkanalstrukturen 21b direkt in die Kanalstruktur 11 des ersten Ventilelements 10 und somit direkt zu dem Fluidauslass 102 führt. Ein Partikel 210 kann somit direkt zu dem Fluidauslass 102 geleitet werden, ohne dass dieses Partikel 210 zuvor die Drosselkanalstrukturen 21b durchquert haben muss.

Alternativ oder zusätzlich können beispielsweise die Drosselkanalstrukturen 21b, 22b, 23b, 24b, 25b, 26b und/oder die Filterkanalstrukturen 222a bis 222u derart ausgebildet sein, dass deren Querschnitt temporär vergrößerbar ist.

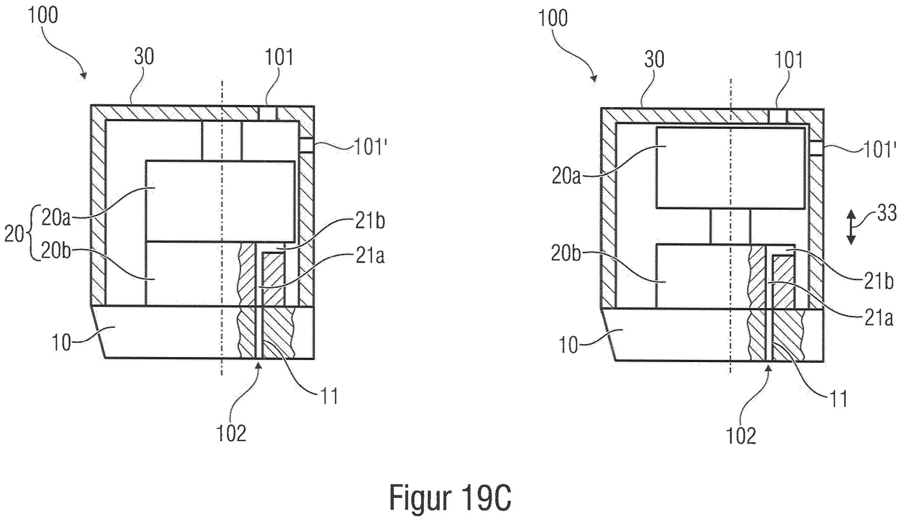

Ein Partikel 210, das sich in einer Kanalstruktur verfangen hat, kann dadurch entfernt werden. Wenn beispielsweise ein Partikel 210 eine Drosselkanalstruktur 21b, 22b, 23b, 24b, 25b, 26 verstopft, so können zum Beispiel der erste und der zweite Teil 20a, 20b des zweiteiligen zweiten Ventilelements 20 voneinander abgehoben werden, um somit den Querschnitt der jeweils verstopften Drosselkanalstruktur oder aller Drosselkanalstrukturen zumindest temporär zu vergrößern wie es beispielhaft mit Bezug auf Figur 19C erläutert werden soll.

Beispielsweise kann der erste Teil 20b und/oder der zweite Teil 20a des zweiten zweiteiligen Ventilelements 20 eine zu Figur 19A ähnliche aber hier nicht näher abgebildete Struktur 261, 262 aufweisen, die bei einer Bewegung, z.B. bei einer Rotation, des zweiten zweiteiligen Ventilelements 20 relativ zum ersten Ventilelement 10 und dem Gehäuse 30 oder bei einer Bewegung der beiden Teile 20a, 20b relativ zueinander bewirkt, dass sich die beiden Teile 20a, 20b voneinander abheben.

So ist beispielsweise in der linken Abbildung von Figur 19C ein Expansionsventil 100 gezeigt, das vom Aufbau her im Wesentlichen dem in Figur 2A gezeigten Expansionsventil 100 entspricht. Das heißt, das Expansionsventil 100 weist ein erstes Ventilelement 10 und ein zweites Ventilelement 20 auf. Das zweite Ventilelement 20 ist zweiteilig ausgebildet und weist einen ersten Teil 20b und einen zweiten Teil 20a auf.

Außerdem ist ein Gehäuse 30 vorgesehen, das einen Fluideinlass 101 aufweist, durch den Fluid in das Innere des Gehäuses 30 einströmen kann. In Figur 19C ist der Fluideinlass 101 auf der Oberseite des Gehäuses 30 angeordnet. Rein beispielhaft ist hier außerdem ein optionaler zweiter Fluideinlass 101' eingezeichnet, der in einer Seitenwand des Gehäuses 30 angeordnet sein kann.

In der rechten Abbildung von Figur 19C ist ein Zustand gezeigt, in dem der erste Teil 20b von dem zweiten Teil 20a des zweiteiligen zweiten Ventilelements 20 in axialer Richtung 33 abgehoben ist. Dadurch kann eine Spülfunktion für die Drosselkanalstruktur 21b durch Kanalstruktur 21a hindurch zum Fluidauslass 102 realisiert werden.

Denkbar wäre es hierbei beispielsweise auch, dass der zweite Teil 20a des zweiten Ventilelements 20 so weit von dem ersten Teil 20b des zweiten Ventilelements 20 abgehoben wird, dass der zweite Teil 20a mit der Innenseite des Gehäuses 30 zur Anlage kommt. Dabei könnte der zweite Teil 20a die zuvor erwähnten Fluideinlässe 101, 101' verschließen, wie es in der rechten Abbildung der Figur 19C erkennbar ist.

Das heißt, man erzeugt hier eine neue Dichtfläche am Fluideinlass 101, 101'. Dadurch ergibt sich eine Querschnittserweiterung zum Abströmen eines Partikels 210 und es kann so eine ggf. verbesserte Dichtfläche für die Stopp-Funktion erzeugt werden, da sich der zweite Teil 20a des zweiten Ventilelements 20 in diesem Fall senkrecht zu dieser neuen Dichtfläche bewegt und nicht längs dieser Dichtfläche.

Wenn man sich beispielsweise die in Figur 1C abgebildete Ausführungsform ansieht, so wäre es alternativ auch denkbar, dass das erste Ventilelement 10 so weit von dem zweiten Ventilelement 20 abgehoben wird, dass das erste Ventilelement 10 mit der Innenseite des Gehäuses 30 zur Anlage kommt. Dabei könnte das erste Ventilelement 10 die zuvor erwähnten Fluideinlässe 101, 101' verschließen, eben anlog zu der in der rechten Abbildung der Figur 19C dargestellten Variante.

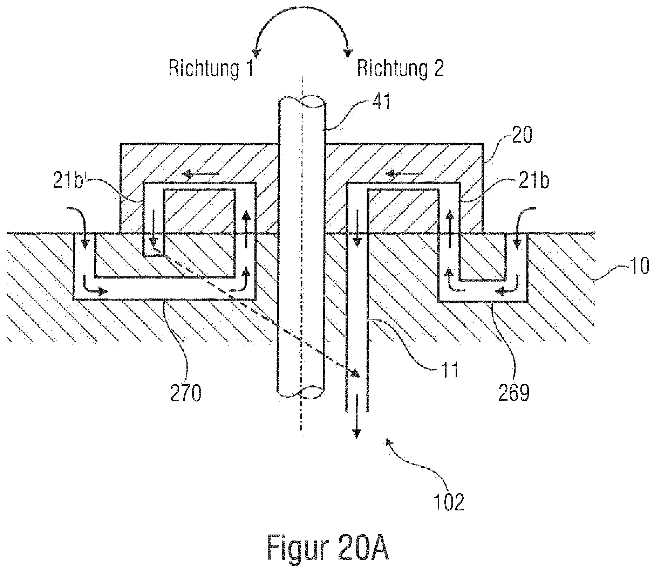

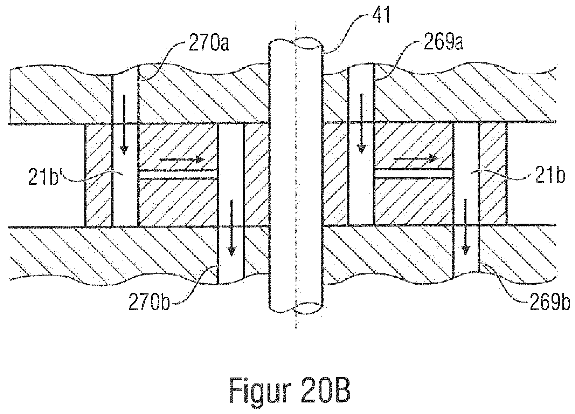

Die Figuren 20A und 20B zeigen eine weitere Möglichkeit, um Partikel 210 aus dem Expansionsventil 100 heraus zu spülen.

Diese beiden Ausführungsbeispiele zeichnen sich dadurch aus, dass eines der beiden Ventilelemente 10, 20 eine Kanalstruktur 270 aufweist, die in dem jeweils anderen der beiden Ventilelemente 10, 20 eine Umkehr der Flussrichtung des durch dieses jeweils andere Ventilelement 10, 20 hindurch fließenden Fluidstroms bewirkt.

So zeigt zum Beispiel Figur 20A ein Ausführungsbeispiel, bei dem zunächst nur die rechte Seite, d.h. rechts der Achse 41, betrachtet werden soll. In dem zweiten Ventilelement 20 ist eine Drosselkanalstruktur 21b ausgebildet. In dem ersten Ventilelement 10 ist eine erste Kanalstruktur 269 ausgebildet, durch die das Fluid einströmen und in die Drosselkanalstruktur 21b strömen kann. Dadurch ergibt sich die mit den Pfeilen angedeutete Strömungsrichtung des Fluids.

Die Abbildung links von der Achse 41 zeigt eine zweite Stellung der Ventilelemente 10, 20. Hier wäre z.B. das zweite Ventilelement 20 gegenüber dem ersten Ventilelement 10 um 180° gedreht.

Wie zu erkennen ist, ist die Drosselkanalstruktur 21b nun einer anderen, in dem ersten Ventilelement 10 ausgebildeten, Kanalstruktur 270 gegenüberliegend angeordnet. Es handelt sich hierbei zwar immer noch um dieselbe Drosselkanalstruktur 21b, jedoch in einer anderen Stellung, weshalb diese Drosselkanalstruktur in diesem Fall mit dem Bezugszeichen 21b' bezeichnet ist.

Die in dem ersten Ventilelement 10 ausgebildete Kanalstruktur 270 bewirkt, dass sich die Fluidströmungsrichtung in der Drosselkanalstruktur 21b' umkehrt, was durch die Pfeile angedeutet ist. Somit kann ein Partikel 210, das sich möglicher Weise in der Drosselkanalstruktur 21b, 21b' festgesetzt hat, in Gegenrichtung heraus und durch das Expansionsventil 100 hindurchgespült werden.

Figur 20B zeigt ein weiteres Ausführungsbeispiel zur Umkehr der Strömungsrichtung. In einer ersten Stellung (rechts von der Achse 41) strömt das Fluid durch die erste Kanalstruktur 269a in die Drosselkanalstruktur 21b und von dort aus in die zweite Kanalstruktur 269b. Durch die Anordnung der Kanalstrukturen 269a, 269b relativ zu der Drosselkanalstruktur 21b ergibt sich die mit den Pfeilen angedeutete Strömungsrichtung. Das Fluid strömt hier also von innen nach außen, d.h. von der Achse 41 weg.

Links von der Achse 41 ist dann wieder eine zweite Schaltstellung eingezeichnet, wobei auch hier wieder die Drosselkanalstruktur mit dem Bezugszeichen 21b' bezeichnet ist. In dieser zweiten Stellung (links von der Achse 41) strömt das Fluid durch die erste Kanalstruktur 270a in die Drosselkanalstruktur 21b' und von dort aus in die zweite Kanalstruktur 270b.

Durch die Anordnung der Kanalstrukturen 270a, 270b relativ zu der Drosselkanalstruktur 21b' ergibt sich die mit den Pfeilen angedeutete Strömungsrichtung. Das Fluid strömt hier also von außen nach innen, d.h. zu der Achse 41 hin. Somit kann ein Partikel, das sich möglicher Weise in der Drosselkanalstruktur 21b, 21b' festgesetzt hat in Gegenrichtung heraus und durch das Expansionsventil 100 hindurchgespült werden.

Wie bereits des Öfteren erwähnt wurde, kann das erfindungsgemäße Expansionsventil 100 in mehrere Schaltstellung gebracht werden. Dies kann unter anderem dadurch realisiert werden, dass das erste Ventilelement 10 gegenüber dem zweiten Ventilelement 20 bewegbar, insbesondere drehbar, ist.

Wie bereits ganz zu Beginn der vorliegenden Offenbarung erwähnt wurde, kann das erfindungsgemäße Expansionsventil 100 beispielsweise eine Schaltstellung aufweisen, in der das hindurchströmende Fluid nahezu nicht gedrosselt wird, d.h. das Fluid fließt nahezu ungehindert durch das Expansionsventil 100 hindurch. Diese Schaltstellung kann daher als "Offen"-Funktion oder als Freiflussschaltstellung bezeichnet werden.

Das Expansionsventil 100 kann auch eine weitere Schaltstellung aufweisen, in der der Durchfluss des Fluids nahezu vollständig (d.h. mit Ausnahme eventueller Leckagen) gedrosselt bzw. blockiert ist. Diese Schaltstellung kann daher auch als "Stopp"-Position oder Blockierschaltstellung bezeichnet werden.

Zwischen der Freiflussschaltstellung und der Blockierschaltstellung bilden die Drosselkanalstrukturen 21b, 22b, 23b, 24b, 25b, 26b Fluidströmungspfade mit unterschiedlichen Drosselstufen. Der Betrag der Drosselwirkung kann hierbei beispielsweise durch den Querschnitt der jeweiligen Drosselkanalstruktur 21b, 22b, 23b, 24b, 25b, 26b bestimmt werden. Da somit also jede Drosselkanalstruktur 21b, 22b, 23b, 24b, 25b, 26b einen Durchfluss des Fluids ermöglicht, werden diese Schaltstellungen auch als Durchflussschaltstellungen bezeichnet.

Hierbei kann diejenige Drosselkanalstruktur 26b mit dem größten Querschnitt aller Drosselkanalstrukturen 21b, 22b, 23b, 24b, 25b, 26b einen nahezu ungehinderten Durchfluss bzw. einen Freifluss ermöglichen, weshalb diese Schaltstellung dann auch dementsprechend eine Freiflussschaltstellung realisieren kann.

Gemäß einer denkbaren Ausführungsform der vorliegenden Erfindung kann also das Expansionsventil 100 in mehrere Stellungen bringbar sein, wobei in einer Freiflussschaltstellung diejenige Drosselkanalstruktur 26b mit dem größten Querschnitt aller Drosselkanalstrukturen 21b, 22b, 23b, 24b, 25b, 26b den Fluidströmungspfad bildet, und wobei in einer Blockierschaltstellung ein Fluidströmungspfad blockiert ist.

Die einzelnen Schaltstellungen können dadurch erreicht werden, indem das erste Ventilelement 10 gegenüber dem zweiten Ventilelement 20 bewegbar, und insbesondere drehbar, ist.

Zusammenfassend kann also das Expansionsventil 100 gemäß einer denkbaren Ausführungsform der Erfindung mittels der Relativbewegung zwischen dem ersten und dem zweiten Ventilelement 10, 20 in eine Blockierschaltstellung und in mehrere Durchflussschaltstellungen bringbar sein, wobei das Expansionsventil 100 in jeder Durchflussschaltstellung einen Fluidströmungspfad mit jeweils unterschiedlichem Strömungswiderstand zwischen dem Fluideinlass 101 und dem Fluidauslass 102 bereitstellt, und wobei in der Blockierschaltstellung ein Fluidströmungspfad zwischen dem Fluideinlass 101 und dem Fluidauslass 102 blockiert ist.

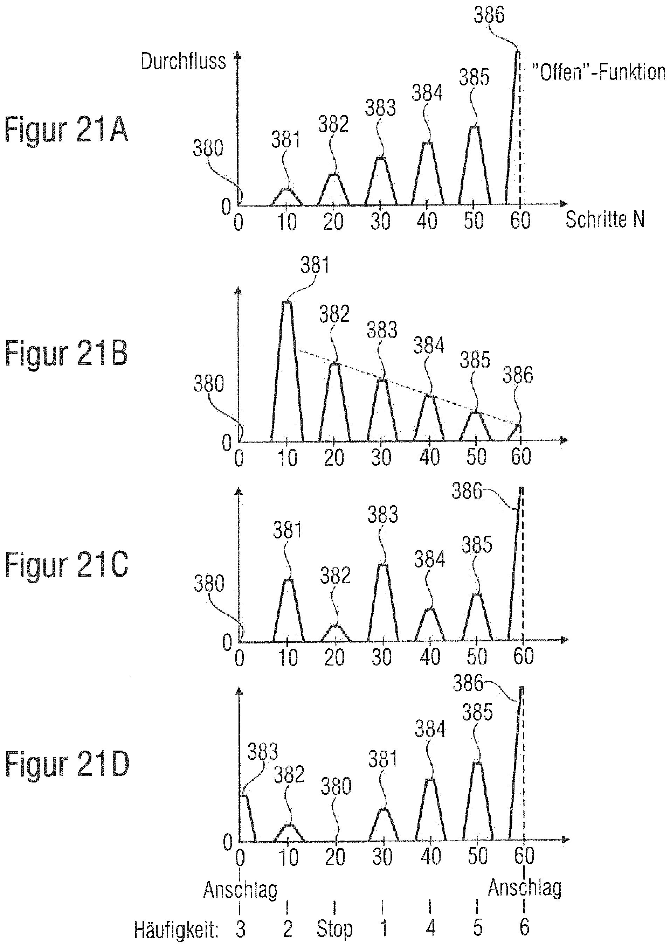

Ein Aspekt der vorliegenden Erfindung sieht vor, dass das Expansionsventil 100 möglichst energiesparend und effizient in die unterschiedlichen Schaltstellungen bringbar ist. Hierfür soll nachfolgend auf die Figuren 21a bis 21d Bezug genommen werden. Diese Figuren zeigen je ein Diagramm zur Abbildung einer Durchflussrate (y-Achse) in Abhängigkeit der Schaltstellung. Die Wege zwischen den einzelnen Schaltstellungen werden hierbei anhand der Anzahl von Schritten (x-Achse) repräsentiert, die ein Schrittmotor anfahren müsste, um die jeweiligen Schaltstellungen zu erreichen.

So zeigt beispielsweise Figur 21a ein Diagramm eines Expansionsventils 100 mit linear ansteigendem Durchfluss bzw. mit linear abfallender Drosselung. Der Ursprung des Diagramms beginnt in der Nullstellung des Expansionsventils 100, bei der kein Durchfluss stattfindet. Das Expansionsventil 100 befindet sich hier also in einer Blockierschaltstellung 380, die hier als Referenz- bzw. Ausgangsposition dient.

Ausgehend von dieser Blockierschaltstellung 380 ist beispielsweise nach zehn Schritten eine erste Durchflussschaltstellung 381 erreicht. In dieser ersten Durchflussschaltstellung 381 weist das Expansionsventil 100 einen ersten Strömungswiderstand bzw. eine erste Drosselstufe auf.

Nach weiteren zehn Schritten, also nach insgesamt zwanzig Schritten, ist eine eine zweite Drosselstufe bereitstellende zweite Durchflussschaltstellung 382 erreicht, wobei diese zweite Drosselstufe geringer ist als die erste Drosselstufe. In der zweiten Durchflussschaltstellung 382 weist das Expansionsventil 100 also einen geringeren Strömungswiderstand als in der ersten Durchflussschaltstellung 381 auf.

Nach weiteren zehn Schritten, also nach insgesamt dreißig Schritten, ist eine eine dritte Drosselstufe bereitstellende dritte Durchflussschaltstellung 383 erreicht, wobei diese dritte Drosselstufe jeweils geringer ist als die erste und die zweite Drosselstufe. In der dritten Durchflussschaltstellung 383 weist das Expansionsventil 100 also einen geringeren Strömungswiderstand als in der ersten sowie in der zweiten Schaltstellung 381, 382 auf.

So kann dies fortgeführt werden, bis man bei einer Freiflussschaltstellung 386 angelangt ist, die eine "Offen"-Funktion ermöglicht.

Das in Figur 21a dargestellte Diagramm repräsentiert also ein Expansionsventil 100 mit linear ansteigendem Durchfluss beziehungsweise mit linear abfallendem Strömungswiderstand und somit linear abfallender Drosselrate.

Gemäß der in Figur 21a abgebildeten Ausführungsform können also die einzelnen Durchflussschaltstellungen 381 bis 386, ausgehend von der Blockierschaltstellung 380, in absteigender Reihenfolge bezüglich ihres jeweiligen Strömungswiderstandes angeordnet sein, sodass sich bei einer Relativbewegung der beiden Ventilelemente 10, 20 von einer Schaltstellung 381 zu der jeweils nächsten Schaltstellung 382 der jeweilige Strömungswiderstand verringert.

Figur 21b hingegen zeigt genau das Gegenteil, nämlich ein Diagramm, das ein Expansionsventil 100 mit linear abfallendem Durchfluss beziehungsweise mit linear ansteigendem Strömungswiderstand und somit linear ansteigender Drosselrate abbildet.

Gemäß der in Figur 21b abgebildeten Ausführungsform können also die einzelnen Durchflussschaltstellungen 381 bis 386, ausgehend von der Blockierschaltstellung 380, in ansteigender Reihenfolge bezüglich ihres jeweiligen Strömungswiderstands angeordnet sein, sodass sich bei einer Relativbewegung der beiden Ventilelemente 10, 20 von einer Schaltstellung 381 zu der jeweils nächsten Schaltstellung 382 der jeweilige Strömungswiderstand erhöht.

Figur 21c zeigt ein Diagramm, das ein Expansionsventil 100 repräsentiert, bei dem die einzelnen Schaltstufen 380 bis 386 in beliebiger Reihenfolge angeordnet sind.

In Figur 21d ist ein Diagramm gezeigt, das ein Expansionsventil 100 repräsentiert, bei dem die Schaltstufen entsprechend ihrer Nutzungshäufigkeit angeordnet sind, wobei die Zahl 1 für am häufigsten und die Zahl 6 für am wenigsten häufig steht.

So ist beispielsweise die Blockierschaltstellung 380 (Stopp-Position) zwischen zwei Anschlägen des Expansionsventils 100 vorgesehen. Anders ausgedrückt kann das Expansionsventil 100 ausgehend von dieser Blockierschaltstellung 380 sowohl nach links als auch nach rechts drehend verfahren werden.

Es wäre nun beispielsweise denkbar, dass die Durchflussschaltstellung 381 häufiger genutzt wird als die Durchflussschaltstellung 384. Ausgehend von der Blockierschaltstellung 380 kann deshalb beispielsweise die Durchflussschaltstellung 381 näher an der Blockierschaltstellung 380 angeordnet sein, als die weniger häufig benötigte Durchflussschaltstellung 384.

Die Durchflussschaltstellung 381 ist beispielsweise mit zehn Schritten, ausgehend von der Blockierschaltstellung 380, anfahrbar, während die Durchflussschaltstellung 384 mit insgesamt zwanzig Schritten, ausgehend von der Blockierschaltstellung 380, anfahrbar ist. Die Durchflussschaltstellung 381 wird häufiger benötigt als die Durchflussschaltstellung 384.

Es wäre ebenso denkbar, dass die Durchflussschaltstellung 382 ebenfalls häufig benötigt wird. Die Durchflussschaltstellung 382 kann beispielsweise weniger häufig als die Durchflussschaltstellung 381, aber häufiger als die Durchflussschaltstellung 384 gebraucht werden.

Ausgehend von der Blockierschaltstellung 380 kann diese Durchflussschaltstellung 382 ebenso wie die zuvor erwähnte und häufig benötigte Durchflussschaltstellung 381 mit jeweils zehn Schritten angefahren werden, allerdings in die andere Richtung.

Bei dieser in Figur 21d gezeigten Anordnung der Durchflussschaltstellungen 381, 382 besteht also gegenüber den linearen Anordnungen (Figuren 21a, 21b) der Vorteil, dass sowohl die Durchflussschaltstellung 381 als auch die Durchflussschaltstellung 382 jeweils mit nur zehn Schritten, ausgehend von der Blockierschaltstellung 380, angefahren werden kann. Bei der linearen Anordnung hingegen müssten zum Erreichen einer zweiten Durchflussschaltstellung 382 hingegen zwanzig Schritte, ausgehend von der Blockierschaltstellung 380, angefahren werden.

Wie eingangs erwähnt sind die einzelnen Durchflussschaltstellungen 381 bis 386 hier in Abhängigkeit ihrer Verwendungshäufigkeit angeordnet.

Gemäß dem in Figur 21d abgebildeten Ausführungsbeispiel der vorliegenden Erfindung können also die einzelnen Durchflussschaltstellungen 381 bis 386, ausgehend von der Blockierschaltstellung 380, in einer Reihenfolge bezüglich ihres jeweiligen Strömungswiderstandes angeordnet sein, wobei diese Reihenfolge davon abhängig ist, wie häufig die jeweilige Schaltstellung 381 bis 386 im Betrieb benötigt wird.

Die einzelnen Schaltstellungen werden durch die Relativbewegung der beiden Ventilelemente 10, 20 relativ zueinander erreicht. Natürlich muss die Relativbewegung der beiden Ventilelemente 10, 20 nicht mit einem Schrittmotor ausgeführt werden. Die oben beschriebenen Diagramme in den Figuren 21a bis 21d wurden lediglich beispielhaft anhand der Anzahl von zu fahrenden Schritten eines Schrittmotors beschrieben. Die Diagramme dienen vornehmlich der Darstellung der einzelnen Schaltstellungen, die von der Präsenz eines Schrittmotors natürlich unabhängig sein können.

Etwas allgemeiner ausgedrückt kann also, um die häufig benötigten Schaltstellungen möglichst effizient anzufahren, einfach nur die Wegstrecke zwischen zwei Schaltstellungen entsprechend verkürzt werden. Gemäß einer Ausführungsform der vorliegenden Erfindung kann also, ausgehend von der Blockierschaltstellung 380, die bei der Relativbewegung der beiden Ventilelemente 10, 20 zurückzulegende Wegstrecke zum Erreichen einer bestimmten Durchflussschaltstellung 381 bis 386 für eine häufig benötigte Durchflussschaltstellung kürzer sein als für eine weniger häufig benötigte Durchflussschaltstellung 381 bis 386.

Häufig benötigte Schaltstellungen sind diejenigen Schaltstellungen, die im normalen Betrieb, z.B. mehrmals am Tag, benötigt werden.

Ein weiteres Ausführungsbeispiel der vorliegenden Erfindung sieht vor, dass das Expansionsventil 100 zwischen jeweils zwei Durchflussschaltstellungen 381 bis 386 eine Blockierschaltstellung 380 aufweist. Somit kann zwischen jeder Durchflussschaltstellung 381 bis 386 eine separate Blockierschaltstellung 380 bereitgestellt werden. Somit spart man sich das Zurückdrehen der Ventilelemente 10, 20 hin zu einer zentralen Blockierschaltstellung 380. Dies ist ein Vorteil hinsichtlich Energieeinsparung, da beispielsweise ein Schrittmotor dadurch wesentlich weniger Schritte fahren muss, um zu einer Blockierschaltstellung 380 zu gelangen.

Durch die Blockierschaltstellung 380 (Stopp-Position), insbesondere in Kombination mit der oben erwähnten Freiflussschaltstellung 386 ("Offen"-Funktion) ergeben sich weitere Vorteile für das erfindungsgemäße Expansionsventil 100. So kann damit beispielsweise eine Abtaufunktion bereitgestellt werden.

Gemäß einer denkbaren Ausführungsform der Erfindung kann also beispielsweise das Expansionsventil 100 ausgebildet sein, um eine Abtaufunktion bereitzustellen, indem sich das Expansionsventil 100 zuerst in der Blockierschaltstellung 380 befindet, wobei sich das unter Druck stehende Fluid erwärmt. Anschließend kann das Expansionsventil 100 direkt in die Freiflussschaltstellung 386 gebracht werden, wobei ein mit dem Expansionsventil 100 fluidisch gekoppelter Verdampfer mit dem erwärmten Fluid geflutet wird.

Aspekte der vorliegenden Erfindung sehen auch ein Kühl- und/oder Gefriergerät mit einem zuvor beschriebene Expansionsventil 100 vor.

Gemäß einer Ausführungsform kann ein solches Kühl- und/oder Gefriergerät einen Kompressor, einen Verdampfer und eine Steuereinrichtung aufweisen. Hierbei kann die Steuereinrichtung ausgebildet sein, um mindestens einen Parameter beinhaltend eine Lufttemperatur und/oder eine Verdampfertemperatur und/oder eine Kompressorlaufzeit und/oder eine Kompressorschaltstufe und/oder eine Umgebungstemperatur und/oder einen Druck zu bestimmen.

Basierend auf einem oder mehreren dieser Parameter (z.B. Lufttemperatur und/oder eine Verdampfertemperatur und/oder eine Kompressorlaufzeit und/oder eine Kompressorschaltstufe und/oder eine Umgebungstemperatur und/oder einen Druck) kann die Steuereinrichtung ferner ausgebildet sein, um eine Spülfunktion zu aktivieren, bei der das Expansionsventil 100 so eingestellt ist, dass das Fluid durch diejenige Drosselkanalstruktur mit dem größten Querschnitt aller Drosselkanalstrukturen 26b strömt. Das heißt, die Steuereinrichtung bringt das Expansionsventil 100 in eine Freiflussschaltstellung 386.

Zur Erläuterung des Effekts dieser Spülfunktion soll nochmals auf Figur 16 verwiesen werden. Werden das Rückhalteelement 200 bzw. die Filterkanalstrukturen 222a bis 222g derart gestaltet, dass die für die "Offen"-Position notwendige Drosselkanalstruktur 26b an dem Rückhalteelement 200 vorbei führt, dann strömt nach Schalten auf die Freiflussschaltstellung 386 das Fluid (z.B. Kältemittel) geführt an dem Rückhalteelement 200 vorbei. Partikel 210 können so mitgerissen, durch das Expansionsventil 100 hindurchgeführt, und so das Rückhalteelement 200 wieder freigespült werden, da die Drosselkanalstruktur 26b für die "Offen-Funktion" 386 wesentlich größere Kanalquerschnitte als die übrigen Drosselkanalstrukturen 21b, 22b, 23b, 24b, 25b zur Drosselung zur Verfügung stellt.

Weiterhin wäre es denkbar, dass wie bei der genannten Abtaufunktion bei geschlossenem Expansionsventil 100 gezielt Druck über den Kompressor aufgebaut wird und dann schlagartig über die "Offen"-Position 26b abgebaut wird.

Eine solche Spülfunktion kann in regelmäßigen Abständen automatisch durchgeführt werden. Alternativ kann beispielsweise aber auch folgendes Schema zum Erkennen ob und wann eine solche Spülfunktion erfolgen soll angewendet werden:

1) Gerät merkt z.B. anhand Lufttemperatur, Verdampfertemperatur, Kompressorlaufzeit, Kompressorschaltstufe, Umgebungstemperatur, Druck und/oder Kombination aus den Parametern, dass Kälteleistung fehlt.
2) Spülfunktion wird aktiviert.
3) Wenn Spülfunktion erfolgreich, normaler weiterer Betrieb.
4) Wenn Spülfunktion nicht erfolgreich, Notlauffunktion, d.h. anderer z.B. nächsthöherer Kanal wird verwendet.

Gemäß einer solchen Ausführungsform der Erfindung kann also beispielsweise die Steuereinrichtung ferner ausgebildet sein, um die Spülfunktion in regelmäßigen Abständen zu aktivieren, oder einen Soll-/Istwertvergleich von einem oder mehreren der zuvor erwähnten Parameter (Lufttemperatur und/oder eine Verdampfertemperatur und/oder eine Kompressorlaufzeit und/oder eine Kompressorschaltstufe und/oder eine Umgebungstemperatur und/oder einen Druck) durchzuführen, wobei die Steuereinrichtung bei einem positiven Ergebnis des Soll-/Istwertvergleichs das Kühl- und/oder Gefriergerät in einen normalen Betriebszustand versetzt, und wobei die Steuereinrichtung bei einem negativen Ergebnis des Soll-/Istwertvergleichs das Kühl- und/oder Gefriergerät in eine Notlauffunktion schaltet, in der das Expansionsventil 100 in eine Durchflussschaltstellung, die eine Drosselkanalstruktur 21b, 22b, 23b, 24b, 25b mit geringerem Querschnitt aufweist, gebracht wird.

Nachfolgend sollen das erfindungsgemäße Expansionsventil 100 sowie denkbare Konzepte der vorliegenden Erfindung nochmals in anderen Worten beschrieben werden: Ein Gegenstand der Erfindung ist ein Ventil 100, das einen Fluidstrom von nahezu 100% Maximaldurchfluss auf nahezu 0% Durchfluss in diskreten Stufen drosseln kann. Die primäre Anwendung wird als Mikroexpansionsventil 100 in Kältekreisläufen im unteren Kälteleistungsbereich gesehen, da es die eingangs erwähnte Problematik der Kältemitteldosierung bei geringen Masseströmen löst.

Zwei Umsetzungsformen A und B werden mit Bezug auf die Figuren nochmals näher beschrieben. Ein zum Betrieb möglicher Antrieb ist in den Figuren 9 und 10 gezeigt. Zum Drehen der Drehscheibe (erstes Ventilelement 10 bzw. zweites Ventilelement 20) kann beispielsweise ein Schrittmotor eingesetzt werden.

Umsetzungsform A

Bei Umsetzungsform A (Figuren 1A bis 1D) befinden sich im hier zweiteiligen Ventilsitz (zweites Ventilelement 20 mit erstem Teil 20a und zweitem Teil 20b) N Einlässe (axiale Abschnitte 22a, 23a, 24a, 25a) zu individuellen mikrofluidischen Kanalstrukturen (radiale Abschnitte bzw. Drosselkanalstrukturen 22b, 23b, 24b, 25b), deren jeweilige Auslässe wiederum zu einem einzigen gemeinsamen Hauptauslass (Fluidauslass 102) zusammengefasst sind.

Auf dem Ventilsitz 20 befindet sich eine drehbare Scheibe (erstes Ventilelement 10). Durch Drehpositionierung des Verteilers (erste Kanalstruktur 11) in der Drehscheibe 10 kann einerseits der Durchfluss durch das Ventil 100 komplett unterbunden oder andererseits jeweils eine der mikrofluidischen Kanalstrukturen 22b, 23b, 24b, 25b freigeschaltet werden. Da sich die Kanalstrukturen 22b, 23b, 24b, 25b geometrisch unterscheiden und somit unterschiedlichen Strömungswiderstand besitzen, stellt jede Kanalstruktur 22b, 23b, 24b, 25b eine bestimmte Drosselstufe dar. Diese Kanalstrukturen 22b, 23b, 24b, 25b können deshalb auch als Drosselkanalstrukturen bezeichnet werden. Eine Struktur im Ventilsitz 20 kann dabei auch so ausgeführt sein, dass keine signifikante Drosselung stattfindet (Durchlass).

Umsetzungsform B

Bei Umsetzungsform B (Figuren 2A und 2B) befinden sich in der hier zweiteiligen Drehscheibe (zweites Ventilelement 20 mit erstem Teil 20a und zweitem Teil 20b) N Einlässe (radiale Abschnitte bzw. Drosselkanalstrukturen 22b, 23b, 24b, 25b) zu individuellen mikrofluidischen Kanalstrukturen (radiale Abschnitte bzw. Drosselkanalstrukturen 22b, 23b, 24b, 25b), deren jeweilige Auslässe (axiale Abschnitte 22a, 23a, 24a, 25a) sich an der Gleitfläche 12 zwischen Drehscheibe 20 und Ventilsitz (erstes Ventilelement 10) befinden, d.h. die als Drosselkanalstrukturen bezeichneten mikrofluidischen Kanalstrukturen 22b, 23b, 24b, 25b befinden sich komplett in der Scheibe 20.

Der Ventilsitz 10 selbst enthält den Hauptauslass 11, 102. Durch Drehpositionierung der Scheibe 20 auf dem Ventilsitz 10 kann einerseits der Durchfluss durch das Ventil 100 komplett unterbunden oder andererseits jeweils eine der mikrofluidischen Kanalstrukturen 22b, 23b, 24b, 25b freigeschaltet werden. Eine Kanalstruktur/Drehposition kann dabei auch so ausgeführt sein, dass keine signifikante Drosselung stattfindet (Durchlass).

Funktionelle Abgrenzung

*Fluidik allgemein*

Unterscheidet man funktionell

- Wegeventile (Schaltventile): Ventile mit mehreren Schaltstellungen, die das Fluid komplett sperren, freigeben oder zwischen verschiedenen Anschlüssen verschalten.
- Stromventile: Ventile, die den Durchflussquerschnitt reduzieren oder ganz absperren. Im einfachsten Fall ändert sich hier der Durchfluss in Abhängigkeit der Druckdifferenz:

  ○ Blendenventil (kurze Blendenstrecke)

    ■ Starr
    ■ Verstellbar

  ○ Drosselventil (längere Drosselstrecke)

    ■ Starr
    ■ Verstellbar

So kann die vorliegende Erfindung als Wegeventil mit integrierten, verschieden ausgeführten, starren Drosseln betrachtet werden.

Während verstellbare Stromventile typischerweise den effektiven Querschnitt nur lokal eingegrenzt an einer Stelle verändern (vergl. Nadelventil), werden im vorliegenden Fall mikrofluidische Kanalstrukturen "geschalten", d.h. abhängig von der Schaltstufe werden ggf. auch unterschiedliche Fluidpfade durchströmt. Vergleicht man die vorliegende Erfindung beispielsweise mit einem Nadelventil, so ergeben sich die in Tabelle 1 dargestellten Unterschiede.

**Tabelle 1: Vergleich Nadelventil mit vorliegender Erfindung.**

| Nadelventil | Vorliegende Erfindung |
|---|---|
| Stetiger Schaltverlauf | N diskrete Schaltstufen |
| Mechanische Präzision und Positioniergenauigkeit des Stellglieds bestimmen die erzielbare Durchflussgenauigkeit. | Lediglich die Präzision der mikrofluidischen Kanalstrukturen bestimmt die erzielbare Durchflussgenauigkeit. |
| Begrenzter Dynamikbereich: Es ist nicht praktikabel sehr kleine und größere Durchflüsse in einem Ventil abzubilden: Kleiner Durchfluss erfordert präzise Mechanik da kleinster Ventilspalt, diese präzise Mechanik ist für größere Durchflüsse jedoch zu langsam. | Unbegrenzter Dynamikbereich: Das Stellglied kann - unabhängig vom zu realisierenden Durchfluss - die Schaltpositionen immer gleich Anfahren, da die Veränderung des Durchflusses komplett durch den jeweiligen mikrofluidischen Kanal realisiert wird. |

Mit anderen Worten - mit einer relativ groben Ventilaktorik können auch geringe Massenströme präzise gedrosselt werden.

Kältetechnik

In der Kältetechnik werden als "kleine" (Expansions-)Ventile bevorzugt folgende Ventiltypen eingesetzt:

- Wegeventile basierend auf drehbaren Scheiben (nur an/aus)

- Wegeventile allgemein (nur an/aus bzw. Pulsweitenmodulation)

- Nadelventile (stetige Verstellbarkeit)

- Stromventile basierend auf drehbaren Scheiben (zumindest als Patent)

Weitere technische Ausführungsformen

*Zugrundeliegendes Wegeventil*

Die Umsetzungsformen A und B können als Kombination eines (makroskopischen) Wegeventils basierend auf einer Drehscheibe und (mikroskopischer) mikrofluidischer Kanälen zur Drosselung verstanden werden.
Alternativ wäre es jedoch auch möglich jedes beliebige andere (translatorische, rotatorische,...) Wegeventil als Grundlage zu verwenden, solange die notwendige Anzahl an Schaltstufen zur Verfügung gestellt wird.

Antrieb

Es wird vorgeschlagen einen Schrittmotor zum Antrieb der Drehscheibe 10, 20 zu verwenden. Grundsätzlich könnten hier auch andere Antriebsformen zum Einsatz kommen.

Verschaltung der Kanalstrukturen

Grundsätzlich können die mikrofluidischen Kanalstrukturen, ähnlich einem elektrischen Widerstandsnetzwerk, auf unterschiedliche Weise verschalten werden:

    a) Individuell (siehe Figuren 1A bis 1D sowie 2A und 2B)
    b) Seriell (siehe Figuren 3A, 3B, 4A, 4B)
    c) Parallel (siehe Figuren 5A, 5B, 6A, 6B)
    d) sowie Kombinationen aus a)-c) (siehe Figur 7)

Bei beiden Umsetzungsformen A und B werden die Kanalstrukturen entsprechend a) individuell verschalten.

Anordnungen der Kanalstrukturen in Bezug auf die Drehscheibe

Die Umsetzungsformen A und B unterscheiden sich in Bezug auf die Anordnung der Kanalstrukturen:

- Geschlossene Kanalstruktur unterhalb der Drehscheibe (Umsetzungsform A)
- Geschlossene Kanalstruktur in der Drehscheibe (Umsetzungsform B)

Grundsätzlich können die mikrofluidischen Kanalstrukturen dabei auch wie folgt angeordnet sein:

- Offene Kanalstruktur auf der Unterseite der Drehscheibe (rotierend auf dem Ventilsitz)
- Offene Kanalstruktur an der Oberseite des Ventilsitzes (Drehscheibe gleitet darüber)

Mögliche Zusatzfunktionalitäten / speziell Kältetechnik

- Steuerung/Regelung durch Geräteelektronik
- Ventil enthält "Bypass", der beim Vakuumziehen in der Fertigung geöffnet wird (besser/schneller Vakuum im Kältekreislauf herstellen, Vermeidung von langen Vakuumierzeiten bzw. von zweiseitigem Vakuumziehen auf Hoch- und Niederdruckseite.

- Integration des Trockners: Ventil enthält Stoffe z.B. Zeolith, die in gesinterter Form oder Schüttgut Feuchtigkeit aufnehmen können und somit die Funktion des Trockners übernehmen:

    ◦ Stoffe können eine Filterfunktion für Partikel erfüllen.
    ◦ Stoffe können im Ventil oder im Rohranschluss platziert sein.
    ◦ Stoffe können so ausgeführt sein, dass sie wechselbar sind ohne das Ventil auszutauschen.

- Vor- bzw. nachgeschaltete Teil- oder Grunddrosselung:

    ◦ Ventil enthält z.B. Sinterkörper (ggf. als Teil des Trockners). Der Sinterkörper kann eine Teil- oder Grunddrosselung übernehmen, damit die Kanäle größer ausgelegt werden können und um das Verschmutzungsproblem zu umgehen.
    ◦ Dasselbe könnten natürlich auch erreicht werden, indem z.B. der Ein- oder Ausgang des Ventils bereits verengt ist bzw. ein Filter, Sinterkörper, Vorkapillare, etc. hinzugefügt wird.

- Ventil enthält Partikelfilter

    ◦ Partikelfilter kann tauschbar angeordnet sein, so dass das Ventil nicht ausgetauscht werden muss.

- Verschweißter Ventilkörper
- Positionierung des Ventils im Kältekreislauf

    ◦ Art der Befestigung

- Fluid

    ◦ Kältemittel kann gas/flüssig oder dampfförmig sein

Im Folgenden sind denkbare Ausführungsformen des erfindungsgemäßen Expansionsventils 100 nochmals stichpunktartig zusammengefasst:

- Drosselventil 100 für Fluide, das einen Fluidstrom blockiert oder drosselt,
- wobei das Drosselventil 100 mikrostrukturierte Elemente 22a, 22b, 23a, 23b, 24a, 24b, 25a, 25b, 26a, 26b enthält,
- wobei die Drosselung in diskreten Abstufungen erfolgt,
- wobei der einströmende Fluidstrom durch ein Stellglied blockiert oder auf einen oder mehrere Mikrokanäle verschaltet wird,
- wobei die Mikrokanäle innerhalb des Ventils wieder in einen einzigen ausströmenden Fluidstrom münden,
- wobei die Drosselfunktion hauptsächlich durch den Strömungswiderstand des Mikrokanals erzeugt wird,
- wobei zusätzlich zur Drosselung der verschaltbaren Mikrokanäle ein Teil der Drosselung (Grunddrosselung) durch einen bei Durchfluss immer durchströmte vor- oder nachgeschaltete Komponente (Widerstand) erzeugt wird,
- wobei jeweils kein oder nur ein Mikrokanal aktiv ist (Individualschaltung),
- wobei es sich bei dem Ventil um ein Drehventil handelt,
- wobei die Mikrokanäle in die Drehscheibe integriert sind:

    ◦ Scheibe mit Kanälen ist drehbar, oder

- wobei die Mikrokanäle unterhalb der Drehscheibe liegen:

    ◦ Kanäle sind nicht drehbar.

Ein Ausführungsbeispiel der oben erwähnten Ausführungsform A (Figuren 1A bis 1D) ist in Figur 9 dargestellt. Diese Ausführungsform eines erfindungsgemäßen Expansionsventils 100 weist eine einstufige Getriebeuntersetzung mit einem ersten Zahnrad 91 und einem damit in Eingriff stehenden zweiten Zahnrad 92 auf. Das zweite Zahnrad 92 ist in der vergrößerten Abbildung rechts oben näher abgebildet. Es ist mechanisch und vorzugsweise drehfest mit dem ersten Ventilelement 10 verbunden.

Die Abbildung rechts unten zeigt eine vergrößerte Darstellung des zweiten Ventilelements 20, das aus einem ersten Teil 20b und einem zweiten Teil 20a besteht. Die Kanalstrukturen, und insbesondere die Drosselkanalstrukturen 22b, 23b, 24b können wie gezeigt im oberen Plattenteil 20a enthalten sein

Die Kanalstrukturen, und insbesondere die Drosselkanalstrukturen 22b, 23b, 24b können aber auch im unteren Plattenteil 20b oder gegebenenfalls auch in beiden Plattenteilen 20a, 20b ausgebildet sein.

Das Ausbilden der Kanalstrukturen bzw. Drosselkanalstrukturen 22b, 23b, 24b im oberen Plattenteil 20a kann fertigungstechnische Vorteile aufweisen. Ausgehend von der Einlassbohrung führen die Drosselkanäle 22b, 23b, 24b auf einen Sammelkanal 55 (mit keiner oder kaum Drosselung), der wiederum zum Auslass 102 führt. Die Steuerung der Einlässe wird über eine Ausnehmung 11 in der Drehscheibe (erstes Ventilelement) 10 realisiert.

Ein Ausführungsbeispiel der oben erwähnten Ausführungsform B (Figuren 2A und 2B) ist in Figur 10 dargestellt. Diese Ausführungsform eines erfindungsgemäßen Expansionsventils 100 weist ebenfalls eine einstufige Getriebeuntersetzung mit einem ersten Zahnrad 91 und einem damit kämmenden zweiten Zahnrad 92 auf.

Das zweite Zahnrad 92 ist in der Vergrößerung (Abbildung rechts) näher abgebildet. Das zweite Zahnrad 92 bildet den zweiten Teil 20a des zweiteiligen zweiten Ventilelements 20. Die darunter abgebildete Drehscheibe 20b, die mechanisch und vorzugsweise drehfest mit dem zweiten Zahnrad 92 verbunden ist, bildet den ersten Teil 20b des zweiteiligen zweiten Ventilelements 20.

Die Kanalstrukturen, und insbesondere die Drosselkanalstrukturen 22b, 23b, 24b können wie gezeigt im oberen Teil 20a des zweiteiligen zweiten Ventilelements 20 ausgebildet sein. Alternativ oder zusätzlich können die Kanalstrukturen, und insbesondere die Drosselkanalstrukturen 22b, 23b, 24b, aber auch im unteren Teil 20b des zweiteiligen zweiten Ventilelements 20, oder gegebenenfalls auch in beiden Teilen 20a, 20b des zweiteiligen zweiten Ventilelements 20 ausgebildet sein.

Vorzugsweise werden Kanalstrukturen im oberen oder unteren Teil 20a, 20b des zweiteiligen zweiten Ventilelements 20 vorgesehen. Zwischen den beiden Teilen 20a, 20b des zweiteiligen zweiten Ventilelements 20 kann eine Dichtung 93, z.B. eine Teflon-Flachdichtung, angeordnet sein.


**Weitere Ausführungsbeispiele der Erfindung können vorsehen:**


- Fünf anstelle der hier abgebildeten drei Drosselkanäle, plus eine zuvor beschriebene "Offen"-Position, plus eine bekannte, zuvor beschriebene, Stopp-Position
- Energetisch in optimaler Reihenfolge angeordnete Schaltstufen
- Filterstrukturen bzw. Rückhalteelemente


Die oben beschriebenen Kanalstrukturen 22a, 22b; 23a, 23b; 24a, 24b; 25a, 25b können durch Partikel 210, die größer als der Kanalquerschnitt sind, verstopft werden. Eine Verstopfung reduziert oder unterbindet komplett den Durchfluss durch das Expansionsventil 100 und verändert so das gesamte Betriebsverhalten.

Um dies zu verhindern können Filterstrukturen bzw. Rückhalteelemente 200

- vor dem Expansionsventil 100,
- am / im Ventilgehäuse 30,
- am Eingang zu / innerhalb der Kanalstrukturen (siehe später "Sammelkanalstruktur")

angebracht werden.

Eine Filterstruktur bzw. ein Rückhalteelement 200 besteht typischerweise aus einer Vielzahl von Poren, die kleiner sind als die herauszufilternden Partikel 210. Partikel 210, die größer sind als die Poren des Filters 200, können daher weder in die Filterstruktur 200 eindringen noch diese durchdringen. Dieser Effekt wird als Siebeffekt bezeichnet. Durch die Vielzahl paralleler Poren reduzieren eine oder mehrere verstopfte Poren dabei nicht oder nur geringfügig den Durchfluss durch den Filter 200. Die Poren müssen dabei nicht notwendigerweise gleich groß sein.

Die Filterstruktur bzw. das Rückhalteelement 200 kann dabei so ausgelegt sein, dass es keine signifikante Drosselung des Fluidstroms (z.B. Kältemittel) hervorruft. Die Filterstruktur bzw. das Rückhalteelement 200 kann aber auch so ausgelegt sein, dass es neben den nachfolgenden Drosselkanalstrukturen 21b bis 27b einen Teil der Gesamtdrosselung erzeugt, d.h. das Rückhalteelement 200 erzeugt beispielsweise fix 20% der Maximaldrosselung und die nachfolgenden Drosselkanalstrukturen 21b bis 27b realisieren je nach Schaltposition noch die restlichen 0% - 80%.

Die Filterstruktur bzw. das Rückhalteelement 200 kann gleichzeitig auch als Feuchtigkeitssammler dienen (z.B. zusammen mit Zeolith), um Restfeuchte aus dem Kältesystem zu entfernen.

Filtersysteme 200 können z.B. durch Lochplatten, Sintermaterialien, Gewebe, Netze, offenporigen Schwämme, etc. aber auch durch Kanalstrukturen, und insbesondere durch die oben beschriebenen Filterkanalstrukturen, realisiert werden.

In Bezug auf derartige Filterkanalstrukturen 222a bis 222u kann eine Filterwirkung durch eine Filterstruktur bestehend aus parallelen Filterkanalstrukturen (Eingangskanäle) 222a bis 222u erzeugt werden, die gleiche oder kleinere Abmessungen haben als die nachfolgende Kanalstruktur (Drosselkanalstruktur) 21b bis 27b und wieder auf den relevanten Kanal gebündelt werden, wobei die Eingangskanäle nicht notwendigerweise alle im Querschnitt und Länge gleich sein müssen, wie bereits zuvor unter Bezugnahme auf die Figuren 11 bis 16 beschrieben wurde. Wenn also beispielsweise die Kanalstruktur 50x40 im Querschnitt hat, dann könnte sowohl 40x40 als Filter fungieren, aber auch 100x30, d.h. es ist nicht zweckmäßig von kleinerem "Querschnitt" bei den Eingangskanälen zu sprechen.

Die Kanalstrukturen 11, 22a, 22b, 102 müssen ebenfalls nicht notwendigerweise gleichförmig sein, z.B. gleichbleibender Durchmesser. Auch asymmetrische oder andere Geometrien sind möglich, z.B. konisch oder alternierende Innendurchmesser, was für alle der oben beschriebenen Kanalstrukturen 11, 22a, 22b, 102 gilt.

Wird ein Eingangskanal (Filterkanalstruktur) 222a bis 222u durch einen Partikel 210 blockiert, kann das Fluid immer noch durch die anderen Eingangskanäle 222a bis 222u einströmen. Anzahl und Größe der Eingangskanäle 222a bis 222u können dabei zusätzlich so gewählt sein, dass bis zu einem gewissen Maß verstopfte Eingangskanäle 222a bis 222u den Durchfluss nicht oder nur geringfügig verringern.

In jedem Fall ist es so, dass bei einem erfindungsgemäßen Expansionsventil 100 anstelle der nachfolgend beschriebenen parallelen Eingangskanäle (Filterkanalstrukturen) 222a bis 222u auch alternativ andere Filter eingesetzt werden können. Die parallelen Eingangskanäle 222a bis 222u können eine Filterstruktur bzw. ein Rückhalteelement 200 bilden, das größere und/oder weniger Poren (also Poren hier Kanäle) aufweist als andere bekannte Filtertypen. Eine erfindungsgemäße Filterstruktur (Rückhalteelement) 200 kann in unterschiedlicher Weise realisiert werden, z.B.

- mechanisch gefertigt, z.B. durch Fräsen, Prägen oder Bohren,
- aus offenporigen, geschäumten oder gesinterten Materialien,
- aus mehrlagigen Siebstrukturen zusammengesetzt werden,
- aus einer Schüttung gleichförmiger Kleinstkörper bestehen.

Solch eine in Figur 12 gezeigte Filterstruktur 200 mit parallelen Eingangskanälen 222a bis 222g kann individuell jedem relevanten Kanal, und insbesondere jeder Drosselkanalstruktur 22b, 23b, 24b, 25b, vorgeschalten werden.

Im Folgenden wird die Anordnung der Filterkanalstrukturen 222a bis 222u jeweils exemplarisch anhand der in Figur 2A abgebildeten Aufsicht auf den unteren Teil 20b des zweiteiligen zweiten Ventilelements 20 beschrieben.

Kompatibilität Filterkonzepte in Bezug auf die oben beschriebenen Varianten des Expansionsventils 100: Ventilvarianten (Variante B, siehe Figuren 2A und 2B), die Drosselkanalstrukturen 21b bis 27b in der drehbaren Scheibe 20a, 20b haben:

- Grundsätzlich kompatibel (siehe Figur 2A)

Ventilvarianten (Variante A, siehe Figuren 1A bis 1D) mit Kanalstrukturen 21b bis 27b unter der drehbaren Scheibe 20a, 20b:

- parallele Eingangskanäle 222a bis 222u individuell vor jedem Kanal möglich (Figur 11)
- alle weiteren Konzepte könnten beinhalten, dass man die Filterkanalstruktur 222a bis 222u auch hier dann in die drehbare Scheibe 20a, 20b integriert

Es ist auch möglich mehrere oder alle relevanten Kanalstrukturen an eine zentrale Filterstruktur (Sammelkanalstruktur) 230 anzuschließen wie in Figur 13 gezeigt.

Eine gegebenenfalls vorhandene "Offen"-Position, d.h. eine Position in der keine oder nahezu keine Drosselung durch die Kanalstrukturen erfolgt kann hiervon unabhängig sein. Eine solche "Offen"-Position ist zum Beispiel durch die in Figur 13 abgebildete Schaltstufe 6 mit größerem Querschnitt veranschaulicht.

Neben dem Strömungswiderstand der Kanalstrukturen selbst, können allgemein weitere geometrische Veränderungen im Strömungsverlauf zu einer zusätzlichen Drosselung (zusätzliche Druckverluste) führen, die von Strömungsgeschwindigkeit und Dichte des Fluids abhängen und in der Fachliteratur hinreichend bekannt sind. Hierzu zählen beispielsweise:

- (Sprungartige) Verengungen im Querschnitt

- (Sprungartige) Erweiterungen im Querschnitt

- Bögen

- Umlenkungen

- ...

Eine weitere Anordnung mit zentraler Filterstruktur (Rückhalteelement) 200 ist in Figur 14 gezeigt. Der Vorteil dieser Anordnung ist, dass einerseits nur eine Filterstruktur bzw. ein Rückhalteelement 200 notwendig ist und andererseits Kanallänge eingespart werden kann, weil Kanalstruktursegmente $I_a$ bis $V_a$ und $I_b$ bis $V_b$ für die verschiedenen Schaltstufen mehrfach genutzt werden können:

| Stufe / Position 1: | kleinster Durchfluss / größte Drosselung |
| Stufe / Position 2: | größter Durchfluss / geringste Drosselung |

| Stufe 1: | Kanalsegmente Va + IVa + IIIa + IIa + Ia + Ib |
| Stufe 2: | Kanalsegmente Va + IVa + IIIa + IIa + IIb |
| Stufe 3: | Kanalsegmente Va + IVa + IIIa + IIIb |
| Stufe 4: | Kanalsegmente Va + IVa + IVb |
| Stufe 5: | Kanalsegmente Va + Vb |

Es ist aber auch denkbar, dass die Filterstruktur bzw. das Rückhalteelement 200 an eine breitere "Sammelkanalstruktur" ohne Drosselfunktion 26b bzw. 230, wie in Figur 15 gezeigt, angeschlossen ist, der gleichzeitig die bereits angesprochene "Offen"-Position, hier Schaltstufe 6, realisieren kann.

Eine solche "Offen"-Position kann verschiedene Funktionen haben:

- Sie ermöglicht ein schnelleres Evakuieren des Kältekreislauf vor Befüllung mit Kältemittel, da keine bzw. keine wesentliche Drosselung erfolgt
- Sie kann im Betrieb als Abtaufunktion genutzt werden, d.h. der Kompressor baut Druck bei geschlossenem Ventil in "Stopp"-Position 0 auf, das Kältemittel wird heiß, dass Ventil fährt in die "Offen"-Position 6 und der Verdampfer wird mit warmen Kältemittel geflutet. Eine solche Abtaufunktion kann zusätzlich durch eine herkömmliche elektrische Heizung unterstützt werden. Weiterhin kann diese Funktion in Abhängigkeit der Türöffnungen oder der Uhrzeit oder einer Nutzereingabe erfolgen, um das Abtauen zu einer unkritischen Zeit zu starten, z.B. im Hinblick auf Geräuschentwicklung.
- Sie kann zum Reinigen der Filterstruktur und Hindurchführen von Partikeln durch das Ventil im Sinne einer Spülfunktion, wie im Folgenden beschrieben, verwendet werden.

**Weitere Maßnahmen zum Zurückhalten von Partikeln**

Es wäre auch denkbar, dass der Kältemittelstrom durch geeignete Mittel 250 (Figur 18) so geführt wird, dass sich im Ventilinnenraum Bereiche 252 ausbilden, in denen sich mitgeführte Partikel absetzen können, z.B. wenn der Ventilinnenraum gekennzeichnet ist durch

- Mittel 250, die den Kältemittelstrom so steuern, dass sich Bereiche 252, 253 ausbilden, in denen sich mitgeführte Partikel 210 absetzen können (z.B. Prallwände 251, Rohrerweiterungen 255 oder zusätzliche Bauraumerweiterungen 255). Wichtig für eine Umsetzung der angestrebten Filterwirkung sind eine starke Reduzierung der Strömungsgeschwindigkeit, fast bis zum Stilstand und ein möglichst großer Abstand zwischen Zu- und Abströmung in diesem Bereich
- Mittel, die zum Teil (< 100%) im Fluidstrom (z.B. Kältemittel) sind und in der Lage sind, Partikel zu fixieren (z.B. Filter). Der Kältestrom kann hierbei immer noch so gut wie ohne Drosselung passieren.
- Diese Mittel (Filter) können in diesen "Absetzbereichen" verortet sein.

Grundsätzlich kann eine Filter-/Kanalstruktur 222a bis 222u nur eine begrenzte Menge von Partikeln 210 zurückhalten ohne dass sich der Durchfluss durch das Expansionsventil 100 signifikant verringert. Ab einer gewissen Beladung mit Partikeln 210 ist z.B. der komplette Filter 200 verstopft und die Partikel 210 müssen entfernt, z.B. durch das Expansionsventil 100 hindurchgeführt, werden.

Wird die Filterstruktur bzw. das Rückhalteelement 200 derart gestaltet, dass die für die "Offen"-Position notwendige Kanalstruktur 26b an dem Rückhalteelement 200 vorbei führt, wie in Figur 16 gezeigt, dann strömt nach Schalten auf die "Offen"-Position 6 das Fluid (z.B. Kältemittel) geführt an dem Rückhalteelement 200 vorbei. Partikel 210 können so mitgerissen, durch das Expansionsventil 100 hindurchgeführt, und so das Rückhalteelement 200 wieder freigespült werden, da die "Offen-Funktion" 26b wesentlich größere Kanalquerschnitte als die Drosselkanalstrukturen 21b bis 25b zur Drosselung zur Verfügung stellt.

Weiterhin wäre es denkbar, dass wie bei der genannten Abtaufunktion bei geschlossenem Expansionsventil 100 gezielt Druck über den Kompressor aufgebaut wird und dann schlagartig über die "Offen"-Position abgebaut wird.

Eine solche Spülfunktion kann in regelmäßigen Abständen automatisch durchgeführt werden. Alternativ kann beispielsweise aber auch folgendes Schema zum Erkennen ob und wann eine solche Spülfunktion erfolgen soll angewendet werden:

1) Gerät merkt z.B. anhand Lufttemperatur, Verdampfertemperatur, Kompressorlaufzeit, Kompressorschaltstufe, Umgebungstemperatur, Druck und/oder Kombination aus den Parametern, dass Kälteleistung fehlt.
2) Spülfunktion wird aktiviert.
3) Wenn Spülfunktion erfolgreich, normaler weiterer Betrieb.
4) Wenn Spülfunktion nicht erfolgreich, Notlauffunktion, d.h. anderer z.B. nächsthöherer Kanal wird verwendet.

**Weitere Maßnahmen zum einlassseitigen Entfernen von Partikeln**

Weiterhin kann durch geeignete konstruktive Maßnahmen

- die Durchflussrichtung durch die Filter-/Kanalstruktur in einer Schaltposition umgekehrt und so wieder freigespült werden.
- Partikel 210 mechanisch abgestreift werden, d.h. wenn beispielsweise die Einlässe der Filter- oder Kanalstrukturen sich am Scheibenumfang befinden und an einer Stelle (bevorzugt am Anfang- oder Endanschlag) eine ortsfeste Abstreiferstruktur vorhanden ist, die beim Drehen der Scheibe am Umfang bürstenartig vorbeistreift.

Die Partikel 210 befinden sich in beiden Fällen wohl immer noch auf der "Einlassseite" und können sich ggf. erneut festsetzen, der Filter/Kanal kommt aber frei und bei erneuter Umkehr würden sie vielleicht/wahrscheinlich nicht mehr an derselben Stelle hängenbleiben und ggf. durch die "Offen"-Position herausgespült werden können.

**Weitere Maßnahmen zum Entfernen und Durchspülen von Partikeln durch das Ventil**

Weiterhin kann durch geeignete konstruktive Maßnahmen

- der Querschnitt eines oder mehrerer Filterkanäle 222a bis 222u bzw. Drosselkanäle 21b bis 27b in einer Schaltposition temporär vergrößert werden, so dass gegebenenfalls blockierende Partikel 210 durch das Expansionsventil 100 hindurch geführt werden können:

  Durch die Nutzung einer zusätzlichen Ebene in der Deckplatte 20a des Expansionsventils 100 könnte durch einen geeigneten Drehmechanismus der Strömungskanal regelmäßig bzw. auch für spezielle Regelungsanforderungen kurzzeitig soweit durch einen Bypasskanal 223 (Figur 17) vergrößert werden, dass ein Durchspülen der Partikel 210 durch die Struktur möglich wird. Die Kanalüberdeckung des Drossel- und des Bypasskanals 223 muss mindestens am Ein- und Austritt 224, 227 des Drosselkanals 21b gegeben sein. Um das Abströmen des Partikels 210 über die Parallelschaltung eines ausreichend großen Kanals zu unterstützen wäre eine trapezförmige Kanalform, welche sich zum Bypasskanal 223 hin öffnet, vorteilhaft.

  Des Weiteren sollte Ein- uns Austritt 224, 227 der Drosselkanäle 21b im gleichen Abstand und in gleicher Richtung in der Drehscheibe angebracht sein, da so der Bypasskanal 223 für alle in dieser Weise angeordneten Drosselkanäle 21b, 22b, 23b genutzt werden kann. Im Gegensatz dazu kann ein Drosselkanal 21b, 22b, 23b auch genauso ausgeführt sein, dass er von dem Bypasskanal 223 unberührt bleibt.

- Ein Spülen durch Abheben der Deckscheibe 20a erfolgt:

  Es gibt eine Drehposition der die Drosselkanalstrukturen 22b, 23b, 24b aufweisenden Drehscheibe 20b gegenüber der Deckscheibe 20a (Figur 2A), bei der sich beide Scheiben 20a, 20b bis zu einem maximalen Abstand voneinander abheben und so einen ausreichend großen Kanal zum Evakuieren bzw. zum Spülen des Expansionsventils 100 freigeben.

  Dieses Abheben kann mechanisch, magnetisch oder hydraulisch, z.B. vor oder mit dem Erreichen einer Stop- oder Referenzposition, realisiert werden.

Die Dichtheit der Kanalstrukturen untereinander kann fest realisiert sein, was bedeutet, dass durch das Abheben der Platten 20a, 20b nur der Drosselkanaleintritt freigegeben wird, da im Wesentlichen dort Partikel 210 die zur Verstopfung des Kanals führen stecken bleiben, oder es gibt eine flexible Dichtung, die mit dem Abheben beider Platten 20a, 20b gelöst und im Anschluss wieder geschlossen wird.

Bei der Anordnung an einer Stoppposition, könnte durch das Abheben beider Platten 20a, 20b das Schließen des Expansionsventils 100 an einer separaten Dichtfläche realisiert werden, was unter Umständen das Dichten der Kanalstrukturen untereinander, sowie die Verbesserung der Stoppfunktion vereinfacht. Das Spülen der Struktur würde dann über das Kältemittel zwischen Drosselkanal und verschlossener Eintrittsöffnung bzw. über den Kältemitteleintritt beim Öffnen des Ventils realisiert werden.

**Anordnung der Schaltstufen (Figuren 21a bis 21d)**

Es ist ersichtlich, dass über die Anordnung und Art der verschiedenen Schaltstufen signifikante Zusatzfunktionen/Betriebsqualitäten des erfindungsgemäßen Expansionsventils 100 erzeugt werden können:

i. Eine Spülfunktion wie vorhergehend beschrieben.
ii. Reduzierter Energieverbrauch durch energieeffiziente Anordnung der Schaltstufen und Minimierung des Schrittmotorbetriebs.
iii. Reduzierte Geräuschentwicklung durch Minimierung des Schrittmotorbetriebs.

Bei einem klassischen Expansionsventil auf Basis eines schrittmotorgesteuerten Nadelventils erhöht sich ausgehend vom geschlossenen Zustand bei Aktivierung des Schrittmotors der Durchfluss, d.h. die Drosselung verringert sich.
Das bedeutet, dass ausgehend von der Schrittanzahl N=0 (geschlossener Zustand) sich mit jedem Schritt die Drosselung sukzessive verringert bis bei Schrittanzahl N=$N_{max}$ die Minimaldrosselung (= Maximaldurchfluss durch das Expansionsventil) erreicht wird, d.h. die Drosselung ist proportional zur Anzahl N gefahrener Schritte. Folglich müssen zum Erreichen einer bestimmten Drosselstufe immer alle darunterliegenden Drosselstufen durchlaufen werden, auch wenn diese eigentlich nicht benötigt werden. Zum Schließen eines solchen konventionellen Expansionsventils muss die Anzahl N gefahrener Schritte entsprechend wieder zurückgefahren werden.
Das oben beschriebene erfindungsgemäße Expansionsventil 100 bietet hier mehr Möglichkeiten wie in den Figuren 21a bis 21d schematisch gezeigt ist. Ausgehend von einer Stopp-Position (Blockierschaltstellung 380) N=0 kann durch die Anordnung der Schaltstufen der Durchfluss

- stetig linear ansteigend (Figur 21a)
- stetig linear absteigend (Figur 21b)
- beliebig (nichtlinear) festgelegt werden (Figur 21c)

Es ist weiterhin möglich jeden Bereich zwischen den Schaltstufen als Stopp-Position zu verwenden. Es können aber auch eine oder mehrere "breitere" Stopp-Positionen realisiert werden (Figur 21d).
Wobei dann z.B.

| N=0: | Schaltstufe 0 |
|------|---------------|
| N=10: | Schaltstufe 1 |
| N=20: | Schaltstufe 2 |
| ... | |

Figur 21d zeigt Anschlagspositionen und eine exemplarische Anordnung um die Stopp-Position entsprechend der Nutzungshäufigkeit: 1 am häufigsten, 6 am wenigsten.
Sofern der Schrittmotor über keine Positionsrückgabe verfügt, was gegebenenfalls durch einen Inkrementalgeber oder auch durch rein elektronische Maßnahmen realisiert werden kann, muss berücksichtigt werden, dass trotz Schrittkommando unter Umständen kein Schrittsprung stattgefunden hat. In regelmäßigen Abständen sollte daher eine Fahrt an einen definierten Anschlag erfolgen um die Schrittposition zu "Nullen". Ein solcher Anschlag kann sich generell bei N = 0 und N = $N_{max}$ befinden.
Idealerweise erfolgt die Anordnung der Schaltstufen 381 bis 386 ausgehend von einer Stopp-Position 380 deshalb so, dass einerseits häufig benötigte Schaltstufen mit möglichst wenigen Schritten angefahren werden und gleichzeitig regelmäßig, im Idealfall ohne zusätzliche Schrittfahrt, eine Anschlagsposition angefahren wird, wobei:

- Häufig benötigte Schaltstufen sind diejenigen Schaltstufen, die im normalen Betrieb, z.B. mehrmals am Tag, benötigt werden.
- Wenig benötigte Schaltstufen sind beispielsweise die "Offen-Funktion", die nur während der Herstellung und ggf. später zum Freispülen von Partikeln oder zum Abtauen benötigt werden. Hierzu zählt auch die Schaltstufe für die Inbetriebnahme des Geräts.

Dies berücksichtigt auch, dass beispielsweise vorteilhaft während des Verdichterbetriebs sukzessive von einer Schaltstufe auf eine oder mehrere andere Schaltstufen umgeschaltet wird, um so z.B.

- dynamisch den Durchfluss und so die Kälteleistung an die Anforderungen anzupassen,
- zu erreichen, dass gegen Ende des Verdichterbetriebs der Druck im Verdampfer schnell abnimmt und dann konstant ideal weiterfährt.

Ein weiterer Aspekt des erfindungsgemäßen Expansionsventils 100 besteht darin, dass das Durchführen bzw. Loswerden von Partikeln 210 durch das Expansionsventil 100, an den Kanalstrukturen 21b vorbei, durch gezieltes Abheben der gesamten Scheibe (z.B. erstes Ventilelement 10) vom Ventilsitz (z.B. zweites Ventilelement 20) an einer oder mehreren Drehpositionen erfolgt, wie in den Figuren 19A und 19B beispielhaft skizziert. Gleichzeitig kann so auch die Offen-Position realisiert werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1.  Expansionsventil (100) zum Vermindern eines Drucks eines durch das Expansionsventil (100) entlang eines Fluidströmungspfads (110, 111, 112, 121, 122, 123) hindurchfließenden Fluids, wobei das Expansionsventil (100) aufweist:

    wenigstens einen Fluideinlass (101) und wenigstens einen Fluidauslass (102),
    ein erstes Ventilelement (10) mit zumindest einer ersten Kanalstruktur (11),
    ein zweites Ventilelement (20) mit zumindest einer zweiten Kanalstruktur (22a, 22b) und einer dritten Kanalstruktur (23a, 23b),
    wobei das erste Ventilelement (10) und das zweite Ventilelement (20) relativ zueinander bewegbar sind,
    wobei in einer ersten Stellung der Ventilelemente (10, 20) die erste Kanalstruktur (11) und die zweite Kanalstruktur (22a, 22b) zueinander ausgerichtet sind und einen ersten Fluidströmungspfad mit einem ersten Strömungswiderstand zwischen dem Fluideinlass (101) und dem Fluidauslass (102) bilden,
    wobei in einer zweiten Stellung der Ventilelemente (10, 20) die erste Kanalstruktur (11) und die dritte Kanalstruktur (23a, 23b) zueinander ausgerichtet sind und einen zweiten Fluidströmungspfad mit einem zweiten von dem ersten Strömungswiderstand verschiedenen Strömungswiderstand zwischen dem Fluideinlass (101) und dem Fluidauslass (102) bilden, und
    wobei die zweite Kanalstruktur (22a, 22b) einen ersten variablen oder konstanten Strömungsquerschnitt aufweist, und wobei die dritte Kanalstruktur (23a, 23b) einen von dem ersten Strömungsquerschnitt unterschiedlichen zweiten variablen oder konstanten Strömungsquerschnitt aufweist, wobei die unterschiedlichen Strömungsquerschnitte dem Fluid unterschiedliche Strömungswiderstände entgegensetzen und die Durchflussrate des Fluids unterschiedlich stark drosseln.

2.  Expansionsventil nach Anspruch 1,
    wobei der Betrag einer Drosselung der Durchflussmenge des Fluids durch den Strömungswiderstand der einzelnen Kanalstrukturen bestimmt wird.

3.  Expansionsventil (100) nach einem der vorhergehenden Ansprüche,
    wobei sich die erste Kanalstruktur (11) in dem ersten Ventilelement (10) zumindest abschnittsweise in axialer Richtung (33) erstreckt, und/oder
    wobei sich die zweite und dritte Kanalstruktur (22a, 22b; 23a, 23b) in dem zweiten Ventilelement (20) zumindest abschnittsweise (22b, 23b) in radialer Richtung (34) und/oder in axialer Richtung (33) erstrecken, und

wobei die radialen Abschnitte (22b, 23b) den Hauptanteil zur Drosselung des durch die Kanalstrukturen hindurchfließenden Fluids beitragen.

4. Expansionsventil (100) nach einem der vorhergehenden Ansprüche,
wobei das erste Ventilelement (10) eine dem zweiten Ventilelement (20) zugewandte Fläche (12) aufweist und das zweite Ventilelement (20) relativ zu dem ersten Ventilelement (10) in einer Ebene ($E_1$) parallel zu dieser Fläche (12) bewegbar ist.

5. Expansionsventil (100) nach einem der vorhergehenden Ansprüche,
wobei das zweite Ventilelement (20) zweiteilig (20a, 20b) ausgebildet ist, wobei ein erster Teil (20b) des zweiten Ventilelements zumindest einen Abschnitt (22b, 23b) der zweiten und dritten Kanalstrukturen (22a, 22b; 23a, 23b) sowie den Fluidauslass (102) aufweist, wobei diese Abschnitte (22b, 23b) der zweiten und dritten Kanalstrukturen (22a, 22b; 23a, 23b) innerhalb des ersten Teils (20b) des zweiten Ventilelements jeweils mit dem Fluidauslass (102) verbunden sind, und/oder
wobei das erste Ventilelement (10) drehbar auf dem zweiten Ventilelement (20) angeordnet ist, und wobei mittels einer Drehpositionierung der ersten Kanalstruktur (11) jeweils eine der zweiten und dritten Kanalstrukturen (22a, 22b, 23a, 23b) freigeschaltet wird, indem die erste Kanalstruktur (11) in verschiedenen Stellungen der Ventilelemente (10, 20) wahlweise zu einer der in dem zweiten Ventilelement (20) ausgebildeten zweiten und dritten Kanalstrukturen (22a, 22b, 23a, 23b) ausgerichtet wird, und/oder
wobei die zweite und dritte Kanalstruktur (22a, 22b, 23a, 23b) jeweils in einer umlaufenden Kanalstruktur (55) münden, die die zweiten und dritten Kanalstrukturen (22a, 22b, 23a, 23b) untereinander verbindet und eine gemeinsame Zuführung zu dem Fluidauslass (102) bildet.

6. Expansionsventil nach Anspruch 5,
wobei zumindest ein Abschnitt (22a, 23a) der zweiten und dritten Kanalstrukturen (22a, 22b; 23a, 23b) innerhalb des zweiten Teils (20a) des zweiteiligen zweiten Ventilelements (20) angeordnet ist, und wobei der erste Teil (20b) des zweiteiligen zweiten Ventilelements (20) den Fluidauslass (102) aufweist und zumindest ein weiterer Abschnitt (22b, 23b) der zweiten und dritten Kanalstrukturen (22a, 22b, 23a, 23b) innerhalb des ersten Teils (20b) des zweiteiligen zweiten Ventilelements (20) ausgebildet und mittels der umlaufenden Kanalstruktur (55) jeweils mit dem Fluidauslass (102) verbunden ist, oder
wobei der erste Teil (20b) des zweiteiligen zweiten Ventilelements (20) den Fluidauslass (102) aufweist, und die zweiten und dritten Kanalstrukturen (22a, 22b, 23a, 23b) innerhalb des zweiten Teils (20a) des zweiteiligen zweiten Ventilelements (20) ausgebildet und mittels der umlaufenden Kanalstruktur (55) jeweils mit dem Fluidauslass (102) verbunden sind.

7. Expansionsventil (100) nach einem der Ansprüche 1 bis 4,
wobei das Expansionsventil (100) eine Abdeckung (30) aufweist, wobei die Abdeckung (30) unbeweglich mit dem ersten Ventilelement (10) verbunden ist und das zweite Ventilelement (20) innerhalb der Abdeckung (30) relativ zu dem ersten Ventilelement (10) bewegbar angeordnet ist, und
wobei die erste Kanalstruktur (11) den Fluidauslass (102) des Expansionsventils (100) bildet, und wobei mittels Drehpositionierung des zweiten Ventilelements (20) auf dem ersten Ventilelement (10) jeweils eine der zweiten und dritten Kanalstrukturen (22a, 22b, 23a, 23b) freigeschaltet wird, indem in verschiedenen Stellungen der Ventilelemente (10, 20) wahlweise jeweils eine der zweiten und dritten Kanalstrukturen (22a, 22b, 23a, 23b) des zweiten Ventilelements (20) zu der ersten Kanalstruktur (11) des ersten Ventilelements (10) ausgerichtet wird.

8. Expansionsventil (100) nach einem der vorhergehenden Ansprüche,
wobei in der ersten und zweiten Stellung der Ventilelemente (10, 20) jeweils genau eine einzige der zweiten und dritten Kanalstrukturen (22a, 22b; 23a, 23b) des zweiten Ventilelements (20) mit der ersten Kanalstruktur des ersten Ventilelements (10, 20) ausgerichtet ist, um einen einzigen Fluidströmungspfad zwischen dem Fluideinlass (101) und dem Fluidauslass (102) zu bilden.

9. Expansionsventil (100) nach einem der Ansprüche 1 bis 7,
wobei die zweite Kanalstruktur (22a, 22b) und die dritte Kanalstruktur (23a, 23b) innerhalb des zweiten Ventilelements (20) zumindest abschnittsweise (22b, 23b) miteinander verbunden sind, wobei sich in der zweiten Stellung der Ventilelemente (10, 20) der zweite Fluidströmungspfad aus der zweiten und der damit verbundenen dritten Kanalstruktur zusammensetzt (22b, 23b), und der zweite Fluidströmungspfad einen Gesamtströmungswiderstand aufweist, der sich aus dem Strömungswiderstand der zweiten Kanalstruktur (22b) und dem Strömungswiderstand der damit verbundenen dritten Kanalstruktur (23b) zusammensetzt, oder

wobei das erste Ventilelement (10) mindestens eine vierte Kanalstruktur (14) aufweist, und wobei in der ersten Stellung der Ventilelemente (10, 20) zusätzlich die dritte Kanalstruktur (23a, 23b) und die vierte Kanalstruktur (14) zueinander ausgerichtet sind und einen dritten Fluidströmungspfad mit einem dritten Strömungswiderstand zwischen dem Fluideinlass (101) und dem Fluidauslass (102) bilden.

10. Expansionsventil (100) nach einem der vorhergehenden Ansprüche,
wobei das Expansionsventil (100) ein Rückhalteelement (200) zum Zurückhalten eines in dem Fluid befindlichen Partikels (210) aufweist, und
wobei das Rückhalteelement (200) mindestens zwei Filterkanalstrukturen (222a, 222b) aufweist, die jeweils mit zumindest einer Drosselkanalstruktur (22b) fluidisch gekoppelt sind, und
wobei der Querschnitt der Filterkanalstrukturen (222a, 222b) kleiner als oder gleich groß wie der Querschnitt der jeweils fluidisch damit gekoppelten Drosselkanalstruktur (22b) ist, und/oder
wobei zumindest eine Filterkanalstruktur (222a, 222b) und zumindest eine Drosselkanalstruktur (22b, 23b) jeweils einen eckigen Querschnitt aufweisen und mindestens eine Seite der eckigen Filterkanalstruktur (222a, 222b) kleiner oder gleich groß ist als eine kürzeste Seite der eckigen Drosselkanalstruktur (22b, 23b), und/oder
wobei zumindest eine Filterkanalstruktur (222a, 222b) und zumindest eine Drosselkanalstruktur (22b, 23b) jeweils einen runden Querschnitt aufweisen, wobei der Querschnitt der runden Filterkanalstruktur (222a, 222b) kleiner ist als der Querschnitt der runden Drosselkanalstruktur.

11. Expansionsventil (100) nach Anspruch 10,
wobei zwischen den Filterkanalstrukturen (222a, 222b) und den Drosselkanalstrukturen (22b, 23b) eine Sammelkanalstruktur (230) angeordnet ist, die jeweils mit den Filterkanalstrukturen (222a, 222b) und zumindest einer Drosselkanalstruktur (22b) fluidisch gekoppelt ist, sodass ein durch zumindest eine Filterkanalstruktur (222a, 222b) einströmendes Fluid in der Sammelkanalstruktur (230) gesammelt und in diese zumindest eine Drosselkanalstruktur (22b) weitergeleitet wird.

12. Expansionsventil (100) nach Anspruch 11,
wobei diejenige Drosselkanalstruktur (26) mit dem größten Querschnitt aller Drosselkanalstrukturen (21b, 22b, 23b, 24b, 25b, 26b) mit den Filterkanalstrukturen (222a bis 222g) verbunden und fluidisch gekoppelt ist, wobei diese eine Drosselkanalstruktur (26b) in Fluidströmungsrichtung vor den Filterkanalstrukturen (222a bis 222g) angeordnet ist, und/oder
wobei das Expansionsventil (100) in mehrere Stellungen bringbar ist, wobei in einer Freiflussschaltstellung (386) diejenige Drosselkanalstruktur (26b, 27b) mit dem größten Querschnitt aller Drosselkanalstrukturen (22b, 23b, 24b, 25b, 26b, 27b) den Fluidströmungspfad durch das Expansionsventil (100) bildet, und wobei in einer Blockierschaltstellung (380) ein Fluidströmungspfad blockiert ist.

13. Expansionsventil (100) nach Anspruch 12,
wobei das Expansionsventil (100) ausgebildet ist, um eine Abtaufunktion bereitzustellen, indem sich das Expansionsventil (100) zuerst in der Blockierschaltstellung (380) befindet, wobei sich das unter Druck stehende Fluid erwärmt, und das Expansionsventil (100) anschließend in die Freiflussschaltstellung (386) gebracht wird, wobei ein mit dem Expansionsventil (100) fluidisch gekoppelter Verdampfer mit dem erwärmten Fluid geflutet wird.

14. Expansionsventil (100) nach einem der vorhergehenden Ansprüche,
wobei das Expansionsventil (100) mittels der Relativbewegung zwischen dem ersten und dem zweiten Ventilelement (10, 20) in eine Blockierschaltstellung (380) und in mehrere Durchflussschaltstellungen (381 bis 386) bringbar ist, wobei das Expansionsventil (100) in jeder Durchflussschaltstellung (381 bis 386) einen Fluidströmungspfad mit jeweils unterschiedlichem Strömungswiderstand zwischen dem Fluideinlass (101) und dem Fluidauslass (102) bereitstellt, und wobei in der Blockierschaltstellung (380) ein Fluidströmungspfad zwischen dem Fluideinlass (101) und dem Fluidauslass (102) blockiert ist, und
wobei die einzelnen Durchflussschaltstellungen (381 bis 386), ausgehend von der Blockierschaltstellung (380), in ansteigender oder absteigender Reihenfolge bezüglich ihres jeweiligen Strömungswiderstandes angeordnet sind, sodass sich bei einer Relativbewegung der beiden Ventilelemente (10, 20) von einer Schaltstellung (381) zu der jeweils nächsten Schaltstellung (382) der jeweilige Strömungswiderstand erhöht beziehungsweise verringert, und/oder
wobei die einzelnen Durchflussschaltstellungen (381 bis 386), ausgehend von der Blockierschaltstellung (380), in einer Reihenfolge bezüglich ihres jeweiligen Strömungswiderstandes angeordnet sind, wobei diese Reihenfolge davon abhängig ist, wie häufig die jeweilige Schaltstellung (380 bis 386) im Betrieb benötigt wird.

37

**15.** Kühl- und/oder Gefriergerät mit einem Expansionsventil (100) nach einem der vorhergehenden Ansprüche.

**Claims**

1.   An expansion valve (100) for reducing a pressure of a fluid flowing through the expansion valve (100) along a fluid flow path (110, 111, 112, 121, 122, 123), the expansion valve comprising (100):

     at least one fluid inlet (101) and at least one fluid outlet (102),
     a first valve element (10) comprising at least one first channel structure (11),
     a second valve element (20) comprising at least one second channel structure (22a, 22b) and one third channel structure (23a, 23b),
     wherein the first valve element (10) and the second valve element (20) are movable relative to each other,
     wherein, in a first position of the valve elements (10, 20), the first channel structure (11) and the second channel structure (22a, 22b) are aligned with each other and form a first fluid flow path comprising a first flow resistance between the fluid inlet (101) and the fluid outlet (102),
     wherein, in a second position of the valve elements (10, 20), the first channel structure (11) and the third channel structure (23a, 23b) are aligned with each other and form a second fluid flow path comprising a second flow resistance differing from the first flow resistance between the fluid inlet (101) and the fluid outlet (102), and
     wherein the second channel structure (22a, 22b) comprises a first variable or constant flow area, and wherein the third channel structure (23a, 23b) comprises a second variable or constant flow area differing from the first flow area, wherein the different flow areas oppose different flow resistances to the fluid and throttle the flow rate of the fluid to different extents.

2.   The expansion valve according to claim 1,
     wherein the amount of throttling of the flow rate of the fluid is determined by the flow resistance of the individual channel structures.

3.   The expansion valve (100) according to any one of the preceding claims,
     wherein the first channel structure (11) in the first valve element (10) extends at least in sections in the axial direction (33), and/or
     wherein the second and third channel structures (22a, 22b; 23a, 23b) in the second valve element (20) extends at least in portions (22b, 23b) in the radial direction (34) and/or in the axial direction (33), and
     wherein the radial portions (22b, 23b) contribute the major proportion to throttling the fluid flowing through the channel structures.

4.   The expansion valve (100) according to any one of the preceding claims,
     wherein the first valve element (10) comprises a surface (12) facing the second valve element (20) and wherein the second valve element (20) is movable relative to the first valve element (10) in a plane ($E_1$) parallel to said surface (12).

5.   The expansion valve (100) according to any one of the preceding claims,
     wherein the second valve element (20) is configured in two parts (20a, 20b), wherein a first part (20b) of the second valve element comprises at least a portion (22b, 23b) of the second and third channel structures (22a, 22b; 23a, 23b) and the fluid outlet (102), wherein these portions (22b, 23b) of the second and third channel structures (22a, 22b; 23a, 23b) within the first part (20b) of the second valve element are each connected to the fluid outlet (102), and/or wherein the first valve element (10) is rotatably arranged on the second valve element (20), and wherein by means of a rotary positioning of the first channel structure (11) one of the second and third channel structures (22a, 22b, 23a, 23b) is released by the first channel structure (11) being aligned in different positions of the valve elements (10, 20) selectively to one of the second and third channel structures (22a, 22b, 23a, 23b) formed in the second valve element (20), and/or wherein the second and third channel structures (22a, 22b, 23a, 23b) each lead into a circumferential channel structure (55) interconnecting the second and third channel structures (22a, 22b, 23a, 23b) and forming a common supply to the fluid outlet (102).

6.   The expansion valve according to claim 5,
     wherein at least one portion (22a, 23a) of said second and third channel structures (22a, 22b; 23a, 23b) is arranged within the second part (20a) of the two-part second valve element (20), and wherein the first part (20b) of the two-part second valve element (20) comprises the fluid outlet (102), and at least one further portion (22b, 23b) of the second and third channel structures (22a, 22b, 23a, 23b) is formed within the first part (20b) of the two-part second valve element (20) and is connected to the fluid outlet (102) by means of the circumferential channel structure (55), or wherein the first part (20b) of the two-part second valve element (20) comprises the fluid outlet (102), and the second and third channel structures (22a, 22b, 23a, 23b) are formed within the second part (20a) of the two-part second valve element (20) and each are connected to the fluid outlet (102) by the circumferential channel structure (55).

7. The expansion valve (100) according to any one of claims 1 to 4,
wherein the expansion valve (100) comprises a cover (30), the cover (30) being immovably connected to the first valve element (10), and the second valve element (20) being movably arranged within the cover (30) relative to the first valve element (10), and
wherein the first channel structure (11) forms the fluid outlet (102) of the expansion valve (100), and wherein one of the second and third channel structures (22a, 22b, 23a, 23b) is released in each case by means of rotary positioning of the second valve element (20) on the first valve element (10), by selectively aligning in different positions of the valve elements (10, 20) in each case one of the second and third channel structures (22a, 22b, 23a, 23b) of the second valve element (20) with the first channel structure (11) of the first valve element (10).

8. The expansion valve (100) according to any one of the preceding claims,
wherein in the first and second positions of the valve elements (10, 20), in each case exactly one of the second and third channel structures (22a, 22b; 23a, 23b) of the second valve element (20) is aligned with the first channel structure of the first valve element (10, 20) to form a single fluid flow path between the fluid inlet (101) and the fluid outlet (102).

9. The expansion valve (100) according to any one of claims 1 to 7,
wherein the second channel structure (22a, 22b) and the third channel structure (23a, 23b) are interconnected within the second valve element(20) at least in portions (22b, 23b), wherein in the second position of the valve elements (10, 20) the second fluid flow path is composed of the second and third channel structures (22b, 23b) connected thereto, and the second fluid flow path comprises a total flow resistance composed of the flow resistance of the second channel structure (22b) and the flow resistance of the third channel structure (23b) connected thereto, or wherein the first valve element (10) comprises at least one fourth channel structure (14), and wherein in the first position of the valve elements (10, 20), the third channel structure (23a, 23b) and the fourth channel structure (14) are additionally aligned with each other and form a third fluid flow path comprising a third flow resistance between the fluid inlet (101) and the fluid outlet (102).

10. The expansion valve (100) according to any one of the preceding claims,
wherein the expansion valve (100) comprises a retention element (200) for retaining a particle (210) located in the fluid, and
wherein the retention element (200) comprises at least two filter channel structures (222a, 222b) which are each fluidly coupled to at least one throttle channel structure (22b), and
wherein the cross-section of the filter channel structures (222a, 222b) is smaller than or equal to the cross-section of the throttle channel structure (22b) fluidly coupled thereto in each case, and/or
wherein at least one filter channel structure (222a, 222b) and at least one throttle channel structure (22b, 23b) each comprise an angular cross-section and at least one side of the angular filter channel structure (222a, 222b) is smaller than or equal to a shortest side of the angular throttle channel structure (22b, 23b), and/or
wherein at least one filter channel structure (222a, 222b) and at least one throttle channel structure (22b, 23b) each comprise a circular cross-section, the cross-section of the round filter channel structure (222a, 222b) being smaller than the cross-section of the circular throttle channel structure.

11. The expansion valve (100) according to claim 10,
wherein a collector channel structure (230) is arranged between the filter channel structures (222a, 222b) and the throttle channel structures (22b, 23b) which collector channel structure is respectively fluidly coupled to the filter channel structures (222a, 222b) and at least one throttle channel structure (22b) so that a fluid flowing in through at least one filter channel structure (222a, 222b) is collected in the collector channel structure (230) and is passed on to at least one throttle channel structure (22b).

12. The expansion valve (100) according to claim 11,
wherein the throttle channel structure (26) with the largest cross-section of all throttle channel structures (21b, 22b, 23b, 24b, 25b, 26b) is connected and fluidly coupled to the filter channel structures (222a bis 222g), said throttle channel structure (26b) being arranged upstream of the filter channel structures (222a bis 222g) in the fluid flow direction, and/or

wherein the expansion valve (100) can be brought into a plurality of positions, wherein in a free-flow switch position (386) the throttle channel structure (26b, 27b) with the largest cross-section of all throttle channel structures (22b, 23b, 24b, 25b, 26b, 27b) forms the fluid flow path through the expansion valve (100), and wherein in a blocking switch position (380), a fluid flow path is blocked.

13. The expansion valve (100) according to claim 12,
wherein the expansion valve (100) is configured to provide a defrost function by the expansion valve (100) first being in the blocking switch position (380), wherein the pressurized fluid heats, and the expansion valve (100) is subsequently brought into the free-flow switch position (386), wherein an evaporator (100) fluidly coupled to the expansion valve is flooded with the heated fluid.

14. The expansion valve (100) according to any one of the preceding claims,
wherein the expansion valve (100) can be brought into a blocking switch position (380) and into a plurality of flow switch positions (381 bis 386) by means of the relative movement between the first and the second valve element (10, 20), wherein the expansion valve (100) in each flow switch position (381 bis 386) provides a fluid flow path comprising different flow resistance between the fluid inlet (101) and the fluid outlet (102), respectively, and wherein in the blocking switch position (380), a fluid flow path is blocked between the fluid inlet (101) and the fluid outlet (102), and
wherein the individual flow switch positions (381 bis 386), starting from the blocking switch position (380), are arranged in ascending or descending order relative to their respective flow resistance so that in the event of a relative movement of the two valve elements (10, 20) from one switch position (381) to the respective next switch position (382), the respective flow resistance increases or decreases, and/or
wherein the individual flow switch positions (381 bis 386) are arranged, starting from the blocking switch position (380), in an order with respect to their respective flow resistance, this order depending on how often the respective switch position (380 bis 386) is used in operation.

15. A refrigerator and/or freezer comprising an expansion valve (100) according to any one of the preceding claims.


**Revendications**

1. Soupape de détente (100) pour réduire une pression d'un fluide circulant à travers la soupape de détente (100) le long d'un trajet de circulation de fluide (110, 111, 112, 121, 122, 123), la soupape de détente (100) présentant:

au moins une entrée de fluide (101) et au moins une sortie de fluide (102),
un premier élément de soupape (10) avec au moins une première structure de canal (11),
un deuxième élément de soupape (20) avec au moins une deuxième structure de canal (22a, 22b) et une troisième structure de canal (23a, 23b),
dans laquelle le premier élément de soupape (10) et le deuxième élément de soupape (20) sont déplaçables l'un par rapport à l'autre,
dans laquelle, dans une première position des éléments de soupape (10, 20), la première structure de canal (11) et la deuxième structure de canal (22a, 22b) sont orientées l'une par rapport à l'autre et constituent un premier trajet de circulation de fluide avec une première résistance à la circulation entre l'entrée de fluide (101) et la sortie de fluide (102),
dans laquelle, dans une deuxième position des éléments de soupape (10, 20), la première structure de canal (11) et la troisième structure de canal (23a, 23b) sont orientées l'une par rapport à l'autre et constituent un deuxième trajet de circulation de fluide avec une deuxième résistance à la circulation différente de la première résistance à la circulation entre l'entrée de fluide (101) et la sortie de fluide (102), et
dans laquelle la deuxième structure de canal (22a, 22b) présente une première section transversale de circulation variable ou constante, et dans laquelle la troisième structure de canal (23a, 23b) présente une deuxième section transversale de circulation variable ou constante différente de la première section transversale de circulation, où les différentes sections transversales de circulation opposent au fluide des résistances à la circulation différentes et étranglent la circulation du fluide selon un degré différent.

2. Soupape de détente selon la revendication 1,
dans laquelle la quantité d'étranglement de la circulation du fluide est déterminée par la résistance à la circulation des structures de canal individuelles.

**3.** Soupape de détente (100) selon l'une des revendications précédentes,
dans laquelle la première structure de canal (11) dans le premier élément de soupape (10) s'étend au moins par segments dans la direction axiale (33), et/ou
dans laquelle la deuxième et la troisième structure de canal (22a, 22b; 23a, 23b) dans le deuxième élément de soupape (20) s'étendent au moins par segments (22b, 23b) dans la direction radiale (34) et/ou dans la direction axiale (33), et
dans laquelle les segments radiaux (22b, 23b) contribuent pour la part principale à l'étranglement du fluide circulant à travers les structures de canal.

**4.** Soupape de détente (100) selon l'une des revendications précédentes,
dans laquelle le premier élément de soupape (10) présente une surface (12) faisant face au deuxième élément de soupape (20) et le deuxième élément de soupape (20) est déplaçable par rapport au premier élément de soupape (10) dans un plan ($E_1$) parallèle à cette surface (12).

**5.** Soupape de détente (100) selon l'une des revendications précédentes,
dans laquelle le deuxième élément de soupape (20) est réalisé en deux parties (20a, 20b), dans laquelle une première partie (20b) du deuxième élément de soupape présente au moins un segment (22b, 23b) des deuxième et troisième structures de canal (22a, 22b; 23a, 23b) ainsi que la sortie de fluide (102), où ces segments (22b, 23b) des deuxième et troisième structures de canal (22a, 22b; 23a, 23b) sont connectés, chacun, dans la première partie (20b) du deuxième élément de soupape à la sortie de fluide (102), et/ou
dans laquelle le premier élément de soupape (10) est disposé de manière rotative sur le deuxième élément de soupape (20), et dans laquelle l'une respective des deuxième et troisième structures de canal (22a, 22b, 23a, 23b) est dégagée au moyen d'un positionnement en rotation de la première structure de canal (11) en orientant la première structure de canal (11) dans différentes positions des éléments de soupape (10, 20) de manière sélective vers l'une des deuxième et troisième structures de canal (22a, 22b, 23a, 23b) réalisées dans le deuxième élément de soupape (20), et/ou
dans laquelle la deuxième et la troisième structure de canal (22a, 22b, 23a, 23b) débouchent, chacune, dans une structure de canal périphérique (55) qui relie les deuxième et troisième structures de canal (22a, 22b, 23a, 23b) l'une à l'autre et constitue une alimentation commune vers la sortie de fluide (102).

**6.** Soupape de détente selon la revendication 5,
dans laquelle au moins un segment (22a, 23a) des deuxième et troisième structures de canal (22a, 22b; 23a, 23b) est disposé dans la deuxième partie (20a) du deuxième élément de soupape en deux parties (20), et dans laquelle la première partie (20b) du deuxième élément de soupape (20) en deux parties présente la sortie de fluide (102) et au moins un autre segment (22b, 23b) des deuxième et troisième structures de canal (22a, 22b, 23a, 23b) est réalisé dans la première partie (20b) du deuxième élément de soupape en deux parties (20) et connecté respectivement, au moyen de la structure de canal périphérique (55), à la sortie de fluide (102), ou
dans laquelle la première partie (20b) du deuxième élément de soupape en deux parties (20) présente la sortie de fluide (102), et les deuxième et troisième structures de canal (22a, 22b, 23a, 23b) sont réalisées dans la deuxième partie (20a) du deuxième élément de soupape en deux parties (20) et connectées respectivement, au moyen de la structure de canal périphérique (55), à la sortie de fluide (102).

**7.** Soupape de détente (100) selon l'une des revendications 1 à 4,
dans laquelle la soupape de détente (100) présente un couvercle (30), dans laquelle le couvercle (30) est connecté de manière immobile au premier élément de soupape (10) et le deuxième élément de soupape (20) est disposé à l'intérieur du couvercle (30) de manière déplaçable par rapport au premier élément de soupape (10), et
dans laquelle la première structure de canal (11) constitue la sortie de fluide (102) de la soupape de détente (100), et dans laquelle l'une respective des deuxième et troisième structures de canal (22a, 22b, 23a, 23b) est dégagée au moyen d'un positionnement en rotation du deuxième élément de soupape (20) sur le premier élément de soupape (10) en orientant, dans la première et la deuxième position des éléments de soupape (10, 20), l'une respective des deuxième et troisième structures de canal (22a, 22b, 23a, 23b) du deuxième élément de soupape (20) de manière sélective vers la première structure de canal (11) du premier élément de soupape (10).

**8.** Soupape de détente (100) selon l'une des revendications précédentes,
dans laquelle, dans la première et la deuxième position des éléments de soupape (10, 20), chaque fois exactement une seule des deuxième et troisième structures de canal (22a, 22b; 23a, 23b) du deuxième élément de soupape (20) est orientée par rapport à la première structure de canal du premier élément de soupape (10, 20) pour former un seul trajet de circulation de fluide entre l'entrée de fluide (101) et la sortie de fluide (102).

**9.** Soupape de détente (100) selon l'une des revendications 1 à 7,
dans laquelle la deuxième structure de canal (22a, 22b) et la troisième structure de canal (23a, 23b) sont connectées l'une à l'autre au moins par segments (22b, 23b) dans le deuxième élément de soupape (20), dans laquelle, dans la deuxième position des éléments de soupape (10, 20), le deuxième trajet de circulation de fluide se compose de la deuxième et de la troisième structure de canal connectée à cette dernière (22b, 23b), et le deuxième trajet de circulation de fluide présente une résistance à la circulation globale qui se compose de la résistance à la circulation de la deuxième structure de canal (22b) et de la résistance à la circulation de la troisième structure de canal (23b) connectée à cette dernière, ou
dans laquelle le premier élément de soupape (10) présente au moins une quatrième structure de canal (14), et dans laquelle, dans la première position des éléments de soupape (10, 20), en outre la troisième structure de canal (23a, 23b) et la quatrième structure de canal (14) sont orientées l'une vers l'autre et constituent un troisième trajet de circulation de fluide avec une troisième résistance à la circulation entre l'entrée de fluide (101) et la sortie de fluide (102).

**10.** Soupape de détente (100) selon l'une des revendications précédentes,
dans laquelle la soupape de détente (100) présente un élément de retenue (200) destiné à retenir une particule (210) se trouvant dans le fluide, et
dans laquelle l'élément de retenue (200) présente au moins deux structures de canal à filtre (222a, 222b) qui sont couplées, chacune, en fluide à au moins une structure de canal d'étranglement (22b), et
dans laquelle la section transversale des structures de canal à filtre (222a, 222b) est inférieure ou égale à la section transversale de la structure de canal d'étranglement (22b) couplée en fluide respectivement à ces dernières, et/ou
dans laquelle au moins une structure de canal à filtre (222a, 222b) et au moins une structure de canal d'étranglement (22b, 23b) présentent, chacune, une section transversale angulaire et au moins un côté de la structure de canal à filtre angulaire (222a, 222b) est inférieure ou égale à un côté le plus court de la structure de canal d'étranglement angulaire (22b, 23b), et/ou
dans laquelle au moins une structure de canal à filtre (222a, 222b) et au moins une structure de canal d'étranglement (22b, 23b) présentent, chacune, une section transversale ronde, où la section transversale de la structure de canal à filtre ronde (222a, 222b) est inférieure à la section transversale de la structure de canal d'étranglement ronde.

**11.** Soupape de détente (100) selon la revendication 10,
dans laquelle est disposée, entre les structures de canal à filtre (222a, 222b) et les structures de canal d'étranglement (22b, 23b), une structure de canal de collecte (230) qui est respectivement couplée en fluide aux structures de canal à filtre (222a, 222b) et à au moins une structure de canal d'étranglement (22b), de sorte qu'un fluide entrant à travers au moins une structure de canal à filtre (222a, 222b) soit collecté dans la structure de canal de collecte (230) et soit transmis vers cette au moins une structure de canal d'étranglement (22b).

**12.** Soupape de détente (100) selon la revendication 11,
dans laquelle la structure de canal d'étranglement (26) à la section transversale la plus grande de toutes les structures de canal d'étranglement (21b, 22b, 23b, 24b, 25b, 26b) est connectée et couplée en fluide aux structures de canal à filtre (222a à 222g), dans laquelle cette une structure de canal d'étranglement (26b) est disposée devant les structures de canal à filtre (222a à 222g) dans la direction de circulation de fluide, et/ou
dans laquelle la soupape de détente (100) peut être amenée dans plusieurs positions, dans laquelle, dans une position de commutation de circulation libre (386), la structure de canal d'étranglement (26b, 27b) à la section transversale la plus grande de toutes les structures de canal d'étranglement (22b, 23b, 24b, 25b, 26b, 27b) constitue le trajet de circulation de fluide à travers la soupape de détente (100) et, dans une position de commutation de blocage (380), bloque un trajet de circulation de fluide.

**13.** Soupape de détente (100) selon la revendication 12,
dans laquelle la soupape de détente (100) est conçue pour mettre à disposition une fonction de dégivrage en ce que la soupape de détente (100) se trouve tout d'abord dans la position de commutation de blocage (380), où le fluide sous pression est chauffé, et que la soupape de détente (100) est ensuite amenée dans la position de commutation de circulation libre (386), où un évaporateur couplé en fluide à la soupape de détente (100) est inondé par le fluide chauffé.

**14.** Soupape de détente (100) selon l'une des revendications précédentes,
dans laquelle la soupape de détente (100) peut être amenée, au moyen du mouvement relatif entre le premier et le deuxième élément de soupape (10, 20), dans une position de commutation de blocage (380) et dans plusieurs positions de commutation de circulation (381 à 386), dans laquelle la soupape de détente (100) met à disposition, dans chaque position de commutation de circulation (381 à 386), un trajet de circulation de fluide respectivement avec une résistance à la circulation différente entre l'entrée de fluide (101) et la sortie de fluide (102), et dans laquelle, dans la position de commutation de blocage (380), un trajet de circulation de fluide entre l'entrée de fluide (101) et la sortie de fluide (102) est bloqué, et

dans laquelle les positions de commutation de circulation individuelles (381 à 386), en partant de la position de commutation de blocage (380), sont disposées dans un ordre croissant ou décroissant par rapport à leur résistance à la circulation respective, de sorte que, lors d'un mouvement relatif des deux éléments de soupape (10, 20) d'une position de commutation (381) à la position de commutation suivante respective (382), la résistance à la circulation respective augmente ou diminue, et/ou

dans laquelle les positions de commutation de circulation individuelles (381 à 386), en partant de la position de commutation de blocage (380), sont disposées dans un ordre en ce qui concerne leur résistance à la circulation respective, où cet ordre est fonction de la fréquence selon laquelle la position de commutation respective (380 à 386) est requise en fonctionnement.

15. Réfrigérateur et/ou congélateur avec une soupape de détente (100) selon l'une des revendications précédentes.

Figur 1A

Figur 1B

Figur 1C

Figur 1D

Figur 2A

Figur 2B

## Figur 3A

Figur 3B

Figur 4A

Figur 4B

Figur 5A

Figur 5B

Figur 6A

Figur 6B

Figur 7

Figur 8

Figur 9

EP 3 551 948 B1

Figur 10

Figur 11

Figur 12

Figur 13

Figur 14

Figur 15

Figur 16

EP 3 551 948 B1

Figur 17

Figur 18

Figur 19A

Figur 19B

Figur 19C

Richtung 1    Richtung 2

41

20

21b'    21b

10

270    11    269

102

Figur 20A

Figur 20B

Figur 21A

Figur 21B

Figur 21C

Figur 21D

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011004109 A1
- DE 102010042265 A1
- DE 3108051 A1
- EP 3124837 A1